(19) Europäisches Patentamt
European Patent Office
Office européen des brevets

(11) **EP 4 529 303 A1**

(12) **EUROPEAN PATENT APPLICATION**
published in accordance with Art. 153(4) EPC

(43) Date of publication:
26.03.2025 Bulletin 2025/13

(21) Application number: 23823156.7

(22) Date of filing: 13.06.2023

(51) International Patent Classification (IPC):
*H04W 56/00* (2009.01)

(52) Cooperative Patent Classification (CPC):
H04W 4/80; H04W 56/00

(86) International application number:
PCT/CN2023/099999

(87) International publication number:
WO 2023/241588 (21.12.2023 Gazette 2023/51)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 15.06.2022 CN 202210681347

(71) Applicant: Huawei Technologies Co., Ltd.
Shenzhen, Guangdong 518129 (CN)

(72) Inventors:
• DU, Zhenguo
Shenzhen, Guangdong 518129 (CN)
• HE, Xiaoxiang
Shenzhen, Guangdong 518129 (CN)

(74) Representative: Thun, Clemens
Mitscherlich PartmbB
Patent- und Rechtsanwälte
Karlstraße 7
80333 München (DE)

(54) **BLUETOOTH TIME SYNCHRONIZATION METHOD, READABLE MEDIUM, AND ELECTRONIC DEVICE**

(57) This application relates to the field of communication technologies, and in particular, to a Bluetooth based time synchronization method, a readable medium, and an electronic device. Bluetooth based time synchronization including N time synchronization subprocesses that are sequentially performed is performed between a first electronic device and a second electronic device, where each time synchronization subprocess has one round trip time. In a process of performing the Bluetooth based time synchronization, the first electronic device obtains, based on the N round trip times of the N time synchronization subprocesses, M valid sub-time offsets corresponding to M time synchronization subprocesses, where N ≥ M. The foregoing M time synchronization subprocesses are M time synchronization subprocesses in the foregoing N time synchronization subprocesses. The first electronic device determines a comprehensive time offset between the first electronic device and the second electronic device based on the M valid sub-time offsets. Accuracy of the comprehensive time offset between the first electronic device and the second electronic device in a short-period Bluetooth based time synchronization process can be effectively improved by reducing a dispersion degree of the sub-time offsets used to calculate the comprehensive time offset.

FIG. 6

EP 4 529 303 A1

## Description

This application claims priority to Chinese Patent Application No. 202210681347.1, filed with the China National Intellectual Property Administration on June 15, 2022 and entitled "BLUETOOTH BASED TIME SYNCHRONIZATION METHOD, READABLE MEDIUM, AND ELECTRONIC DEVICE", which is incorporated herein by reference in its entirety.

## TECHNICAL FIELD

The present invention relates to the field of communication technologies, and in particular, to a Bluetooth based time synchronization method, a readable medium, and an electronic device.

## BACKGROUND

A distance is an important parameter that needs to be detected in different scenarios and control. For example, when one electronic device is used to search for another electronic device, a distance and an included angle between the two electronic devices are accurately measured by using an ultra-wideband (Ultra-wideband, UWB) technology, to notify a user of a specific distance and direction from the another electronic device to be searched for, so as to implement accurate search for the another electronic device. However, for a "Bluetooth + ultrasonic" joint distance measurement solution, before a distance is measured, Bluetooth based time synchronization between two electronic devices further needs to be performed, to determine a comprehensive time offset between the two electronic devices (that is, an offset value between clock times of the two electronic devices), so as to improve accuracy of measuring the distance between the two electronic devices.

## SUMMARY

To improve accuracy of a comprehensive time offset, this application provides a Bluetooth based time synchronization method. Bluetooth based time synchronization is performed between a first electronic device and a second electronic device, the Bluetooth based time synchronization includes N time synchronization subprocesses that are sequentially performed, and each time synchronization subprocess has one round trip time. In a process in which the first electronic device and the second electronic device perform the Bluetooth based time synchronization, the first electronic device obtains, based on the N round trip times of the N time synchronization subprocesses, M valid sub-time offsets corresponding to M time synchronization subprocesses, where $N \geq M$. It may be understood that the foregoing M time synchronization subprocesses are M time synchronization subprocesses in the foregoing N time synchronization subprocesses. The first electronic device determines a comprehensive time offset between the first electronic device and the second electronic device based on the M valid sub-time offsets.

In the foregoing Bluetooth based time synchronization method, in the process of performing the Bluetooth based time synchronization including the N time synchronization subprocesses that are sequentially performed, the M valid sub-time offsets corresponding to the M time synchronization subprocesses are obtained based on the round trip times of the time synchronization subprocesses, and a dispersion degree of the M valid sub-time offsets is low. It is easily found that, accuracy of the comprehensive time offset between the first electronic device and the second electronic device in a short-period Bluetooth based time synchronization process can be effectively improved by reducing the dispersion degree of the sub-time offsets used to calculate the comprehensive time offset. Further, when the Bluetooth based time synchronization method is applied to distance measurement, precision of distance measurement between the first electronic device and the second electronic device can be improved.

A first aspect of this application provides a Bluetooth based time synchronization method, applied to a first electronic device and a second electronic device. The Bluetooth based time synchronization method includes: A first electronic device performs Bluetooth based time synchronization with a second electronic device, where the Bluetooth based time synchronization includes N time synchronization subprocesses that are sequentially performed, and each time synchronization subprocess has one round trip time and one initial sub-time offset. In a process of performing the Bluetooth based time synchronization, the first electronic device obtains, based on the N round trip times and the N initial sub-time offsets of the N time synchronization subprocesses, M valid sub-time offsets corresponding to M time synchronization subprocesses, where $M \leq N$, and the M time synchronization subprocesses are M time synchronization subprocesses in the N time synchronization subprocesses. The first electronic device obtains a time offset between the first electronic device and the second electronic device based on the M valid sub-time offsets.

The first electronic device may be any portable and mobile electronic device such as a mobile phone, a watch, a tablet computer, a notebook computer, a laptop computer, a wearable device, a head mounted display, a portable game console, a portable music player, or a reader device. The second electronic device may be any portable and mobile electronic device such as an electronic tag (Tag) device, a mobile phone, a watch, a tablet computer, a notebook computer, a laptop computer, a wearable device, a head mounted display, a portable game console, a portable music player, a reader device, or a stylus. For ease of description and understanding, the following uses an example in which the first electronic device is a mobile phone and the second electronic device is a tag device.

A Bluetooth based time synchronization process between the mobile phone and the tag device includes a plurality of time synchronization subprocesses. The Bluetooth based time synchronization process refers to an entire transmission process of a Bluetooth signal between the mobile phone and the tag device in an entire Bluetooth based time synchronization solution. The time synchronization subprocess refers to a transmission period of the Bluetooth signal between the mobile phone and the tag device. The time synchronization subprocess is a constitutional unit of the Bluetooth based time synchronization process. It may be understood that, in the Bluetooth based time synchronization method, the mobile phone may calculate an initial sub-time offset corresponding to each time synchronization subprocess, then obtain a comprehensive time offset between the mobile phone and the tag device based on the initial sub-time offsets corresponding to all the time synchronization subprocesses.

The initial sub-time offset refers to an offset value between a clock time of the mobile phone and a clock time of the tag device that is obtained by the mobile phone based on the time synchronization subprocess in the Bluetooth based time synchronization process. The round trip time refers to round trip duration of a group of exchanged messages in the time synchronization process.

The valid sub-time offset refers to a sub-time offset obtained by processing the initial sub-time offset by the mobile phone. It is easily understood that the valid sub-time offset is the sub-time offset obtained through processing by the mobile phone. Therefore, the valid sub-time offset is closer to a comprehensive time offset of a long-period Bluetooth based time synchronization process than the initial sub-time offset. The comprehensive time offset refers to an offset value between a clock value of the first electronic device and a clock value of the second electronic device that is determined based on the entire Bluetooth based time synchronization process.

In other words, in this embodiment of this application, a Bluetooth based time synchronization process including N time synchronization subprocesses is performed between the mobile phone and the tag device. In a process in which the N time synchronization subprocesses are performed between the mobile phone and the tag device, the mobile phone may determine, based on a Bluetooth signal corresponding to each time synchronization subprocess, an initial sub-time offset corresponding to each time synchronization subprocess. The mobile phone determines whether each time synchronization subprocess meets a preset adjustment condition, and performs, based on a determining result, different processing on the initial sub-time offset corresponding to each time synchronization subprocess. For example, when the determining result is that the time synchronization subprocess meets the preset adjustment condition, the mobile phone adjusts (for example, corrects and/or deletes) the initial sub-time offset corresponding to the time synchronization subprocess. For another example, when the determining result is that the time synchronization subprocess does not meet the preset adjustment condition, the mobile phone reserves the initial sub-time offset corresponding to the time synchronization subprocess. Finally, the mobile phone can obtain, based on N initial sub-time offsets corresponding to the N time synchronization subprocesses, M valid sub-time offsets corresponding to M time synchronization subprocesses, where N $\geq$ M, and the N time synchronization subprocesses include the M time synchronization subprocesses. The mobile phone determines a comprehensive time offset between the mobile phone and the tag device based on the M valid sub-time offsets corresponding to the M time synchronization subprocesses.

In some possible implementations, the Bluetooth based time synchronization includes the N time synchronization subprocesses that are sequentially performed. Each time synchronization subprocess corresponds to a start time synchronization frame (which may be understood as a $1^{st}$ transmission signal in the time synchronization subprocess). The start time synchronization frames of the N time synchronization subprocesses are sequentially performed. For example, in the Bluetooth based time synchronization, in the N time synchronization subprocesses, after a former time synchronization subprocess is completed, a latter time synchronization subprocess is performed. For another example, in the N time synchronization subprocesses, a former time synchronization subprocess has been performed, but a latter time synchronization subprocess has been performed before the former time synchronization subprocess is completed. This is not specifically limited in this application.

In the foregoing Bluetooth based time synchronization method, in the process of performing the Bluetooth based time synchronization including the N time synchronization subprocesses that are sequentially performed, the M valid sub-time offsets corresponding to the M time synchronization subprocesses are obtained based on the round trip times of the time synchronization subprocesses, and a dispersion degree of the M valid sub-time offsets is low. It is easily found that, accuracy of the comprehensive time offset between the first electronic device and the second electronic device in a short-period Bluetooth based time synchronization process can be effectively improved by reducing the dispersion degree of the sub-time offsets used to calculate the comprehensive time offset.

In some possible implementations of the first aspect, in the Bluetooth based time synchronization method, a first time synchronization subprocess is one of the N time synchronization subprocesses, and the first time synchronization subprocess includes: receiving, by the first electronic device, a time synchronization frame sent by the second electronic device, where the time synchronization frame is carried by an indication sent by a Bluetooth module of the second electronic device, wherein the indication could be an indication frame; and sending, by the first electronic device, an acknowledgment message in response to the time synchronization frame to the second electronic device, where the acknowledgment message is carried by a confirm sent by a Bluetooth module of the first electronic device, wherein the confirm could be a confirm frame, and where $T_{LPi} = T_{Ei} - T_{TXi}$, where $T_{LPi}$ is a round trip time of the first time synchronization subprocess, $T_{Ei}$ is an acknowledgment receiving moment at which the second electronic device receives the acknowledgment message, and $T_{TXi}$ is a time synchronization sending moment at which the second electronic device sends the time synchronization frame.

The time synchronization frame refers to a Bluetooth signal used to implement time synchronization between the two electronic devices. The acknowledgment message refers to a spontaneous message of the electronic device in response to the time synchronization frame at a Bluetooth protocol layer, and the spontaneous message is not a message actively sent by an upper-layer application of the electronic device. For example, the acknowledgment message is a spontaneous message of the tag device in response to the time synchronization frame at a Bluetooth protocol layer, and the spontaneous message is not a message actively sent by an upper-layer application of the tag device.

To be specific, in this embodiment of this application, in one of the time synchronization subprocesses, the tag device sends a time synchronization frame to the mobile phone, where the time synchronization frame is carried by an indication sent by a Bluetooth module of the tag device. After receiving the time synchronization frame, the mobile phone feeds back an acknowledgment message in response to the time synchronization frame to the tag device, where the acknowledgment message is carried by a confirm sent by a Bluetooth module of the mobile phone. The mobile phone does not need to send a time synchronization frame or a response frame to the tag device. The round trip time may be represented as duration between an acknowledgment receiving moment at which the tag device receives the acknowledgment message and a time synchronization sending moment at which the tag device sends the time synchronization frame.

The foregoing Bluetooth based time synchronization method is unidirectional time synchronization, has shorter time synchronization duration, is more conducive to real-time application, is time-saving, and improves practicability. In addition, the initial sub-time offset is adjusted, so that abnormal sub-time offsets in the time synchronization subprocesses are reduced, thereby improving accuracy and stability of the comprehensive time offset. When the comprehensive time offset is used for distance calculation, distance measurement precision can be improved.

In some possible implementations of the first aspect, in the Bluetooth based time synchronization method, the time synchronization frame includes $T_{TXi}$ and $T_{Ei-1}$, $T_{TXi}$ is the time synchronization sending moment at which the second electronic device sends the time synchronization frame, and $T_{Ei-1}$ is an acknowledgment receiving moment at which the second electronic device receives a previous acknowledgment message of the acknowledgment message.

To be specific, in this embodiment of this application, a time synchronization frame corresponding to an $i^{th}$ time synchronization subprocess includes a time synchronization sending moment $T_{TXi}$ of the time synchronization frame in the $i^{th}$ time synchronization subprocess, and an acknowledgment receiving moment $T_{Ei-1}$ at which the tag device receives a previous acknowledgment message. $T_{Ei-1}$ may be an acknowledgment receiving moment of an acknowledgment message in an $(i-1)^{th}$ time synchronization subprocess.

However, it should be noted that, for a $1^{st}$ time synchronization subprocess, there is no acknowledgment receiving moment of a previous acknowledgment message. Therefore, a time synchronization frame in the $1^{st}$ time synchronization subprocess includes a time synchronization sending moment $T_{TX1}$ of the time synchronization frame in the $1^{st}$ time synchronization subprocess and any value. For example, the value may be 0. For a last time synchronization subprocess, an acknowledgment receiving moment of an acknowledgment message in the subprocess may be sent to the mobile phone by using a subsequent independent frame. Alternatively, the last time synchronization subprocess is deleted. To be specific, in Bluetooth based time synchronization including N+1 time synchronization subprocesses, N time synchronization subprocesses can be actually used.

In some possible implementations of the first aspect, in the Bluetooth based time synchronization method, the initial sub-time offset includes any one of the following: $\Delta_i = T_{RXi} - T_{TXi}$, or $\Delta_i = T_{TXi} - T_{RXi}$, where $\Delta_i$ is the initial sub-time offset, $T_{RXi}$ is a time synchronization receiving moment at which the first electronic device receives the time synchronization frame, and $T_{TXi}$ is the time synchronization sending moment at which the second electronic device sends the time synchronization frame; or $\Delta_i = T_{RXi} - T_{Ei}$, or $\Delta_i = T_{Ei} - T_{RXi}$, where $\Delta_i$ is the initial sub-time offset, $T_{RXi}$ is a time synchronization receiving moment at which the first electronic device receives the time synchronization frame, and $T_{Ei}$ is the acknowledgment receiving moment at which the second electronic device receives the acknowledgment message.

It may be understood that the initial sub-time offset in this application may be calculated in any one of the foregoing four calculation manners. This is not specifically limited in this application.

In some possible implementations of the first aspect, in the Bluetooth based time synchronization method, a first time synchronization subprocess is one of N time synchronization subprocesses, and the first time synchronization subprocess includes: sending, by the first electronic device, a time synchronization frame to the second electronic device, where the time synchronization frame is carried by an indication sent by a Bluetooth module of the first electronic device, receiving, by the first electronic device, an acknowledgment message that is sent by the second electronic device in response to the time synchronization frame, where the acknowledgment message is carried by a confirm sent by a Bluetooth module of the second electronic device; and receiving, by the first electronic device, a response frame sent by the second electronic device, where $T_{LPi} = T_{Ei} - T_{TXi}$, $T_{LPi}$ is a round trip time of the first time synchronization subprocess, $T_{Ei}$ is an acknowledgment receiving moment at which the first electronic device receives the acknowledgment message, and $T_{TXi}$ is a time synchronization sending moment at which the first electronic device sends the time synchronization frame.

The acknowledgment message may be a spontaneous message of the mobile phone in response to the time synchronization frame at a Bluetooth protocol layer, and the spontaneous message is not a message actively sent by an upper-layer application of the mobile phone. The response frame refers to a Bluetooth signal used to implement time synchronization between the two electronic devices, and occurs after the time synchronization frame.

To be specific, in this embodiment of this application, in one of the time synchronization subprocesses, the mobile phone sends a time synchronization frame to the tag device, where the time synchronization frame is carried by an indication sent by a Bluetooth module of the mobile phone. After receiving the time synchronization frame, the tag device feeds back an acknowledgment message in response to the time synchronization frame to the mobile phone, where the acknowledgment message is carried by a confirm sent by a Bluetooth module of the tag device. The tag device sends a response frame to the mobile phone. The round trip time may be represented as duration between an acknowledgment receiving moment at which the mobile phone receives the acknowledgment message and a time synchronization sending moment at which the mobile phone sends the time synchronization frame.

The foregoing Bluetooth based time synchronization method is unidirectional time synchronization, has shorter time synchronization duration, is more conducive to real-time application, is time-saving, and improves practicability. In addition, the initial sub-time offset is adjusted, so that abnormal sub-time offsets in the time synchronization subprocesses are reduced, thereby improving accuracy and stability of the comprehensive time offset. When the comprehensive time offset is used for distance calculation, distance measurement precision can be improved.

In some possible implementations of the first aspect, the response frame includes $T_{RXi}$, and $T_{RXi}$ is a time synchronization receiving moment at which the second electronic device receives the time synchronization frame.

To be specific, in this embodiment of this application, a time synchronization frame corresponding to an $i^{th}$ time synchronization subprocess includes a time synchronization receiving moment $T_{RXi}$ of the time synchronization frame in the $i^{th}$ time synchronization subprocess.

In some possible implementations of the first aspect, the initial sub-time offset includes any one of the following: $\Delta_i = T_{TXi} - T_{RXi}$, or $\Delta_i = T_{RXi} - T_{TXi}$, where $\Delta_i$ is the initial sub-time offset, $T_{TXi}$ is the time synchronization sending moment at which the first electronic device sends the time synchronization frame, and $T_{RXi}$ is the time synchronization receiving moment at which the second electronic device receives the time synchronization frame; or $\Delta_i = T_{Ei} - T_{RXi}$, or $\Delta_i = T_{RXi} - T_{Ei}$, where $\Delta_i$ is the initial sub-time offset, $T_{Ei}$ is the acknowledgment receiving moment at which the first electronic device receives the acknowledgment message, and $T_{RXi}$ is the time synchronization receiving moment at which the second electronic device receives the time synchronization frame.

It may be understood that the initial sub-time offset in this application may be calculated in any one of the foregoing four calculation manners. This is not specifically limited in this application.

In some possible implementations of the first aspect, the response frame includes $T_{RXi,T}$ and $T_{TXi,T}$, $T_{RXi,T}$ is a time synchronization receiving moment at which the second electronic device receives the time synchronization frame, and $T_{TXi,T}$ is a response sending moment at which the second electronic device sends the response frame.

To be specific, in this embodiment of this application, a response frame corresponding to an $i^{th}$ time synchronization subprocess includes a time synchronization receiving moment $T_{RXi,T}$ of a time synchronization frame in the $i^{th}$ time synchronization subprocess, and a response sending moment $T_{TXi,T}$ of the response frame.

In the foregoing Bluetooth based time synchronization method, the initial sub-time offset is adjusted, so that abnormal sub-time offsets in the time synchronization subprocesses are reduced, thereby improving accuracy and stability of the comprehensive time offset. When the comprehensive time offset is used for distance calculation, distance measurement precision can be improved.

In some possible implementations of the first aspect, the initial sub-time offset includes any one of the following: $\Delta_i = T_{TXi,P} - T_{RXi,T}$, or $\Delta_i = T_{RXi,T} - T_{TXi,P}$, where $\Delta_i$ is the initial sub-time offset, $T_{TXi,P}$ is a time synchronization sending moment at which the first electronic device sends the time synchronization frame, and $T_{RXi,T}$ is the time synchronization receiving moment at which the second electronic device receives the time synchronization frame; $\Delta_i = T_{Ei} - T_{RXi,T}$, or $\Delta_i = T_{RXi,T} - T_{Ei}$, where $\Delta_i$ is the initial sub-time offset, $T_{Ei}$ is the acknowledgment receiving moment at which the first electronic device receives the acknowledgment message, and $T_{RXi,T}$ is the time synchronization receiving moment at which the second electronic device receives the time synchronization frame; $\Delta_i = (T_{TXi,P} - T_{RXi,T} + T_{RXi,P} - T_{TXi,T})/2$, or $\Delta_i = (T_{RXi,T} - T_{TXi,P} + T_{TXi,T} - T_{RXi,P})/2$, where $\Delta_i$ is the initial sub-time offset, $T_{TXi,P}$ is a time synchronization sending moment at which the first electronic device sends the time synchronization frame, $T_{RXi,T}$ is the time synchronization receiving moment at which the second electronic device receives the time synchronization frame, $T_{RXi,P}$ is a response receiving moment at which the first electronic device receives the response frame, and $T_{TXi,T}$ is the response sending moment at which the second electronic device sends the response frame, or $\Delta_i = T_{RXi,P} - T_{TXi,T}$, or $\Delta_i = T_{TXi,T} - T_{RXi,P}$ where $\Delta_i$ is the initial sub-time offset, $T_{RXi,P}$ is a response receiving moment at which the first electronic device receives the response frame, and $T_{TXi,T}$ is the response sending moment at which the second electronic device sends the response frame.

It may be understood that the initial sub-time offset in this application may be calculated in any one of the foregoing eight calculation manners. This is not specifically limited in this application.

In some possible implementations of the first aspect, a first time synchronization subprocess is one of the N time synchronization subprocesses, and the first time synchronization subprocess includes: receiving, by the first electronic device, a time synchronization frame sent by the second electronic device, where the time synchronization frame is carried by an indication sent by a Bluetooth module of the second electronic device; sending, by the first electronic device, an acknowledgment message in response to the time synchronization frame to the second electronic device, where the acknowledgment message is carried by a confirm sent by a Bluetooth module of the first electronic device; and sending, by the first electronic device, a response frame to the second electronic device, where $T_{LPi} = T_{Ei} - T_{TXi,T}$, where $T_{LPi}$ is a round trip time of the first time synchronization subprocess, $T_{Ei}$ is an acknowledgment receiving moment at which the second electronic device receives the acknowledgment message, and $T_{TXi,T}$ is a time synchronization sending moment at which the second electronic device sends the time synchronization frame.

To be specific, in this embodiment of this application, in one of the time synchronization subprocesses, the tag device sends a time synchronization frame to the mobile phone, where the time synchronization frame is carried by an indication sent by a Bluetooth module of the tag device. After receiving the time synchronization frame, the mobile phone feeds back an acknowledgment message in response to the time synchronization frame to the tag device, where the acknowledgment message is carried by a confirm sent by a Bluetooth module of the mobile phone. The mobile phone sends a response frame to the tag device. The round trip time may be represented as duration between an acknowledgment receiving moment at which the tag device receives the acknowledgment message and a time synchronization sending moment at which the tag device sends the time synchronization frame.

In the foregoing Bluetooth based time synchronization method, the initial sub-time offset is adjusted, so that abnormal sub-time offsets in the time synchronization subprocesses are reduced, thereby improving accuracy and stability of the comprehensive time offset. When the comprehensive time offset is used for distance calculation, distance measurement precision can be improved.

In some possible implementations of the first aspect, the time synchronization frame includes $T_{E(i-1)}$, $T_{RX(i-1),T}$, and $T_{TXi,T}$, $T_{E(i-1)}$ is an acknowledgment receiving moment at which the second electronic device receives a previous acknowledgment message of the acknowledgment message, $T_{RX(i-1),T}$ is a response receiving moment at which the second electronic device receives a previous response frame of the response frame, and $T_{TXi,T}$ is the moment at which the second electronic device sends the time synchronization frame.

To be specific, in this embodiment of this application, a time synchronization frame corresponding to an $i^{th}$ time synchronization subprocess includes an acknowledgment receiving moment $T_{Ei-1}$ at which the tag device receives a previous acknowledgment message, a response receiving moment $T_{RX(i-1),T}$ at which the tag device receives a previous response frame, and a time synchronization sending moment $T_{TXi,T}$ of the time synchronization frame in the $i^{th}$ time synchronization subprocess.

However, it should be noted that, for a 1st time synchronization subprocess, there is no acknowledgment receiving moment of a previous acknowledgment message and no response receiving moment of a previous response frame. Therefore, a time synchronization frame in the 1st time synchronization subprocess includes a time synchronization sending moment $T_{TX1}$ of the time synchronization frame in the 1st time synchronization subprocess and any two values. For example, the two values may both be 0. For a last time synchronization subprocess, an acknowledgment receiving moment of an acknowledgment message and a response receiving moment of a response frame in the subprocess may be sent to the mobile phone by using subsequent independent frames. Alternatively, the last time synchronization subprocess is deleted. To be specific, in Bluetooth based time synchronization including N+1 time synchronization subprocesses, N time synchronization subprocesses can be actually used.

In some possible implementations of the first aspect, the initial sub-time offset includes any one of the following: $\Delta_i = T_{RXi,P} - T_{TXi,T}$, or $\Delta_i = T_{TXi,T} - T_{RXi,P}$, where $\Delta_i$ is the initial sub-time offset, $T_{RXi,P}$ is a time synchronization receiving moment at which the first electronic device receives the time synchronization frame, and $T_{TXi,T}$ is the time synchronization sending moment at which the second electronic device sends the time synchronization frame; $\Delta_i = T_{RXi,P} - T_{Ei}$, or $\Delta_i = T_{Ei} - T_{RXi,P}$, where $\Delta_i$ is the initial sub-time offset, $T_{RXi,P}$ is a time synchronization receiving moment at which the first electronic device receives the time synchronization frame, and $T_{Ei}$ is the acknowledgment receiving moment at which the second electronic device receives the acknowledgment message; $\Delta_i = (T_{RXi,P} - T_{TXi,T} + T_{TXi,T} - T_{RXi,T})/2$, or $\Delta_i = (T_{TXi,T} - T_{RXi,P} + T_{RXi,T} - T_{TXi,P})/2$, where $\Delta_i$ is the initial sub-time offset, $T_{RXi,P}$ is a time synchronization receiving moment at which the first electronic device receives the time synchronization frame, $T_{TXi,T}$ is the time synchronization sending moment at which the second electronic device sends the time synchronization frame, $T_{TXi,P}$ is a response sending moment at which the first electronic device sends the response frame, and $T_{RXi,T}$ is a response receiving moment at which the second electronic device receives the response frame; or $\Delta_i = T_{TXi,P} - T_{RXi,T}$, or $\Delta_i = T_{RXi,T} - T_{TXi,P}$ where $\Delta_i$ is the initial sub-time offset, $T_{TXi,P}$ is a response sending moment at which the first electronic device sends the response frame, and $T_{RXi,T}$ is a response receiving moment at which the second electronic device receives the response frame.

It may be understood that the initial sub-time offset in this application may be calculated in any one of the foregoing eight calculation manners. This is not specifically limited in this application.

In some possible implementations of the first aspect, the time synchronization frame further includes a sequence number, where the sequence number indicates a ranking of the time synchronization frame in the N time synchronization subprocesses; and/or the time synchronization frame further includes a Bluetooth interval $T_0$.

The sequence number identifies a subprocess number index of the time synchronization subprocess. For example, a SEQ of the 1st time synchronization subprocess is equal to 1, a SEQ of a 2nd time synchronization subprocess is equal to 2, and so on. The electronic device may determine, based on the sequence number, a specific time synchronization subprocess to which the time synchronization frame corresponds.

In some possible implementations of the first aspect, the response frame further includes a sequence number, where the sequence number indicates a ranking of the response frame in the N time synchronization subprocesses; and/or the response frame further includes a Bluetooth interval $T_0$.

The sequence number identifies a subprocess number index of the time synchronization subprocess. For example, a SEQ of the 1st time synchronization subprocess is equal to 1, a SEQ of a 2nd time synchronization subprocess is equal to 2, and so on. The electronic device may determine, based on the sequence number, a specific time synchronization subprocess to which the response frame corresponds.

In some possible implementations of the first aspect, in the Bluetooth based time synchronization method, that the first electronic device obtains, based on the N round trip times, M valid sub-time offsets corresponding to M time synchronization subprocesses includes: The first electronic device performs the following operation on each of the N round trip times: determining, by the first electronic device, whether a first round trip time meets a preset condition; and when the first round trip time meets the preset condition, using an initial sub-time offset corresponding to the first round trip time as a valid sub-time offset; or when the first round trip time does not meet the preset condition, deleting an initial sub-time offset corresponding to the first round trip time, where the first round trip time is a round trip time of the first time synchronization subprocess, the first time synchronization subprocess is any one of the N time synchronization subprocesses, and the preset condition includes: $2T_0 - \varepsilon \leq$ Round trip time $\leq 2T_0 + \varepsilon$, where $0 < \varepsilon \leq T_0$, and $T_0$ is the Bluetooth interval.

The preset condition refers to a distribution range of the round trip time used to determine how to adjust the initial sub-time offset. When the round trip time of the time synchronization subprocess meets the preset condition, it is considered that the time synchronization subprocess meets a preset adjustment condition. To be specific, the mobile phone needs to perform a related operation on the initial sub-time offset corresponding to the time synchronization subprocess.

For example, when the round trip time of the time synchronization subprocess meets the preset condition, the mobile phone deletes the initial sub-time offset. For another example, when the round trip time of the time synchronization subprocess does not meet the preset condition, the mobile phone reserves the initial sub-time offset.

In some possible implementations of the first aspect, that the first electronic device obtains, based on the N round trip times, M valid sub-time offsets corresponding to M time synchronization subprocesses includes: The first electronic device performs the following operation on each of the N round trip times: determining, by the first electronic device, whether a first round trip time meets a preset condition; and when the first round trip time meets the preset condition, correcting an initial sub-time offset corresponding to the first round trip time, and using a corrected initial sub-time offset as a valid sub-time offset; or when the first round trip time does not meet the preset condition, using an initial sub-time offset corresponding to the first round trip time as a valid sub-time offset, where the first round trip time is a round trip time of the first time synchronization subprocess, the first time synchronization subprocess is any one of the N time synchronization subprocesses, and the preset condition includes: Round trip time $> 2T_0 + \Phi$, where $0 < \Phi < 2T_0$.

The preset condition refers to a distribution range of the round trip time used to determine how to adjust the initial sub-time offset. When the round trip time of the time synchronization subprocess meets the preset condition, it is considered that the time synchronization subprocess meets a preset adjustment condition. To be specific, the mobile phone needs to perform a related operation on the initial sub-time offset corresponding to the time synchronization subprocess.

For example, when the round trip time of the time synchronization subprocess meets the preset condition, it is considered that the time synchronization subprocess meets a preset adjustment condition. To be specific, the mobile phone needs to correct the initial sub-time offset. For another example, when the round trip time of the time synchronization subprocess does not meet the preset condition, the mobile phone reserves the initial sub-time offset.

In some possible implementations of the first aspect, the initial sub-time offset is corrected in the following manner: $\Delta_i' = \Delta_i - \delta$, where $\Delta_i'$ is a corrected initial sub-time offset, $\Delta_i$ is the initial sub-time offset, and $\delta$ is a correction compensation amount. It may be understood that the correction compensation amount $\delta$ may be an empirical value obtained based on model training, and the correction compensation amount $\delta$ may be related to hardware of a time synchronization system.

In some possible implementations of the first aspect, the correction compensation amount is the Bluetooth interval $T_0$.

In some possible implementations of the first aspect, before the process of performing the Bluetooth based time synchronization is performed, the Bluetooth based time synchronization method further includes: The first electronic device and the second electronic device synchronize a clock value of a local clock of the first electronic device and a clock value of a local clock of the second electronic device by using a synchronization message.

In the foregoing Bluetooth based time synchronization method, a mobile phone clock value of the mobile phone is kept synchronized with a tag clock value of the tag device by using a synchronization message. That is, a time deviation between the mobile phone and the tag device is minimized, so that difficulty of the Bluetooth based time synchronization between the mobile phone and the tag device is reduced.

A second aspect of this application further provides a Bluetooth based time synchronization method. The Bluetooth based time synchronization method includes: A second electronic device performs Bluetooth based time synchronization with a first electronic device, where the Bluetooth based time synchronization includes N time synchronization subprocesses that are sequentially performed, and each time synchronization subprocess has one round trip time. A first time synchronization subprocess is one of the N time synchronization subprocesses, and the first time synchronization subprocess includes: sending, by the second electronic device, a time synchronization frame to the first electronic device, where the time synchronization frame is carried by an indication sent by a Bluetooth module of the second electronic device; and receiving, by the second electronic device, an acknowledgment message that is sent by the first electronic device in response to the time synchronization frame, where the acknowledgment message is carried by a confirm sent by a Bluetooth module of the first electronic device. The time synchronization frame includes $T_{TXi}$ and $T_{Ei-1}$, $T_{TXi}$ is a moment at which the second electronic device sends the time synchronization frame, and $T_{Ei-1}$ is a moment at which the second electronic device receives a previous acknowledgment message of the acknowledgment message. $T_{LPi} = T_{Ei} - T_{TXi}$, $T_{LPi}$ is a round trip time of the first time synchronization subprocess, and $T_{Ei}$ is an acknowledgment receiving moment at which the second electronic device receives the acknowledgment message.

In some possible implementations of the second aspect, the N round trip times of the N time synchronization subprocesses are used to correct N valid sub-time offsets corresponding to the N time synchronization subprocesses, to obtain M valid sub-time offsets, and the M valid sub-time offsets are used to determine a time offset between the second electronic device and the first electronic device, where $M \leq N$.

In some possible implementations of the second aspect, an initial sub-time offset includes either of the following: $\Delta_i = T_{RXi} - T_{TXi}$, where $\Delta_i$ is the initial sub-time offset, $T_{RXi}$ is a time synchronization receiving moment at which the first electronic device receives the time synchronization frame, and $T_{TXi}$ is a time synchronization sending moment at which the second electronic device sends the time synchronization frame; or $\Delta_i = T_{RXi} - T_{Ei}$, where $\Delta_i$ is the initial sub-time offset, $T_{RXi}$ is a time synchronization receiving moment at which the first electronic device receives the time synchronization frame, and $T_{Ei}$ is an acknowledgment receiving moment at which the second electronic device receives the acknowledgment message.

In some possible implementations of the second aspect, the time synchronization frame further includes a sequence number, where the sequence number indicates a ranking of the time synchronization frame in the N time synchronization subprocesses; and/or the time synchronization frame further includes a Bluetooth interval $T_0$.

In some possible implementations of the second aspect, before that a second electronic device performs Bluetooth based time synchronization with a first electronic device, the method further includes: The first electronic device and the second electronic device synchronize a clock value of a local clock of the first electronic device and a clock value of a local clock of the second electronic device by using a synchronization message.

A third aspect of this application further provides an electronic device. The electronic device further includes a memory, configured to store instructions; and one or more processors. When the instructions are executed by the one or more processors, the Bluetooth based time synchronization method according to any one of the first aspect and the possible implementations of the first aspect is implemented.

A fourth aspect of this application further provides a computer-readable storage medium. The computer-readable storage medium stores instructions. When the instructions are executed on an electronic device, the electronic device is enabled to perform the Bluetooth based time synchronization method according to any one of the first aspect and the possible implementations of the first aspect.

A fifth aspect of this application further provides a computer program product. The computer program product includes instructions, and when being executed by one or more processors, the instructions are used to implement the Bluetooth based time synchronization method according to any one of the first aspect and the possible implementations of the first aspect.

## BRIEF DESCRIPTION OF DRAWINGS

FIG. 1(a) is a schematic diagram of a time synchronization system 1 according to some embodiments of this application;

FIG. 1(b) shows a distance measurement scenario to which some embodiments of this application are applicable;

FIG. 2 is an interaction diagram of a distance measurement solution according to some embodiments of this application;

FIG. 3 is an interaction diagram of a Bluetooth based time synchronization solution according to some embodiments of this application;

FIG. 4 is a principle diagram of a solution of determining a comprehensive time offset $\Delta$ between a mobile phone 100 and a tag device 200 according to some embodiments of this application;

FIG. 5 is a diagram of a correspondence between a sub-time offset $\Delta_i$ and a subprocess number i according to some embodiments;

FIG. 6 is a principle diagram of a Bluetooth based time synchronization solution according to some other embodiments of this application;

FIG. 7(a) is a diagram of a correspondence between a sub-time offset $\Delta_i$ and a subprocess number i according to some embodiments of this application;

FIG. 7(b) is a diagram of a correspondence between a round trip time $T_{LPi}$ and a subprocess number i according to some embodiments of this application;

FIG. 7(c) is a diagram of a correspondence between an adjusted sub-time offset $\Delta_j$ and a subprocess number i according to some embodiments of this application;

FIG. 8(a) is an interaction diagram of a reverse-unidirectional-Bluetooth based time synchronization solution according to some embodiments of this application;

FIG. 8(b) is an interaction diagram of an $i^{th}$ time synchronization subprocess and a part of an $(i+1)^{th}$ time synchronization subprocess in the reverse-unidirectional-Bluetooth based time synchronization solution according to some embodiments of this application;

FIG. 9 is a flowchart of the reverse-unidirectional-Bluetooth based time synchronization solution according to some embodiments of this application;

FIG. 10 is a flowchart of a time synchronization solution in one of time synchronization subprocesses in FIG. 8(a) and FIG. 8(b);

FIG. 11(a) is an interaction diagram of a forward-unidirectional-Bluetooth based time synchronization solution according to some embodiments of this application;

FIG. 11(b) is an interaction diagram of an $i^{th}$ time synchronization subprocess in the forward-unidirectional-Bluetooth based time synchronization solution according to some embodiments of this application;

FIG. 12 is a flowchart of the forward-unidirectional-Bluetooth based time synchronization solution according to some embodiments of this application;

FIG. 13 is a flowchart of a time synchronization solution in one of time synchronization subprocesses in FIG. 11 (a) and FIG. 11(b);

FIG. 14(a) is an interaction diagram of a reverse-bidirectional-Bluetooth based time synchronization solution according to some embodiments of this application;

FIG. 14(b) is an interaction diagram of an $i^{th}$ time synchronization subprocess in the reverse-bidirectional-Bluetooth based time synchronization solution according to some embodiments of this application;

FIG. 15 is a flowchart of the reverse-bidirectional-Bluetooth based time synchronization solution according to some embodiments of this application;

FIG. 16 is a flowchart of a time synchronization solution in one of time synchronization subprocesses in FIG. 14(a) and FIG. 14(b);

FIG. 17(a) is an interaction diagram of a forward-bidirectional-Bluetooth based time synchronization solution according to some embodiments of this application;

FIG. 17(b) is an interaction diagram of an $i^{th}$ time synchronization subprocess and a part of an $(i+1)^{th}$ time synchronization subprocess in the reverse-bidirectional-Bluetooth based time synchronization solution according to some embodiments of this application;

FIG. 18 is a flowchart of the forward-bidirectional-Bluetooth based time synchronization solution according to some embodiments of this application;

FIG. 19A and FIG. 19B are a flowchart of a time synchronization solution in one of time synchronization subprocesses in FIG. 17(a) and FIG. 17(b);

FIG. 20 is a schematic diagram of a hardware structure of a mobile phone 100 according to this application;

FIG. 21 is a schematic diagram of a structure of a notebook computer 300 according to this application; and
FIG. 22 is an architectural diagram of a mobile phone 100 according to some embodiments of this application.

## DESCRIPTION OF EMBODIMENTS

Illustrative embodiments of this application include but are not limited to a Bluetooth based time synchronization method, an apparatus, a readable medium, and an electronic device.

To make the objectives, technical solutions, and advantages of this application clearer, the following further describes implementations of this application in detail with reference to the accompanying drawings.

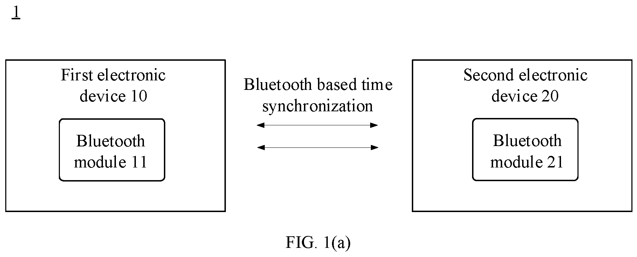

This application provides a time synchronization system applicable to a Bluetooth based time synchronization solution in this application. The time synchronization system includes a first electronic device and a second electronic device that can perform Bluetooth based time synchronization. FIG. 1(a) is a schematic diagram of a time synchronization system 1 according to some embodiments of this application. As shown in FIG. 1(a), the time synchronization system 1 includes a first electronic device 10 and a second electronic device 20. The first electronic device 10 includes a Bluetooth module 11, the second electronic device 20 includes a Bluetooth module 21, and the first electronic device 10 and the second electronic device 20 perform Bluetooth communication by using the Bluetooth module 11 and the Bluetooth module 21, to implement Bluetooth based time synchronization between the first electronic device 10 and the second electronic device 20.

In addition, the Bluetooth based time synchronization solution in this application can be applied to a plurality of scenarios.

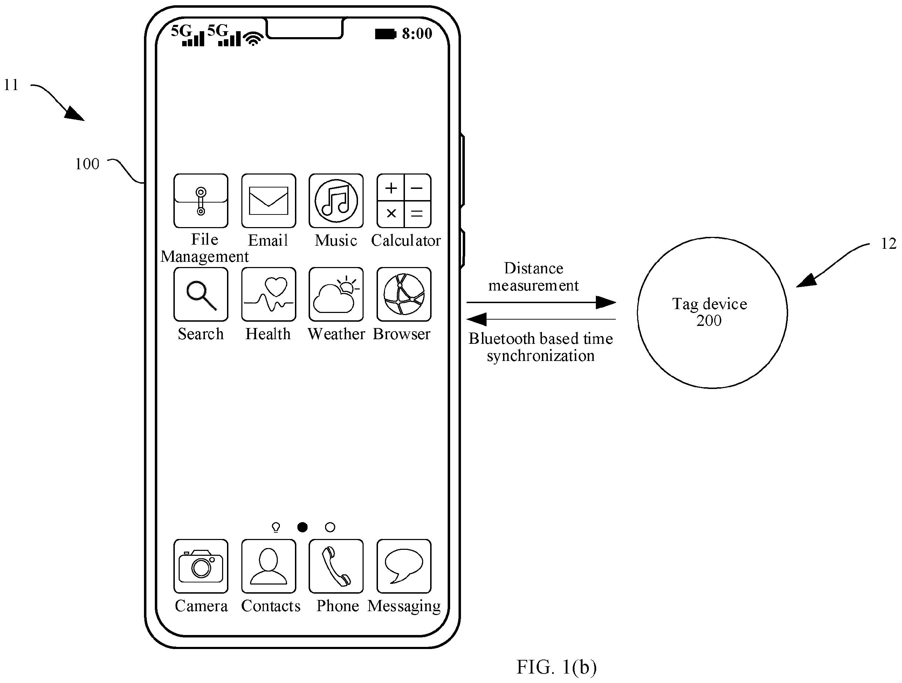

In some application scenarios, a Bluetooth based time synchronization method provided in this application is applicable to a distance measurement scenario. FIG. 1(b) shows a distance measurement scenario to which some embodiments of this application are applicable. As shown in FIG. 1(b), the first electronic device 10 in the time synchronization system 1 may be a mobile phone 100, and the second electronic device 20 in the time synchronization system 1 may be an electronic tag (Tag) device 200. The tag device 200 may be an electronic tag device configured to indicate an object.

Specifically, when a user intends to learn of specific locations of a stylus, a backpack, a bicycle, and a key, the user operates the mobile phone 100, so that the mobile phone 100 is connected to the tag device 200 through Bluetooth Then, when the mobile phone 100 performs Bluetooth based time synchronization with the tag device 200, a comprehensive time offset between the mobile phone 100 and the tag device 200 is determined. Afterwards, the mobile phone 100 receives a sound wave signal sent by the tag device 200, and determines a distance between the mobile phone 100 and the tag device 200 based on the comprehensive time offset and the sound wave signal, to provide a reference basis for the user to search for objects such as the stylus, the backpack, the bicycle, and the key.

In addition, in some other application scenarios, the time synchronization system provided in this application is further applicable to another communication (for example, sleeping and power saving) solution. Details are not described herein.

It may be understood that, in addition to the mobile phone 100, the first electronic device 10 may be any portable and mobile electronic device such as a watch, a tablet computer, a notebook computer, a laptop computer, a wearable device, a head mounted display, a portable game console, a portable music player, or a reader device. In addition to the tag device 200, the second electronic device 20 may be any portable and mobile electronic device such as a mobile phone, a watch, a tablet computer, a notebook computer, a laptop computer, a wearable device, a head mounted display, a portable game console, a portable music player, a reader device, or a stylus. In addition, example embodiments of the first electronic device 10 and the second electronic device 20 include but are not limited to various electronic devices that run a Linux operating system, an operating system (Windows) developed by Microsoft, a mobile operating system (iOS) developed by Apple, an Android (Android) open-source operating system, a HarmonyOS (HUAWEI Harmony OS), or another operating system. This is not specifically limited in this application.

For ease of description, the following describes the technical solutions in this application by using an example in which the Bluetooth based time synchronization solution provided in this application is applicable to the distance measurement scenario, the first electronic device 10 is the mobile phone 100, and the second electronic device 20 is the tag device 200. To better understand the technical solutions in this application, the following further describes the technical solutions in this application with reference to specific structures of the mobile phone 100 and the tag device 200.

In some embodiments of this application, the mobile phone 100 includes a first communication module, a first audio module, a first processor, a first memory, and a display module. The first communication module, the first audio module, the first processor, the first memory, and the display module are connected through a bus, to implement data exchange. The tag device 200 includes a second communication module and a second audio module. The second communication module and the second audio module establish a signal connection, to implement data exchange. The first communication module and the second communication module are configured to establish a communication connection between the mobile phone 100 and the tag device 200. The first audio module and the second audio module are configured to send and/or receive a sound wave signal between the mobile phone 100 and the tag device 200. The first processor may invoke related instructions, to control the first communication module and the second communication module to perform a Bluetooth based time synchronization method and a distance measurement method in this application. For example, the first processor may be a processing chip integrated into the mobile phone 100. The first memory is configured to: store instructions related to Bluetooth based time synchronization and distance measurement, received data such as a Bluetooth signal or a sound wave signal, and a comprehensive time offset obtained by using the Bluetooth based time synchronization solution. The display module is configured to display a distance obtained by the first processor through processing. For example, the display module may be a display screen or a speaker. A distance display manner is not specifically limited in this application.

In some other embodiments of this application, the mobile phone 100 includes a first communication module, a first audio module, a first processor, a first memory, and a display module, and the tag device 200 includes a second communication module, a second audio module, a second processor, and a second memory. The first communication module, the first audio module, the first memory, the first processor, the display module, the second communication module, the second audio module, the second processor, and the second memory are the same as those in the foregoing embodiment, and details are not described herein again.

In some other alternative embodiments of this application, the mobile phone 100 includes a first communication module, a first audio module, and a display module, and the tag device 200 includes a second communication module, a second audio module, a second processor, and a second memory. The first communication module, the first audio module, the display module, the second communication module, and the second audio module are the same as those in the foregoing embodiment, and details are not described herein again. The second processor may invoke related instructions, to control the first communication module and the second communication module to perform a Bluetooth based time synchronization method and a distance measurement method in this application. For example, the second processor may be a processing chip integrated into the tag device 200, and the second memory is configured to store instructions related to Bluetooth based time synchronization and distance measurement, received data such as a Bluetooth signal or a sound wave signal, a parameter related to a comprehensive time offset in the Bluetooth based time synchronization solution, and the comprehensive time offset in the Bluetooth based time synchronization solution.

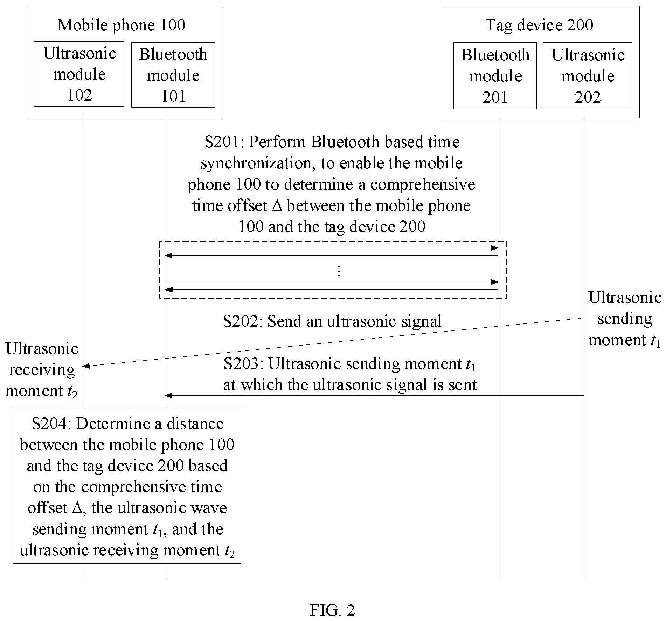

FIG. 2 is an interaction diagram of a distance measurement solution according to some embodiments of this application. As shown in FIG. 2, in some embodiments of this application, a mobile phone 100 includes a Bluetooth module 101 (namely, a first communication module) and an ultrasonic module 102 (namely, a first audio module). The Bluetooth module 101 includes an application layer, a Bluetooth baseband, and a Bluetooth radio frequency module. For example, the ultrasonic module 102 may be any device that can receive a sound wave/an ultrasonic wave, such as a microphone or a ceramic piezoelectric plate. This is not specifically limited in this application. A tag device 200 includes a Bluetooth module 201 (namely, a second communication module) and an ultrasonic module 202 (namely, a second audio module). The Bluetooth module 201 includes an application layer, a Bluetooth baseband, and a Bluetooth radio frequency module. For example, the ultrasonic module 202 may be any device that can send a sound wave/an ultrasonic wave, such as a speaker or a ceramic piezoelectric plate. This is not specifically limited in this application.

The following describes in detail the distance measurement solution in some embodiments of this application with reference to FIG. 2. As shown in FIG. 2, the distance measurement solution in some embodiments of this application specifically includes the following steps.

Step S201: The Bluetooth module 101 of the mobile phone 100 and the Bluetooth module 201 of the tag device 200 perform Bluetooth based time synchronization, to enable the mobile phone 100 to determine a comprehensive time offset $\Delta$ between the mobile phone 100 and the tag device 200. The comprehensive time offset $\Delta$ refers to an offset value between a clock time of the mobile phone 100 and a clock time of the tag device 200 that is obtained based on a Bluetooth based time synchronization process.

In some implementations of this application, the comprehensive time offset $\Delta$ may be represented by the clock time of the mobile phone 100 minus the clock time of the tag device 200. In some other alternative implementations of this application, the comprehensive time offset $\Delta$ may be represented by the clock time of the tag device 200 minus the clock time of the mobile phone 100. For ease of description and understanding, the following uses an example in which the comprehensive time offset $\Delta$ is the clock time of the mobile phone 100 minus the clock time of the tag device 200 for description.

Step S202: The ultrasonic module 202 of the tag device 200 sends an ultrasonic signal to the ultrasonic module 102 of the mobile phone 100, where a moment at which the ultrasonic module 202 sends the ultrasonic signal is an ultrasonic sending moment $t_1$, and a moment at which the ultrasonic module 102 receives the ultrasonic signal is an ultrasonic receiving moment $t_2$.

It may be understood that the ultrasonic signal is an implementation of a signal sent by the ultrasonic module 202 to the ultrasonic module 102. In some other alternative implementations, the ultrasonic module 202 may send a sound wave signal to the ultrasonic module 102. Working principles in the two implementations are the same, and a difference lies only in a specific frequency band. Details are not described herein. In addition, for ease of description and understanding, the following continues to use an example in which the ultrasonic module 202 sends an ultrasonic signal to the ultrasonic module 102 for description.

Step S203: The tag device 200 sends the ultrasonic sending moment $t_1$ to the mobile phone 100.

Step S204: After receiving the ultrasonic sending moment $t_1$, the mobile phone 100 determines a distance between the mobile phone 100 and the tag device 200 based on the comprehensive time offset $\Delta$, the ultrasonic sending moment $t_1$, and the ultrasonic receiving moment $t_2$.

In some implementations of this application, the mobile phone 100 determines the distance between the mobile phone 100 and the tag device 200 based on the comprehensive time offset $\Delta$, the ultrasonic sending moment $t_1$, and the ultrasonic receiving moment $t_2$ by using a formula (1):

$$L = v * [t_2 - (t_1 + \Delta - \Delta_0)] \qquad (1)$$

In the formula (1), L is the distance between the mobile phone 100 and the tag device 200, v is a speed of sound, $t_1$ is the ultrasonic sending moment, $t_2$ is the ultrasonic receiving moment, $\Delta$ is the comprehensive time offset between the mobile phone 100 and the tag device 200, and $\Delta_0$ is a time compensation value between the mobile phone 100 and the tag device 200.

It is easily found that, in the foregoing distance measurement method, the comprehensive time offset $\Delta$ between the mobile phone 100 and the tag device 200 is determined through Bluetooth based time synchronization, and then the distance between the mobile phone 100 and the tag device 200 is calculated based on a time of flight (time of flight, ToF) of the ultrasonic signal between the mobile phone 100 and the tag device 200 and the comprehensive time offset $\Delta$. It should be noted that, a Bluetooth signal is an electromagnetic wave, and a propagation speed is a speed of light, while the ultrasonic signal is a mechanical wave, and a propagation speed is the speed of sound. Although a nanosecond-level propagation delay exists in the Bluetooth based time synchronization between the mobile phone 100 and the tag device 200, this delay can be ignored compared with the ultrasonic signal propagated at the speed of sound. Therefore, the foregoing distance measurement method can ensure specific distance measurement precision.

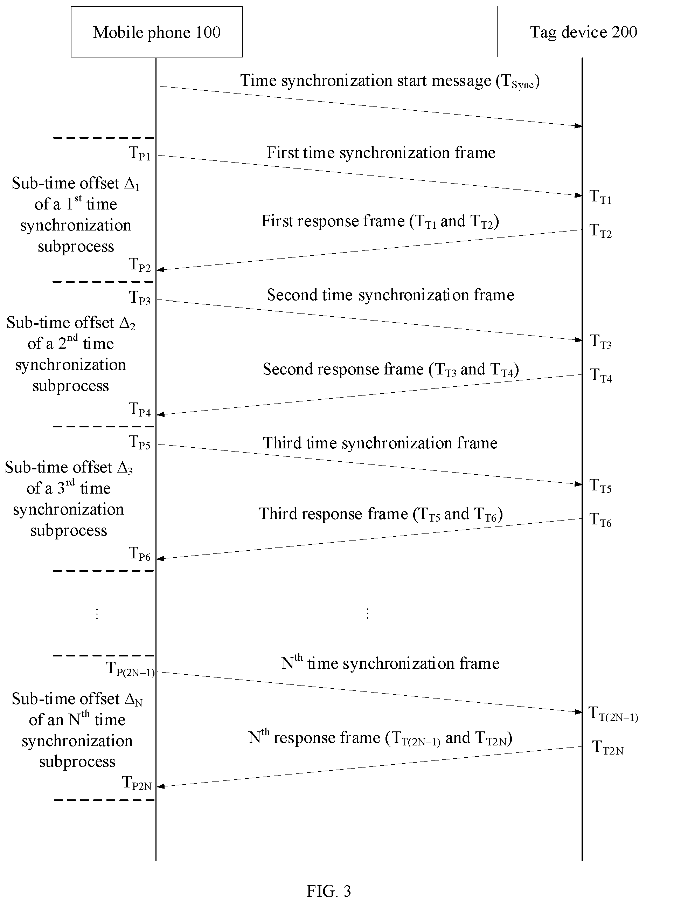

FIG. 3 is an interaction diagram of a Bluetooth based time synchronization solution according to some embodiments of this application. As shown in FIG. 3, a Bluetooth based time synchronization process includes a plurality of time synchronization subprocesses. A mobile phone 100 may determine, based on a Bluetooth signal corresponding to each time synchronization subprocess, a sub-time offset $\Delta_i$ corresponding to the time synchronization subprocess. The sub-time offset $\Delta_i$ refers to an offset value between a clock time of the mobile phone 100 and a clock time of a tag device 200 that is obtained based on the time synchronization subprocess in the Bluetooth based time synchronization process.

In some implementations of this application, the sub-time offset $\Delta_i$ may be represented by the clock time of the mobile phone 100 minus the clock time of the tag device 200. In some other alternative implementations of this application, the sub-time offset $\Delta_i$ may be represented by the clock time of the tag device 200 minus the clock time of the mobile phone 100. For ease of description and understanding, the following uses an example in which the sub-time offset $\Delta_i$ is the clock time of the mobile phone 100 minus the clock time of the tag device 200 for description.

Because the sub-time offset $\Delta_i$ of each time synchronization subprocess is affected by system scheduling inside a Bluetooth chip, to reduce an error, the mobile phone 100 may obtain a comprehensive time offset $\Delta$ between the mobile phone 100 and the tag device 200 based on a plurality of sub-time offsets $\Delta_i$ corresponding to the plurality of time synchronization subprocesses. For example, the mobile phone 100 averages the sub-time offsets $\Delta_i$ corresponding to the time synchronization subprocesses, to reduce impact of the system scheduling on the comprehensive time offset $\Delta$.

For ease of understanding, the following describes a Bluetooth based time synchronization principle in detail by using one of the time synchronization subprocesses (for example, a 1st time synchronization subprocess). In some embodiments of this application, FIG. 3 shows a Bluetooth based time synchronization process based on the precision time protocol (Precision Time Protocol, PTP). In the 1st time synchronization subprocess, the mobile phone 100 sends a first time synchronization frame to the tag device 200 at a first moment $T_{P1}$, and the tag device 200 receives the first time synchronization frame at a second moment $T_{T1}$. After receiving the first time synchronization frame, the tag device 200 sends a first response frame to the mobile phone 100 at a third moment $T_{T2}$, and the mobile phone 100 receives the first response frame at a fourth moment $T_{P2}$. The first response frame carries the second moment $T_{T1}$ and the third moment $T_{T2}$.

$T_{P1}$ is a time that is recorded by the mobile phone 100 based on a local clock and at which the mobile phone 100 sends the first time synchronization frame, $T_{P2}$ is a time that is recorded by the mobile phone 100 based on the local clock and at which the mobile phone 100 receives the first response frame, $T_{T1}$ is a time that is recorded by the tag device 200 based on a local clock and at which the tag device 200 receives the first time synchronization frame, and $T_{T2}$ is a time that is recorded by the tag device 200 based on the local clock and at which the tag device 200 sends the first response frame.

It is easily found that, based on a process of transmitting the first time synchronization frame from the mobile phone 100 to the tag device 200, the following may be obtained: a sub-time offset $\Delta_{11}$ between the mobile phone 100 and the tag device 200 = $T_{P1} - T_{T1}$; and based on a process of transmitting the first response frame from the tag device 200 to the mobile phone 100, the following may be obtained: a sub-time offset $\Delta_{12}$ between the mobile phone 100 and the tag device 200 = $T_{P2} - T_{T2}$.

Based on this, in the 1st time synchronization subprocess, i = 1, and $\Delta_i = \Delta_1 = \frac{1}{2}\left(\Delta_{11} + \Delta_{12}\right) = \frac{1}{2}\left[(T_{P1} - T_{T1}) + (T_{P2} - T_{T2})\right]$, where $\Delta_1$ is a sub-time offset between the mobile phone 100 and the tag device 200 that is determined based on the 1st time synchronization subprocess.

Similarly, in an ith time synchronization subprocess, i = 2, ..., or N, and $\Delta_i = \frac{1}{2}\left[(T_{P(2i-1)} - T_{T(2i-1)}) + (T_{P2i} - T_{T2i})\right]$, where $\Delta_i$ is a sub-time offset between the mobile phone 100 and the tag device 200 that is determined based on the ith time synchronization subprocess, $T_{P(2i-1)}$ is a time that is recorded by the mobile phone 100 based on the local clock and at which the mobile phone 100 sends an ith time synchronization frame, $T_{P2i}$ is a time that is recorded by the mobile phone 100 based on the local clock and at which the mobile phone 100 receives an ith response frame, $T_{T(2i-1)}$ is a time that is recorded by the tag device 200 based on the local clock and at which the tag device 200 receives the ith time synchronization frame, and $T_{T2i}$ is a time that is recorded by the tag device 200 based on the local clock and at which the tag device 200 sends the ith response frame.

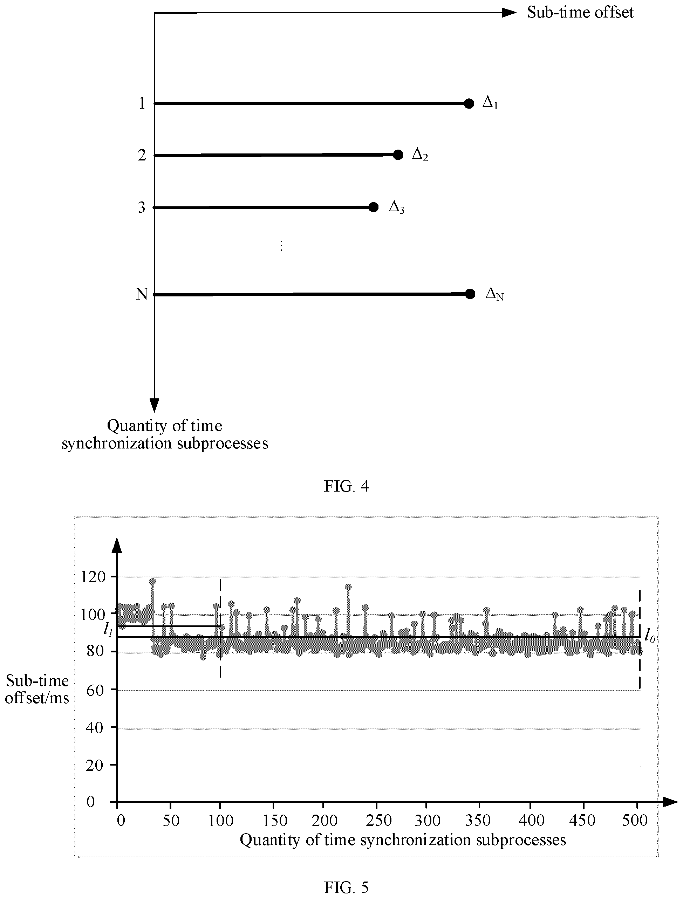

After the solution of determining the sub-time offset $\Delta_i$ between the mobile phone 100 and the tag device 200 based on one of the time synchronization subprocesses is described, the following continues to describe a solution of determining the comprehensive time offset $\Delta$ by using the sub-time offset $\Delta_i$. FIG. 4 is a principle diagram of a solution of determining a comprehensive time offset $\Delta$ between a mobile phone 100 and a tag device 200 according to some embodiments of this application. As shown in FIG. 4, in some embodiments of this application, a Bluetooth based time synchronization process includes N time synchronization subprocesses, and the comprehensive time offset $\Delta$ between the mobile phone 100 and the tag device 200 may be represented by an average value of sub-time offsets $\Delta_i$ of all of the N time synchronization subprocesses.

That is, the comprehensive time offset $\Delta$ between the mobile phone 100 and the tag device 200 may be calculated by using a formula (2):

$$\Delta = \frac{1}{N}\sum_{i=1}^{N}\Delta_i \qquad\qquad (2)$$

In the formula (2), $\Delta$ is the comprehensive time offset between the mobile phone 100 and the tag device 200 that is determined based on the Bluetooth based time synchronization process, N is a quantity of time synchronization subprocesses included in the Bluetooth based time synchronization process, and $\Delta_i$ is a sub-time offset between the mobile phone 100 and the tag device 200 that is determined based on an ith time synchronization subprocess.

Expressions of $\Delta_1$, $\Delta_2$, $\Delta_3$, ..., and $\Delta_N$ are separately substituted into the formula (2) to obtain a formula (3):

$$\Delta = \frac{1}{2N}\sum_{i=1}^{N}\left[(T_{P(2i-1)} - T_{T(2i-1)}) + (T_{P2i} - T_{T2i})\right] \qquad\qquad (3)$$

In the formula (3), $\Delta$ is the comprehensive time offset between the mobile phone 100 and the tag device 200 that is determined based on the Bluetooth based time synchronization process, N is the quantity of time synchronization subprocesses included in the Bluetooth based time synchronization process, $T_{P(2i-1)}$ is a time that is recorded by the mobile phone 100 based on a local clock and at which the mobile phone 100 sends an ith time synchronization frame, $T_{P2i}$ is a time that is recorded by the mobile phone 100 based on the local clock and at which the mobile phone 100 receives an ith response frame, $T_{T(2i-1)}$ is a time that is recorded by the tag device 200 based on a local clock and at which the tag device 200 receives the ith time synchronization frame, and $T_{T2i}$ is a time that is recorded by the tag device 200 based on the local clock and at which the tag device 200 sends the ith response frame.

FIG. 5 is a diagram of a relationship between a sub-time offset $\Delta_i$ and a subprocess number i in a Bluetooth based time synchronization solution according to some embodiments. In FIG. 5, a horizontal axis represents a subprocess sequence number of a time synchronization subprocess, namely, a specific time synchronization subprocess, and a vertical axis represents a sub-time offset $\Delta_i$ (unit: ms) corresponding to each time synchronization subprocess.

As shown in FIG. 5, sub-time offsets $\Delta_i$ of the first 50 subprocesses fluctuate significantly compared with an overall average value. In addition, when the comprehensive time offset $\Delta$ between the mobile phone 100 and the tag device 200 is calculated by using sub-time offsets $\Delta_i$ of all time synchronization subprocesses (namely, the first 500 subprocesses) in FIG. 5, the comprehensive time offset $\Delta$ obtained according to the Bluetooth based time synchronization solution in FIG. 3 may be represented as a straight line $l_0$.

However, in some real-time application scenarios, Bluetooth based time synchronization needs to be completed within a short time, that is, a period of the Bluetooth based time synchronization process needs to be short. When the period of the Bluetooth based time synchronization process is short, a quantity of time synchronization subprocesses in the Bluetooth based time synchronization process is also small. For example, when the comprehensive time offset $\Delta$ between the mobile phone 100 and the tag device 200 is calculated by using sub-time offsets $\Delta_i$ of the first 100 subprocesses in FIG. 5, the comprehensive time offset $\Delta$ obtained according to the Bluetooth based time synchronization solution in FIG. 3 may be represented as a straight line $l_1$.

It should be noted that, because the sub-time offsets of the first 50 subprocesses fluctuate greatly, the comprehensive time offset $\Delta$ (corresponding to the straight line $l_1$) between the mobile phone 100 and the tag device 200 that is calculated based on the sub-time offsets $\Delta_i$ of the first 100 subprocesses differs greatly from the comprehensive time offset $\Delta$ (corresponding to the straight line $l_0$) between the mobile phone 100 and the tag device 200 that is calculated based on the sub-time offsets $\Delta_i$ of the first 500 subprocesses.

Based on this, in the foregoing embodiment, the comprehensive time offset $\Delta$ between the mobile phone 100 and the tag device 200 may be calculated. However, only when the period of the Bluetooth based time synchronization process is long, that is, there are a large quantity of time synchronization subprocesses in the Bluetooth based time synchronization process, the calculated comprehensive time offset $\Delta$ is accurate. When the period of the Bluetooth based time synchronization process is short, that is, there are a small quantity of time synchronization subprocesses in the Bluetooth based time synchronization process, because the first part of sub-time offsets $\Delta_i$ fluctuate sharply, there is a high probability that an error occurs in estimation of the comprehensive time offset $\Delta$, that is, accuracy of the calculated comprehensive time offset $\Delta$ is low.

Generally, when an error of the comprehensive time offset $\Delta$ between the mobile phone 100 and the tag device 200 is less than 3 ms, distance measurement precision between the mobile phone 100 and the tag device 200 may be maintained within $\pm 1$ m. Based on this, how to improve accuracy of the comprehensive time offset $\Delta$ between the mobile phone 100 and the tag device 200 when the period of the Bluetooth based time synchronization period is short, that is, there are a small quantity of Bluetooth based time synchronization subprocesses is a technical problem that urgently needs to be resolved to improve the distance measurement precision in the foregoing distance measurement solution.

Based on this, to improve the accuracy of the comprehensive time offset $\Delta$, this application provides a Bluetooth based time synchronization solution. In this application, after obtaining, through calculation, the sub-time offset $\Delta_i$ (where i = 1 to N) corresponding to each time synchronization subprocess, the mobile phone 100 adjusts the sub-time offset $\Delta_i$ corresponding to the time synchronization subprocess when determining that the time synchronization subprocess meets a preset adjustment condition, to determine an adjusted sub-time offset $\Delta_j$ (where j = 1 to M, and N $\geq$ M), so as to reduce a dispersion degree of all sub-time offsets corresponding to the Bluetooth based time synchronization process. Then, the mobile phone 100 obtains the comprehensive time offset $\Delta$ between the mobile phone 100 and the tag device 200 based on the adjusted sub-time offset $\Delta_j$ (where j = 1 to M, and N $\geq$ M).

A manner of determining whether the time synchronization subprocess meets the preset adjustment condition may be: determining whether a round trip time corresponding to the time synchronization subprocess meets a preset condition. In some implementations of this application, whether the round trip time corresponding to the time synchronization subprocess meets the preset condition may be determined depending on whether the round trip time corresponding to the time synchronization subprocess falls within a preset round trip range. The round trip time refers to duration of a group of round-trip transmission signals in the time synchronization process. The preset round trip range refers to a range other than a critical range of a round trip time when the initial sub-time offset corresponding to the time synchronization subprocess converges. Details are described below, and details are not described herein. To be specific, when the round trip time falls within the preset round trip range, it indicates that the time synchronization subprocess meets the preset adjustment condition, otherwise, when the round trip time falls beyond the preset round trip range, it indicates that the time synchronization subprocess does not meet the preset adjustment condition.

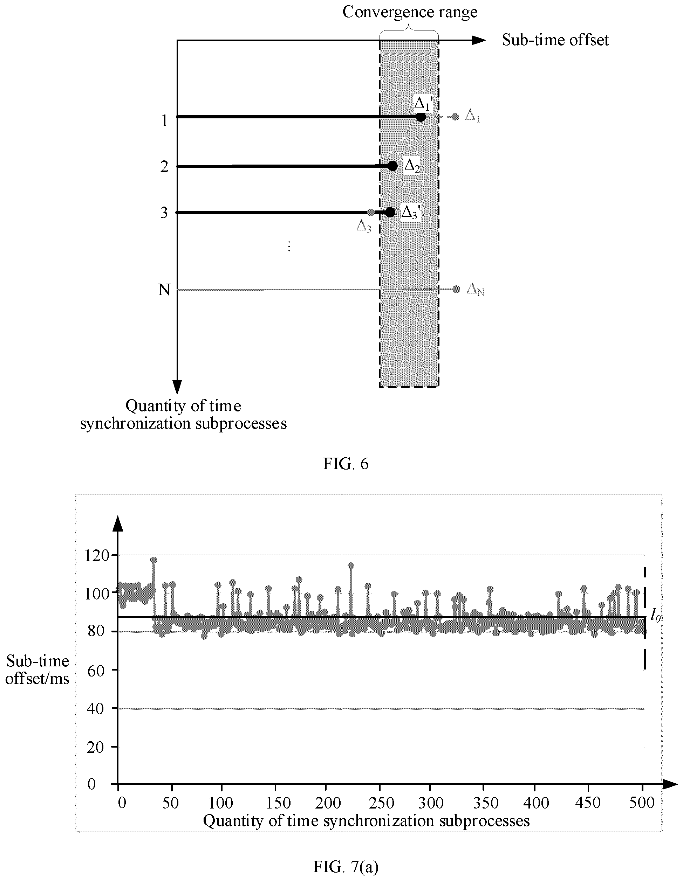

FIG. 6 is a principle diagram of a Bluetooth based time synchronization solution according to some embodiments of this application, and shows a principle of determining the comprehensive time offset $\Delta$ between the mobile phone 100 and the tag device 200 in some embodiments of this application. As shown in FIG. 6, after obtaining, through calculation, the sub-time offset $\Delta_i$ corresponding to each time synchronization subprocess, the mobile phone 100 determines whether the time synchronization subprocess meets the preset adjustment condition. For example, in FIG. 6, a time synchronization subprocess whose sub-time offset $\Delta_i$ falls beyond a convergence range (a gray area in the figure) meets the preset adjustment condition, and a time synchronization subprocess whose sub-time offset $\Delta_i$ falls within the convergence range (the gray area in the figure) does not meet the preset adjustment condition. The convergence range refers to a preset distribution range of sub-time offsets obtained by using the round trip time in the Bluetooth based time synchronization solution. It may be understood that the convergence range in FIG. 6 is merely a part of implementations in this application. In this application, the convergence range may alternatively be an implementation in another form. This is not specifically limited in this application.

The sub-time offset $\Delta_i$ corresponding to the time synchronization subprocess that meets the preset adjustment condition is corrected (where for example, $\Delta_1$ is adjusted to $\Delta_1'$ in FIG. 6; for another example, $\Delta_3$ is adjusted to $\Delta_3'$ in FIG. 6) and/or deleted (where for example, $\Delta_N$ is deleted in FIG. 6), so that a fluctuation range of the sub-time offsets corresponding to the Bluetooth based time synchronization process is minimized. The corrected sub-time offset and/or the deleted sub-time offset are/is denoted as $\Delta_j$. Then, the mobile phone 100 obtains the comprehensive time offset $\Delta$ between the mobile phone 100 and the tag device 200 based on the sub-time offset $\Delta_j$ that converges within the convergence range.

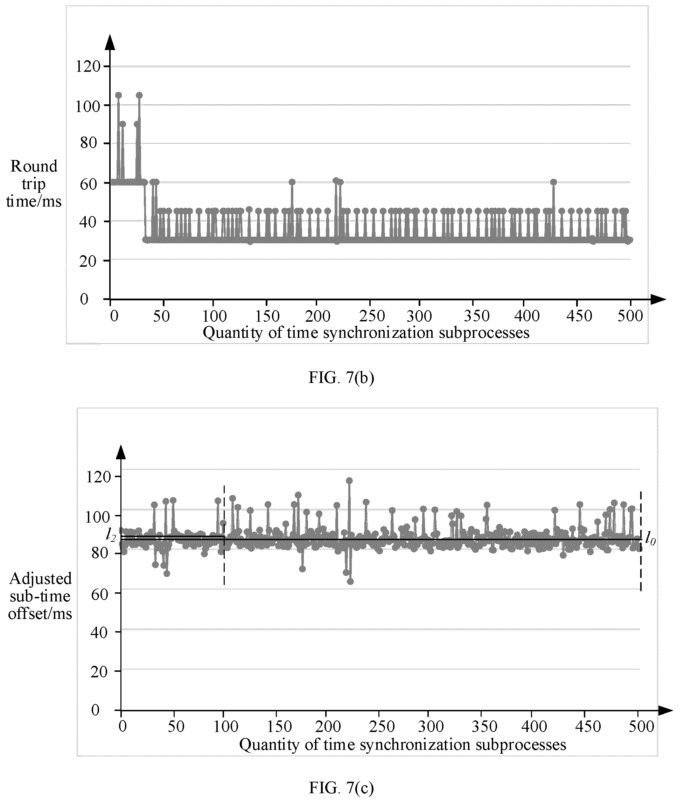

FIG. 7(a) is a diagram of a correspondence between a sub-time offset $\Delta_i$ and a subprocess number i according to some embodiments of this application. FIG. 7(b) is a diagram of a correspondence between a round trip time $T_{LPi}$ and a subprocess number i according to some embodiments of this application. FIG. 7(c) is a diagram of a correspondence between an adjusted sub-time offset $\Delta_j$ and a subprocess number i according to some embodiments of this application. The foregoing process is performed based on measured data. The sub-time offset value is shown in FIG. 7(a). A sub-time offset in an initial phase has a large error. If the first W subprocesses are directly used to calculate an average time offset, when W is set to different values (for example, W = 20, 40, 60, 80, or 100), the comprehensive time offset clearly greatly differs. Therefore, the sub-time offset is adjusted based on the round trip time in FIG. 7(b). In this case, the adjusted sub-time offset is shown in FIG. 7(c), and the comprehensive time offset $\Delta$ obtained based on the Bluetooth based time synchronization solution in FIG. 7(c) may be represented as a straight line $l_2$. It is easily found through comparison between FIG. 7(a) and FIG. 7(c) that, based on the adjusted sub-time offset, regardless of a value of W, the comprehensive time offset $\Delta$ is closer to a stable value.

The following further describes the Bluetooth based time synchronization solution in this application in detail with reference to specific application scenarios.

Application scenario 1

In the application scenario 1, a tag device 200 sends a time synchronization frame to a mobile phone 100, and then the mobile phone 100 feeds back an acknowledgment message to the tag device 200. It should be noted that the mobile phone 100 does not need to send a time synchronization frame or a response frame to the tag device 200. Based on this, a Bluetooth based time synchronization solution applicable to the application scenario 1 may also be defined as a reverse-unidirectional-Bluetooth based time synchronization solution.

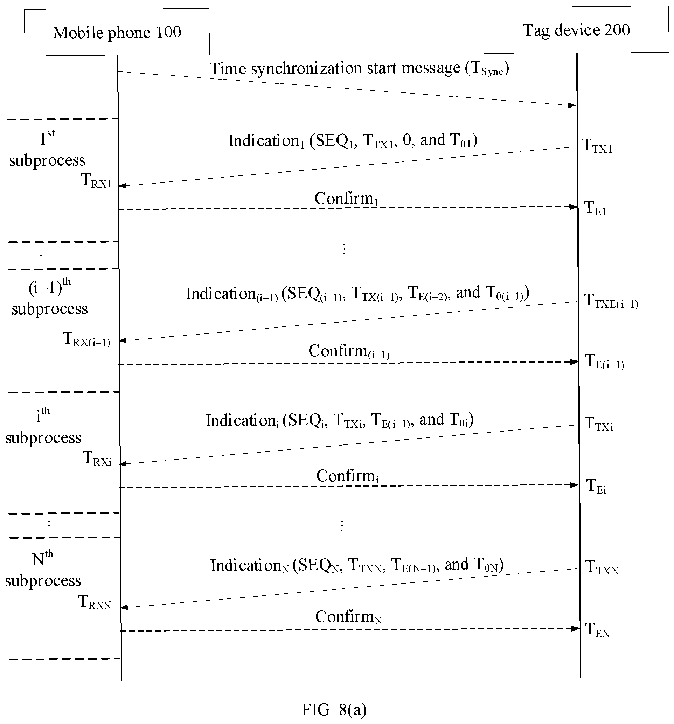

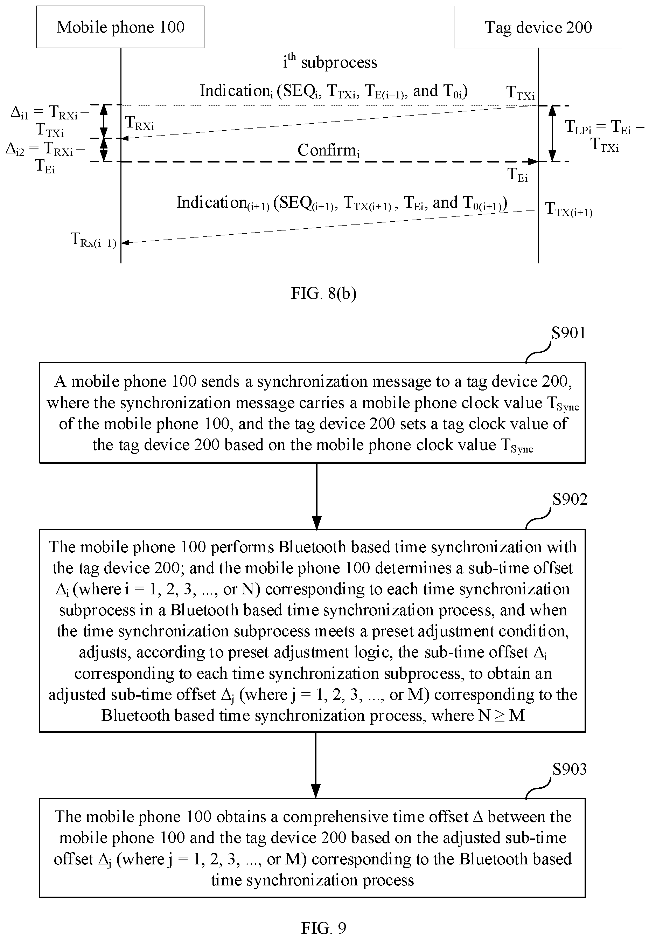

FIG. 8(a) is an interaction diagram of the reverse-unidirectional-Bluetooth based time synchronization solution according to some embodiments of this application. FIG. 8(b) is an interaction diagram of an $i^{th}$ time synchronization subprocess and a part of an $(i+1)^{th}$ time synchronization subprocess in the reverse-unidirectional-Bluetooth based time synchronization solution according to some embodiments of this application. A shadow area represents the $i^{th}$ time synchronization subprocess, and a white area below the shadow area represents the part of the $(i+1)^{th}$ time synchronization subprocess. It can be learned from FIG. 8(a) that a Bluetooth based time synchronization process includes a plurality of time synchronization subprocesses. FIG. 9 is a flowchart of the reverse-unidirectional-Bluetooth based time synchronization solution according to some embodiments of this application. As shown in FIG. 9, in some embodiments of this application, the reverse-unidirectional-Bluetooth based time synchronization solution applicable to the application scenario 1 in this application specifically includes the following steps.

S901: The mobile phone 100 sends a synchronization message to the tag device 200, where the synchronization message carries a mobile phone clock value $T_{Sync}$ of the mobile phone 100, and the tag device 200 sets a tag clock value of the tag device 200 based on the mobile phone clock value $T_{Sync}$. The mobile phone clock value $T_{Sync}$ refers to a clock value of a local clock of the mobile phone 100. The tag clock value refers to a clock value of a local clock of the tag device 200.

The synchronization message refers to instruction information sent by one electronic device to another electronic device, and the instruction information indicates the another electronic device to reset a clock value of the another electronic device based on a clock value of the electronic device, so that the clock value of the electronic device is kept synchronized with the clock value of the another electronic device as much as possible. For example, the synchronization message may be a time synchronization start message in FIG. 8(a).

It may be understood that, in this embodiment, the synchronization message is sent by the mobile phone 100 to the tag device 200, and indicates the tag device 200 to reset the tag clock value of the tag device 200 based on the mobile phone clock value of the mobile phone 100, to ensure that the mobile phone clock value of the mobile phone 100 is kept synchronized with the tag clock value of the tag device 200 as much as possible.

In some implementations of this application, the mobile phone 100 includes a mobile phone local clock, and a clock value of the mobile phone local clock is the mobile phone clock value $T_{Sync}$. The tag device 200 includes a tag local clock. The mobile phone 100 sends a synchronization message to the tag device 200. After receiving the synchronization message, the tag device 200 sets a tag clock value of the tag local clock of the tag device 200 based on the mobile phone clock value $T_{Sync}$ carried in the synchronization message.

It is easily understood that, in some other embodiments, the synchronization message is sent by the tag device 200 to the mobile phone 100, and indicates the mobile phone 100 to reset the mobile phone clock value of the mobile phone 100 based on the tag clock value of the tag device 200, to ensure that the mobile phone clock value of the mobile phone 100 is kept synchronized with the tag clock value of the tag device 200 as much as possible.

In some implementations of this application, the tag device 200 includes a tag local clock, and a clock value of the tag local clock is a tag clock value $T_{Sync}$'. The mobile phone 100 includes a mobile phone local clock. The tag device 200 sends a synchronization message to the mobile phone 100. After receiving the synchronization message, the mobile phone 100 sets a mobile phone clock value of the mobile phone local clock of the mobile phone 100 based on the tag clock value $T_{Sync}$' carried in the synchronization message.

Based on this, any embodiment in which the mobile phone clock value of the mobile phone 100 and/or the tag clock value of the tag device 200 are/is set to ensure that the mobile phone clock value of the mobile phone 100 is kept synchronized with the tag clock value of the tag device 200 as much as possible falls within the protection scope of this application. This is not specifically limited in this application.

In the foregoing embodiment, the mobile phone clock value of the mobile phone 100 is kept synchronized with the tag clock value of the tag device 200 by using the synchronization message. That is, a time deviation between the mobile phone 100 and the tag device 200 is minimized, so that difficulty of Bluetooth based time synchronization between the mobile phone 100 and the tag device 200 is reduced.

In some embodiments of this application, the synchronization message further includes a quantity N of time synchronization subprocesses in the Bluetooth based time synchronization process. The mobile phone 100 and/or the tag device 200 may determine, based on the quantity N of time synchronization subprocesses in the synchronization message, a quantity of time synchronization subprocesses that need to be performed.

In some other embodiments of this application, the mobile phone 100 and/or the tag device 200 obtain/obtains the quantity N of time synchronization subprocesses in the Bluetooth based time synchronization process by using another transmission signal. This is not specifically limited in this application.

S902: The mobile phone 100 performs the Bluetooth based time synchronization with the tag device 200; and the mobile phone 100 determines a sub-time offset $\Delta_i$ (where i = 1, 2, 3, ..., or N) corresponding to each time synchronization subprocess in the Bluetooth based time synchronization process, and when the time synchronization subprocess meets a preset adjustment condition, adjusts, according to preset adjustment logic, the sub-time offset $\Delta_i$ corresponding to each time synchronization subprocess, to obtain an adjusted sub-time offset $\Delta_j$ (where j = 1, 2, 3, ..., or M) corresponding to the Bluetooth based time synchronization process, where $N \geq M$.

It can be learned from FIG. 8(a) that the Bluetooth based time synchronization process includes the plurality of time synchronization subprocesses. The Bluetooth based time synchronization process refers to an entire transmission process of a Bluetooth signal between the mobile phone 100 and the tag device 200 in an entire Bluetooth based time synchronization solution. The time synchronization subprocess refers to a transmission period of the Bluetooth signal between the mobile phone 100 and the tag device 200. The Bluetooth based time synchronization process includes several time synchronization subprocesses.

In some implementations of this application, the Bluetooth based time synchronization includes the N time synchronization subprocesses that are sequentially performed. Each time synchronization subprocess corresponds to a start time synchronization frame (which may be understood as a 1st transmission signal in the time synchronization subprocess). The start time synchronization frames of the N time synchronization subprocesses are sequentially performed. For example, in the Bluetooth based time synchronization, in the N time synchronization subprocesses, after a former time synchronization subprocess is completed, a latter time synchronization subprocess is performed. For another example, in the N time synchronization subprocesses, a former time synchronization subprocess has been performed, but a latter time synchronization subprocess has been performed before the former time synchronization subprocess is completed. This is not specifically limited in this application.

For ease of description and understanding, the following describes a specific process in detail by using one of the time synchronization subprocesses as an example.

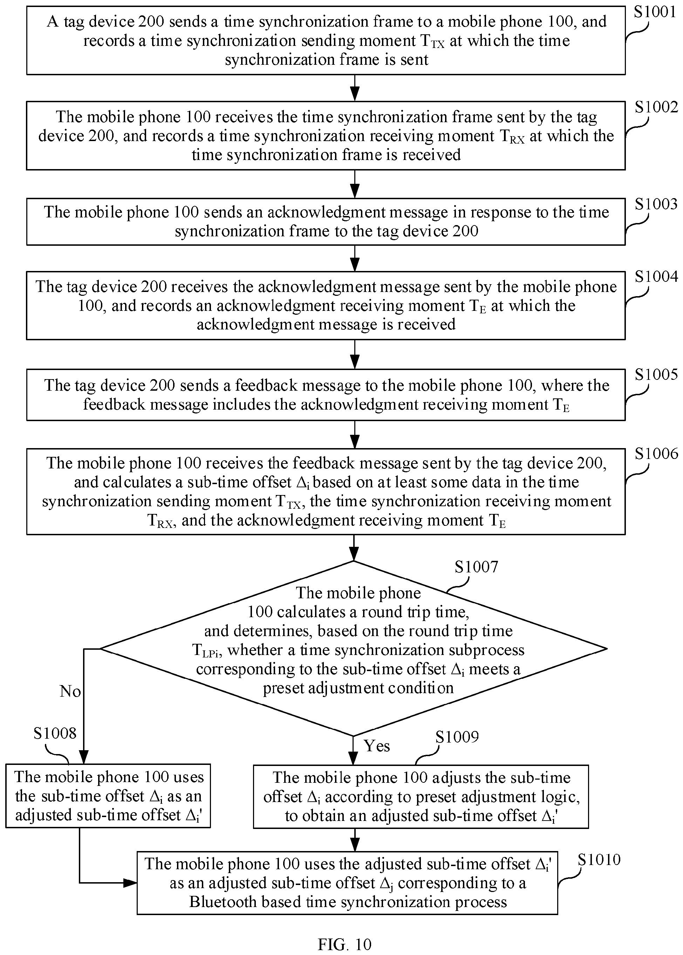

FIG. 10 is a flowchart of a time synchronization solution in one of the time synchronization subprocesses in FIG. 8(a). The following describes in detail the time synchronization solution in one of the time synchronization subprocesses in this application with reference to FIG. 8(a), FIG. 8(b), and FIG. 10. As shown in FIG. 10, the time synchronization solution in one of the time synchronization subprocesses in this application specifically includes the following steps.

S1001: The tag device 200 sends a time synchronization frame to the mobile phone 100, and records a time synchronization sending moment $T_{TX}$ at which the time synchronization frame is sent. The time synchronization frame refers to a Bluetooth signal used to implement time synchronization between the two electronic devices. The time synchronization sending moment $T_{TX}$ is a time that is recorded by the tag device 200 based on the local clock and at which the tag device 200 starts to send the time synchronization frame.

In some implementations of this application, the time synchronization frame may be request information carried in an indication. The indication is a lower-layer transmission signal triggered by an upper-layer application, and carries upper-layer data from the upper-layer application. Based on this, the time synchronization sending moment $T_{TX}$ may be upper-layer data. For example, the time synchronization sending moment $T_{TX}$ may be a time at which the upper-layer application writes data into a chip. $T_{TX}$ of the ith subprocess may be carried in a time synchronization frame in the ith subprocess. To be specific, an application layer in the tag device 200 reads a current system clock $T_{TXi}$, then generates the time synchronization frame in the ith subprocess based on the time $T_{TXi}$, and immediately writes the time synchronization frame in the i$^{th}$ subprocess into a Bluetooth chip, so that the device immediately sends the time synchronization frame in the i$^{th}$ subprocess through Bluetooth.

In some alternative implementations of this application, the time synchronization frame may be a transmission signal in another form. This is not specifically limited in this application.

In some embodiments of this application, the time synchronization frame may include a sequence number. The sequence number may be a SEQ in FIG. 8(a) and FIG. 8(b). The sequence number identifies a subprocess number index of the time synchronization subprocess. For example, a SEQ of a 1$^{st}$ time synchronization subprocess is equal to 1, a SEQ of a 2$^{nd}$ time synchronization subprocess is equal to 2, and so on. The mobile phone 100 may determine, based on the SEQ, a specific time synchronization subprocess to which the time synchronization frame corresponds.

S1002: The mobile phone 100 receives the time synchronization frame sent by the tag device 200, and records a time synchronization receiving moment $T_{RX}$ at which the time synchronization frame is received. The time synchronization receiving moment $T_{RX}$ is a time that is recorded by the mobile phone 100 based on the local clock and at which the mobile phone 100 receives the time synchronization frame.

It should be noted that, because the time synchronization sending moment $T_{TX}$ is the time recorded by the tag device 200 based on the local clock, to ensure that the mobile phone 100 can implement the time synchronization solution between the mobile phone 100 and the tag device 200 by using the time synchronization sending moment $T_{TX}$, the time synchronization sending moment $T_{TX}$ needs to be sent to the mobile phone 100. The following briefly describes several sending manners in which the tag device 200 sends the time synchronization sending moment $T_{TX}$ to the mobile phone 100.

In some embodiments of this application, the tag device 200 sends the time synchronization sending moment $T_{TX}$ to the mobile phone 100 by using another transmission signal. Specifically, after the tag device 200 sends the time synchronization frame to the mobile phone 100, the tag device 200 sends the time synchronization sending moment $T_{TX}$ corresponding to the time synchronization frame to the mobile phone 100 by using another transmission signal.

In some implementations of this application, the another transmission signal may be a transmission signal in any subsequent subprocess. For example, the tag device 200 sends, to the mobile phone 100 by using the time synchronization frame corresponding to the i$^{th}$ time synchronization subprocess, a time synchronization sending moment $T_{TX(i-1)}$ corresponding to an (i-1)$^{th}$ time synchronization subprocess. That is, the time synchronization frame in the i$^{th}$ time synchronization subprocess that is sent by the tag device 200 to the mobile phone 100 carries the time synchronization sending moment $T_{TX(i-1)}$ corresponding to the (i-1)$^{th}$ time synchronization subprocess.

In some other alternative implementations of this application, the another transmission signal may be a separate transmission signal after the time synchronization frame. Details are not described herein.

In addition, it can be learned from the above that, in some application scenarios, the time synchronization sending moment $T_{TX}$ may be the upper-layer data. That is, the time synchronization sending moment $T_{TX}$ may be a time determined before the tag device 200 sends the time synchronization frame. For example, the time synchronization sending moment $T_{TX}$ may be a current system time read by the tag device 200 before the tag device 200 sends the time synchronization frame. Based on this, in some other embodiments of this application, the time synchronization sending moment $T_{TX}$ is carried in the time synchronization frame. For example, the tag device 200 sends, to the mobile phone 100 by using the time synchronization frame corresponding to the i$^{th}$ time synchronization subprocess, the time synchronization sending moment $T_{TXi}$ corresponding to the i$^{th}$ time synchronization subprocess.

S1003: The mobile phone 100 sends an acknowledgment message in response to the time synchronization frame to the tag device 200. The acknowledgment message refers to a spontaneous message of the mobile phone 100 in response to the time synchronization frame at a Bluetooth protocol layer, and the spontaneous message is not a message actively sent by an upper-layer application in the mobile phone 100.

In some implementations of this application, the acknowledgment message may be a confirm. The confirm is a spontaneous message of the mobile phone 100 in response to the indication at the Bluetooth protocol layer. The confirm does not carry upper-layer data.

S1004: The tag device 200 receives the acknowledgment message sent by the mobile phone 100, and records an acknowledgment receiving moment $T_E$ at which the acknowledgment message is received. The acknowledgment receiving moment $T_E$ refers to a time that is recorded by the tag device 200 based on the local clock and at which the tag device 200 receives the acknowledgment message.

In some implementations of this application, the acknowledgment receiving moment $T_E$ may be a callback time reported by a bottom-layer chip in the tag device 200 after the bottom-layer chip receives the confirm. That is, the acknowledgment receiving moment $T_E$ may be a time that is recorded by the tag device 200 based on the local clock and at which the tag device 200 receives the confirm.

S1005: The tag device 200 sends a feedback message to the mobile phone 100, where the feedback message includes the acknowledgment receiving moment $T_E$. The feedback message refers to a message that is sent by the tag device 200 to the mobile phone 100 and that is used to carry the acknowledgment receiving moment $T_E$.

It should be noted that, because the acknowledgment receiving moment $T_E$ is the time recorded by the tag device 200 based on the local clock, to ensure that the mobile phone 100 can implement the time synchronization solution between the mobile phone 100 and the tag device 200 by using the acknowledgment receiving moment $T_E$, the acknowledgment receiving moment $T_E$ needs to be sent to the mobile phone 100. The following briefly describes several sending manners in which the tag device 200 sends the acknowledgment receiving moment $T_E$ to the mobile phone 100.

In some embodiments of this application, the feedback message may be another transmission signal used by the tag device 200 to obtain the acknowledgment receiving moment $T_E$.

In some implementations of this application, the another transmission signal may be a time synchronization frame in a subsequent time synchronization subprocess. In other words, the feedback message may reuse the time synchronization frame corresponding to the subsequent time synchronization subprocess. For example, as shown in FIG. 8(a), the tag device 200 sends, to the mobile phone 100 by using the time synchronization frame corresponding to the $i^{th}$ time synchronization subprocess, an acknowledgment receiving moment $T_{Ei}$ corresponding to an $(i-1)^{th}$ time synchronization subprocess. That is, the time synchronization frame in the $i^{th}$ time synchronization subprocess that is sent by the tag device 200 to the mobile phone 100 carries the acknowledgment receiving moment $T_{E(i-1)}$ corresponding to the $(i-1)^{th}$ time synchronization subprocess.

In some other alternative implementations of this application, another transmission signal may be a separate frame. In other words, the feedback message is separately sent by the tag device 200 to the mobile phone 100 after the tag device 200 receives the acknowledgment message sent by the mobile phone 100. This is not specifically limited in this application.

In some embodiments of this application, based on the multiplex transmission solution in FIG. 8(a), an acknowledgment receiving moment $T_{EN}$ in an $N^{th}$ time synchronization subprocess cannot be transmitted to the mobile phone 100. Because the mobile phone 100 does not receive the acknowledgment receiving moment $T_{EN}$, a time synchronization sending moment $T_{TXN}$ and a time synchronization receiving moment $T_{RXN}$ that correspond to the $N^{th}$ time synchronization subprocess cannot be used. Therefore, only data in the first N-1 subprocesses is actually available in the N time synchronization subprocesses.

In some other embodiments of this application, after the mobile phone 100 sends a confirm$_N$ to the tag device 200, the mobile phone 100 may feed back the acknowledgment receiving moment $T_{EN}$ by using a separate frame, so that data (for example, the time synchronization sending moment $T_{TXN}$ and the time synchronization receiving moment $T_{RXN}$) in the $N^{th}$ time synchronization subprocess can also be effectively used by the mobile phone 100.

S1006: The mobile phone 100 receives the feedback message, and calculates a sub-time offset $\Delta_i$ based on at least some data in the time synchronization sending moment $T_{TX}$, the time synchronization receiving moment $T_{RX}$, and the acknowledgment receiving moment $T_E$. The sub-time offset represents an offset value between a clock time of the mobile phone 100 and a clock time of the tag device 200 that is obtained based on the time synchronization subprocess in the Bluetooth based time synchronization process.

In some implementations of this application, the sub-time offset may be represented by the clock time of the mobile phone 100 minus the clock time of the tag device 200. In some other alternative implementations of this application, the sub-time offset may be represented by the clock time of the tag device 200 minus the clock time of the mobile phone 100. For ease of description and understanding, the following uses the former implementation as an example for description.

In some embodiments of this application, for the $i^{th}$ time synchronization subprocess, the mobile phone 100 calculates, based on the time synchronization sending moment $T_{TXi}$ and a time synchronization receiving moment $T_{RXi}$ that correspond to the $i^{th}$ time synchronization subprocess, a sub-time offset $\Delta_{i1}$ corresponding to the $i^{th}$ time synchronization subprocess. In some implementations of this application, the sub-time offset $\Delta_{i1}$ corresponding to the $i^{th}$ time synchronization subprocess may be calculated by using a formula (4):

$$\Delta_{i1} = T_{RXi} - T_{TXi} \tag{4}$$

In the formula (4), $\Delta_{i1}$ is the sub-time offset determined based on the $i^{th}$ time synchronization subprocess, $T_{RXi}$ is the time synchronization receiving moment in the $i^{th}$ time synchronization subprocess, and $T_{RXi}$ is the time synchronization sending moment in the $i^{th}$ time synchronization subprocess.

It may be understood that, when the sub-time offset $\Delta_{i1} = T_{RXi} - T_{TXi}$, S1006 may be performed after the mobile phone 100 obtains the time synchronization sending moment $T_{TXi}$ and the time synchronization receiving moment $T_{RXi}$. A specific sequence of performing S1006 is not specifically limited in this application. For example, S1006 may alternatively be performed between S1002 and S1003. For another example, S1006 may alternatively be performed between S1003 and S1004. This is not specifically limited in this application.

In some other embodiments of this application, for the $i^{th}$ time synchronization subprocess, the mobile phone 100 calculates, based on the time synchronization receiving moment $T_{RX}$ and the acknowledgment receiving moment $T_E$ that correspond to the $i^{th}$ time synchronization subprocess, a sub-time offset $\Delta_{i2}$ corresponding to the $i^{th}$ time synchronization subprocess. In some implementations of this application, the sub-time offset $\Delta_{i2}$ corresponding to the $i^{th}$ time synchronization subprocess may alternatively be calculated by using a formula (5):

$$\Delta_{i2} = T_{RXi} - T_{Ei} \tag{5}$$

In the formula (5), $\Delta_{i2}$ is the sub-time offset determined based on the $i^{th}$ time synchronization subprocess, $T_{RXi}$ is the time synchronization receiving moment the $i^{th}$ time synchronization subprocess, and $T_{Ei}$ is the acknowledgment receiving moment in the $i^{th}$ time synchronization subprocess.

It may be understood that, when the sub-time offset $\Delta_{i2} = T_{RXi} - T_{Ei}$, S1006 may be performed after the mobile phone 100 obtains the time synchronization receiving moment $T_{RXi}$ and the acknowledgment receiving moment $T_{Ei}$. This is not specifically limited in this application. For example, S1006 may alternatively be performed between S1002 and S1003. For another example, S1006 may alternatively be performed between S1003 and S1004. This is not specifically limited in this application.

In some other embodiments of this application, for one of the time synchronization subprocesses, the mobile phone 100 calculates, based on time synchronization sending moments $T_{TX}$, time synchronization receiving moments $T_{RX}$, and acknowledgment receiving moments $T_E$ that correspond to the time synchronization subprocess and several time synchronization subprocesses adjacent to the time synchronization subprocess, a sub-time offset $\Delta_i$ corresponding to the time synchronization subprocess.

For example, the mobile phone 100 calculates, based on the time synchronization sending moments $T_{TX}$, the time synchronization receiving moments $T_{RX}$, and the acknowledgment receiving moment $T_E$ in the time synchronization subprocess and the several adjacent round time synchronization subprocesses, an average time synchronization sending moment $T_{TX}'$, an average time synchronization receiving moment $T_{RX}'$, and an average acknowledgment receiving moment $T_E'$ that correspond to the time synchronization subprocess. Then, the mobile phone 100 calculates, based on the average time synchronization sending moment $T_{TX}'$, the average time synchronization receiving moment $T_{RX}'$, and the average acknowledgment receiving moment $T_E'$ that correspond to the time synchronization subprocess, the sub-time offset $\Delta_i$ corresponding to the time synchronization subprocess. Details are not described herein.

It should be noted that, in a "Bluetooth + ultrasonic" joint unidirectional distance measurement solution, the sub-time offset $\Delta_{i1}$ is different from the sub-time offset $\Delta_{i2}$. A difference between the sub-time offset $\Delta_{i1}$ and the sub-time offset $\Delta_{i2}$ is related to a Bluetooth interval (Bluetooth Interval, BI) $T_0$ corresponding to the current time synchronization subprocess. The Bluetooth interval $T_0$ is a connection interval defined in a Bluetooth protocol, and a value of the Bluetooth interval $T_0$ is an integer multiple of 1.25 ms.

In some embodiments of this application, $\Delta_{i1} - \Delta_{i2} = 2 * T_0$, that is, $(T_{RXi} - T_{TXi}) - (T_{RXi} - T_{Ei}) = 2 * T_0$.

In the Bluetooth based time synchronization process, a Bluetooth signal is transmitted between the mobile phone 100 and the tag device 200.

In some embodiments of this application, the Bluetooth interval $T_0$ is stored in local information of the mobile phone 100, and the mobile phone 100 may obtain the Bluetooth interval $T_0$ from the local information. Specifically, in some implementations of this application, a Bluetooth chip of the mobile phone 100 can report the Bluetooth interval $T_0$. In some other alternative implementations of this application, a mobile phone chip of the mobile phone 100 supports the upper-layer application in querying for the Bluetooth interval $T_0$.

In some embodiments of this application, the tag device 200 stores the Bluetooth interval $T_0$, and the tag device 200 feeds back the Bluetooth interval $T_0$ to the mobile phone 100 by using a transmission signal. It may be understood that a specific form of the transmission signal is not specifically limited in this application, and any transmission signal that can be used to feed back the Bluetooth interval $T_0$ to the mobile phone 100 falls within the protection scope of this application.

In some embodiments of this application, Bluetooth intervals $T_0$ corresponding to all the time synchronization subprocesses in the Bluetooth based time synchronization process are equal, that is, the Bluetooth interval $T_0$ is a fixed value. In some implementations of this application, before the time synchronization start message, the tag device 200 may feed back the Bluetooth interval $T_0$ to the mobile phone 100 by using any transmission signal (for example, a Bluetooth message). In some other alternative implementations of this application, the tag device 200 may feed back the Bluetooth interval $T_0$ to the mobile phone 100 by using any transmission signal (for example, a Bluetooth message) in the Bluetooth based time synchronization process or after the Bluetooth based time synchronization process ends. It may be understood that the tag device 200 may feed back Bluetooth intervals $T_0$ of a plurality of time synchronization subprocesses to the mobile phone 100 by using one transmission signal (for example, a Bluetooth message). The tag device 200 may feed back Bluetooth intervals $T_0$ of a plurality of time synchronization subprocesses to the mobile phone 100 by using a plurality of transmission signals (for example, Bluetooth messages). This is not specifically limited in this application.

In some other embodiments of this application, Bluetooth intervals $T_0$ corresponding to all the time synchronization subprocesses in the Bluetooth based time synchronization process are not exactly the same, that is, the Bluetooth interval $T_0$ is a variable. In some implementations of this application, the tag device 200 obtains a Bluetooth interval $T_{0i}$ corresponding to the current subprocess, and may feed back the Bluetooth interval $T_{0i}$ to the mobile phone 100 by using any transmission signal (for example, a Bluetooth message) after the tag device 200 obtains the Bluetooth interval $T_{0i}$. Specifically, the mobile phone 100 may obtain, in the following several possible manners, the Bluetooth interval $T_0$ corresponding to the current time synchronization subprocess.

In some implementations of this application, the time synchronization frame sent by the tag device 200 to the mobile phone 100 carries the Bluetooth interval $T_0$ corresponding to the current time synchronization subprocess. That is, the tag device 200 sends, to the mobile phone 100 by using the time synchronization frame, the Bluetooth interval $T_0$ corresponding to the current time synchronization subprocess.

In some other alternative implementations of this application, the separate frame sent by the tag device 200 to the mobile phone 100 carries the Bluetooth interval $T_0$. That is, the tag device 200 sends the Bluetooth interval $T_0$ to the mobile phone 100 by using the separate frame.

It may be understood that, when a Bluetooth interval $T_0$ corresponding to a time synchronization subprocess in the Bluetooth based time synchronization process is different from a Bluetooth interval $T_0$ corresponding to another time synchronization subprocess, a sub-time offset corresponding to the time synchronization subprocess is deleted.

S1007: The mobile phone 100 calculates a round trip time $T_{LPi}$, and determines, based on the round trip time $T_{LPi}$, whether the time synchronization subprocess corresponding to the sub-time offset $\Delta_i$ meets the preset adjustment condition. If a determining result is no, the time synchronization subprocess does not meet the preset adjustment condition, indicating that the sub-time offset $\Delta_i$ corresponding to the time synchronization subprocess meets a preset requirement (for example, falls within the convergence range described above). That is, the sub-time offset $\Delta_i$ does not need to be adjusted, and S1008 is performed. Otherwise, if a determining result is yes, the time synchronization subprocess meets the preset adjustment condition, and the sub-time offset $\Delta_i$ corresponding to the time synchronization subprocess does not meet a preset requirement (for example, falls beyond the convergence range described above). That is, the sub-time offset $\Delta_i$ needs to be adjusted, and S1009 is performed.

The round trip time $T_{LPi}$ refers to duration of a group of round-trip transmission signals in one time synchronization subprocess. In some implementations of this application, the group of round-trip transmission signals may be the time synchronization frame sent by the tag device 200 to the mobile phone 100 and the acknowledgment message sent by the mobile phone 100 to the tag device 200 in response to the time synchronization frame. Based on this, the round trip time $T_{LPi}$ may be duration between the time synchronization sending moment of the time synchronization frame in the time synchronization subprocess and the acknowledgment receiving moment of the acknowledgment message in the time synchronization subprocess.

Based on this, the round trip time $T_{LPi}$ of the time synchronization subprocess may be calculated by using a formula (6):

$$T_{LPi} = T_{Ei} - T_{TXi} \tag{6}$$

In the formula (6), $T_{LPi}$ is the round trip time of the $i^{th}$ time synchronization subprocess, $T_{Ei}$ is the acknowledgment receiving moment in the $i^{th}$ time synchronization subprocess, and $T_{TXi}$ is the time synchronization sending moment in the $i^{th}$ time synchronization subprocess.

It may be understood that, in some other embodiments of this application, in a time synchronization subprocess, a group of round-trip transmission signals may alternatively be transmission signals in another form. This is not specifically limited in this application.

The preset adjustment condition may be that the round trip time $T_{LPi}$ corresponding to the time synchronization subprocess falls within a preset round trip range. The preset round trip range may be a range other than a distribution range of the round trip time $T_{LPi}$ when the sub-time offset $\Delta_i$ converges. When a round trip time $T_{LPi}$ corresponding to a time synchronization subprocess falls within the preset round trip range, it indicates that the time synchronization subprocess meets the preset adjustment condition. That is, a sub-time offset $\Delta_i$ corresponding to the time synchronization subprocess needs to be adjusted. Otherwise, when a round trip time $T_{LPi}$ corresponding to a time synchronization subprocess falls beyond preset round trip range, it indicates that the time synchronization subprocess does not meet the preset adjustment condition. That is, a sub-time offset $\Delta_i$ corresponding to the time synchronization subprocess does not need to be adjusted.

In some implementations of this application, the preset adjustment condition may be that the round trip time $T_{LPi}$ corresponding to the time synchronization subprocess is greater than a first preset threshold $thr_1$. The first preset threshold $thr_1$ may be a parameter related to the Bluetooth interval $T_0$.

For example, the first preset threshold $thr_1$ may be calculated by using a formula (7):

$$thr_1 = 3 * 2 * T_0 + \varphi \tag{7}$$

In the formula (7), $thr_1$ represents the first preset threshold, $T_0$ represents the Bluetooth interval, and $0 < \varphi < 2 * T_0$.

In some specific implementations of this application, $\varphi = T_0$, that is, $thr_1 = 3T_0$. In this case, the preset adjustment condition may be that the round trip time $T_{LPi}$ corresponding to the time synchronization subprocess is greater than $3 * T_0$.

In some other alternative implementations of this application, the preset adjustment condition may alternatively be that the round trip time $T_{LPi}$ corresponding to the time synchronization subprocess is less than a second preset threshold $thr_2$, or the round trip time $T_{LPi}$ is greater than a third preset threshold $thr_3$. The second preset threshold $thr_2$ may be a parameter related to the Bluetooth interval $T_0$, and the third preset threshold $thr_3$ may also be a parameter related to the Bluetooth interval $T_0$.

For example, the second preset threshold $thr_2$ may be calculated by using a formula (8):

$$thr_2 = 2 * T_0 - \varepsilon \qquad (8)$$

In the formula (8), $thr_2$ represents the second preset threshold, $T_0$ represents the Bluetooth interval, and $0 < \varepsilon < T_0$.

$\varepsilon$ may be a small value. In some implementations, $0 < \varepsilon \leq 1$ ms. For example, $\varepsilon = 1$ ms.

For example, the third preset threshold $thr_3$ may be calculated by using a formula (9):

$$thr_3 = 2 * T_0 + \varepsilon \qquad (9)$$

In the formula (9), $thr_3$ represents the third preset threshold, $T_0$ represents the Bluetooth interval, and $0 < \varepsilon < T_0$.

$\varepsilon$ may be a small value. In some implementations, $0 < \varepsilon \leq 1$ ms. For example, $\varepsilon = 1$ ms.

Further, in some specific implementations of this application, for example, $\varepsilon = 1$ ms. In this case, the preset adjustment condition may be that the round trip time $T_{LPi}$ corresponding to the time synchronization subprocess is greater than $(2 * T_0 - 1)$ and less than $(2 * T_0 + 1)$.

S1008: The mobile phone 100 uses the sub-time offset $\Delta_i$ as an adjusted sub-time offset $\Delta_i'$, and then performs S1010.

In some embodiments of this application, when the mobile phone 100 determines, based on the round trip time $T_{LPi}$, that the time synchronization subprocess corresponding to the sub-time offset $\Delta_i$ does not meet the preset adjustment condition, that is, the round trip time $T_{LPi}$ corresponding to the time synchronization subprocess falls beyond the preset round trip range, the mobile phone 100 does not need to adjust the sub-time offset $\Delta_i$, but may directly use the sub-time offset $\Delta_i$ as the adjusted sub-time offset $\Delta_i'$. It may be understood that the adjusted sub-time offset $\Delta_i'$ is a concept relative to the time synchronization subprocess.

S1009: The mobile phone 100 adjusts the sub-time offset $\Delta_i$ according to the preset adjustment logic, to obtain the adjusted sub-time offset $\Delta_i'$, and then performs S1010.

In some embodiments of this application, when the mobile phone 100 determines, based on the round trip time $T_{LPi}$, that the time synchronization subprocess corresponding to the sub-time offset $\Delta_i$ meets the preset adjustment condition, that is, the round trip time $T_{LPi}$ falls within the preset round trip range, the mobile phone 100 needs to adjust the sub-time offset $\Delta_i$ according to the preset adjustment logic, to obtain the adjusted sub-time offset $\Delta_i'$.

In some implementations of this application, the preset adjustment logic may be preset correction logic. The correction logic is preset instruction information indicating the mobile phone 100 to correct the sub-time offset $\Delta_i$. The mobile phone 100 may correct the sub-time offset $\Delta_i$ according to the preset correction logic, to obtain the corrected sub-time offset $\Delta_i'$.

For example, when determining that the round trip time $T_{LPi}$ is greater than the first preset threshold $thr_1$, the mobile phone 100 subtracts a correction compensation amount $\delta$ from the sub-time offset value $\Delta_i$. It may be understood that the correction compensation amount $\delta$ may be an empirical value obtained through model training.

Specifically, the correction compensation amount $\delta$ may be obtained in the following manner: The chip in the mobile phone 100 and the chip in the tag device 200 are determined, and the sub-time offset $\Delta_i$ corresponding to each time synchronization subprocess is measured. Then, a difference between a sub-time offset with a large fluctuation range and another sub-time offset is measured from the measured sub-time offsets $\Delta_i$, and the measured difference is used as the correction compensation amount $\delta$.

In some implementations of this application, the correction compensation amount $\delta$ may be the Bluetooth interval $T_0$.

The foregoing process is performed based on measured data. The sub-time offset value is shown in FIG. 7(a). A sub-time offset in an initial phase has a large error. If the first W subprocesses are directly used to calculate an average time offset, when W is set to different values (for example, W = 20, 40, 60, 80, or 100), a comprehensive time offset clearly greatly differs. Therefore, $thr_1$ may be set to 45 ms, delta may be set to 15 ms, and the sub-time offset is corrected based on the round trip time in FIG. 7(b). In this case, the corrected sub-time offset is shown in FIG. 7(c). It is easily found through comparison between FIG. 7(a) and FIG. 7(c) that, based on the corrected sub-time offset, regardless of a value of W, the comprehensive time offset $\Delta$ is a stable value.

In some other alternative implementations of this application, the preset adjustment logic may be preset filtering logic. The filtering logic is preset instruction information indicating the mobile phone 100 to filter the sub-time offset $\Delta_i$. The mobile phone 100 may further filter the sub-time offset $\Delta_i$ according to the preset filtering logic, to obtain the sub-time offset $\Delta_i$' that is sifted out. The filtering logic may be: filtering out a sub-time offset $\Delta_i$ corresponding to a time synchronization subprocess when the round trip time $T_{LPi}$ meets the preset adjustment condition, and reserving a sub-time offset $\Delta_i$ corresponding to a time synchronization subprocess when the round trip time $T_{LPi}$ does not meet the preset adjustment condition. The mobile phone 100 filters, by using the preset filtering logic, the sub-time offsets $\Delta_i$ corresponding to the N time synchronization subprocesses, to obtain M sub-time offsets $\Delta_i$' that are sifted out, where $N \geq M$.

Based on this, the mobile phone 100 may filter out, by using the filtering logic, the sub-time offset $\Delta_i$ corresponding to the time synchronization subprocess when the round trip time $T_{LPi}$ meets the preset adjustment condition, and reserve the sub-time offset $\Delta_i$ corresponding to the time synchronization subprocess when the round trip time $T_{LPi}$ does not meet the preset adjustment condition. The sub-time offset that is sifted out is denoted as $\Delta_i$'. For example, when determining that the round trip time $T_{LPi}$ is less than the second preset threshold thr$_2$, or the round trip time $T_{LPi}$ is greater than the third preset threshold thr$_3$, the mobile phone 100 deletes the sub-time offset $\Delta_i$ corresponding to the time synchronization subprocess; or when determining that the round trip time $T_{LPi}$ of the time synchronization subprocess is greater than or equal to the second preset threshold thr$_2$ and less than or equal to the third preset threshold thr$_3$, the mobile phone 100 reserves the sub-time offset $\Delta_i$ corresponding to the time synchronization subprocess.

It should be noted that, in the foregoing implementation, the mobile phone 100 may correct the sub-time offset $\Delta_i$ by using the correction logic, or may filter the sub-time offset $\Delta_i$ by using the filtering logic. However, the foregoing implementation is only a part of implementations in which the mobile phone 100 adjusts the sub-time offset $\Delta_i$. In some other implementations of this application, in this application, the mobile phone 100 may further adjust the sub-time offset $\Delta_i$ by using a combination of the foregoing two implementations. This is not specifically limited in this application.

For example, the mobile phone 100 first corrects the sub-time offset $\Delta_i$ by using the correction logic, to obtain the corrected sub-time offset $\Delta_i$', and then the mobile phone 100 filters the corrected sub-time offset $\Delta_i$' by using the filtering logic, to obtain a sub-time offset $\Delta_i$" that is sifted out. That is, the mobile phone 100 first compensates for the sub-time offset $\Delta_i$, and then filters a sub-time offset $\Delta_i$' that is obtained through compensation, to determine whether to discard the sub-time offset $\Delta_i$'.

For another example, the mobile phone 100 first filters the sub-time offset $\Delta_i$ by using the filtering logic, to obtain the sub-time offset $\Delta_i$' that is sifted out, and then the mobile phone 100 corrects the sub-time offset $\Delta_i$' that is sifted out, to obtain the corrected sub-time offset $\Delta_i$". That is, the mobile phone 100 first filters the sub-time offset $\Delta_i$ to determine whether to discard the sub-time offset $\Delta_i$, and then compensates for the reserved sub-time offset $\Delta_i$'.

S1010: The mobile phone 100 uses the adjusted sub-time offset $\Delta_i$' as the adjusted sub-time offset $\Delta_j$ corresponding to the Bluetooth based time synchronization process. A value range of j is j = 1, 2, 3, ..., or M, and $N \geq M$.

The foregoing embodiment is only a part of implementations of the time synchronization solution in one of the time synchronization subprocesses in this application. Any implementation of a time synchronization solution in which the tag device 200 can send a time synchronization frame to the mobile phone 100, the mobile phone 100 can send an acknowledgment message in response to the time synchronization frame to the tag device 200, and the tag device 200 can send a time synchronization sending moment $T_{TX}$ and an acknowledgment receiving moment $T_E$ to the mobile phone 100 falls within the protection scope of this application, and is not described one by one in this application.

It may be understood that the Bluetooth based time synchronization process includes the plurality of time synchronization subprocesses. After the time synchronization solution in one of the subprocesses is described, the following briefly describes the following several Bluetooth based time synchronization processes.

In some implementations of this application, the mobile phone 100 and the tag device 200 sequentially complete a plurality of time synchronization subprocesses. That is, after a former time synchronization subprocess between the mobile phone 100 and the tag device 200 ends, a latter time synchronization subprocess between the mobile phone 100 and the tag device 200 starts.

In some implementations of this application, the mobile phone 100 and the tag device 200 complete a plurality of time synchronization subprocesses in an interleaving manner. That is, before a former time synchronization subprocess between the mobile phone 100 and the tag device 200 ends, a latter time synchronization subprocess between the mobile phone 100 and the tag device 200 has started.

It may be understood that, in some implementations of this application, when the mobile phone 100 and the tag device 200 complete the plurality of time synchronization subprocesses in the interleaving manner, time synchronization steps in different time synchronization subprocesses may be combined into one step. Details are not described herein.

In some implementations of this application, after S1001 to S1006 corresponding to the plurality of time synchronization subprocesses are completed between the mobile phone 100 and the tag device 200, S1007 to S1010 corresponding to the plurality of time synchronization subprocesses are performed. An execution sequence of S1001 to S1006 corresponding to the plurality of time synchronization subprocesses is not specifically limited in this application, and an execution sequence of S1007 to S1010 corresponding to the plurality of time synchronization subprocesses is not specifically limited in this application either.

It may be understood that the foregoing implementations are a part of implementations of the plurality of time synchronization subprocesses between the mobile phone 100 and the tag device 200. The plurality of time synchronization subprocesses between the mobile phone 100 and the tag device 200 in this application may alternatively be obtained by dividing and combining the foregoing implementations. Any implementation in which the plurality of time synchronization subprocesses can be completed between the mobile phone 100 and the tag device 200 falls within the protection scope of this application, and is not described herein one by one.

S903: The mobile phone 100 obtains a comprehensive time offset $\Delta$ between the mobile phone 100 and the tag device 200 based on the adjusted sub-time offset $\Delta_j$ (where j = 1, 2, 3, ..., or M) corresponding to the Bluetooth based time synchronization process.

The comprehensive time offset represents an offset value between the clock time of the mobile phone 100 and the clock time of the tag device 200 that is obtained based on an entire Bluetooth based time synchronization process.

In some embodiments of this application, the mobile phone 100 determines the comprehensive time offset $\Delta$ between the mobile phone 100 and the tag device 200 based on the adjusted sub-time offset $\Delta_j$. In some implementations of this application, the mobile phone 100 uses an average value of M adjusted sub-time offsets $\Delta_j$ as the comprehensive time offset $\Delta$ between the mobile phone 100 and the tag device 200.

In the foregoing embodiment, bidirectional time synchronization in PTP based time synchronization is adjusted to unidirectional time synchronization, so that time synchronization duration is shorter. This is more conducive to real-time application, is time-saving, and improves practicability. In addition, the sub-time offset is adjusted, so that abnormal sub-time offsets in the time synchronization subprocesses are reduced, thereby improving accuracy and stability of the comprehensive time offset. When the comprehensive time offset is used for distance calculation, distance measurement precision can be improved compared with the PTP based time synchronization.

It should be specially noted that, when the sub-time offset may be represented by the clock time of the mobile phone 100 minus the clock time of the tag device 200, the sub-time offset between the mobile phone 100 and the tag device 200 may be calculated in a manner of $\Delta_{i1} = T_{RXi} - T_{TXi}$ or $\Delta_{i2} = T_{RXi} - T_{Ei}$. Based on this, when the solution is applicable to the foregoing distance measurement algorithm, $L = v * [t_2 - (t_1 + \Delta - \Delta_0)]$. L is a distance between the mobile phone 100 and the tag device 200, v is a speed of sound, $t_1$ is an ultrasonic sending moment, $t_2$ is an ultrasonic receiving moment, $\Delta$ is the comprehensive time offset between the mobile phone 100 and the tag device 200, and $\Delta_0$ is a time compensation value between the mobile phone 100 and the tag device 200.

However, when the sub-time offset may be represented by the clock time of the tag device 200 minus the clock time of the mobile phone 100, the sub-time offset between the mobile phone 100 and the tag device 200 may be calculated in a manner of $\Delta_{i1} = T_{TXi} - T_{RXi}$ or $\Delta_{i2} = T_{Ei} - T_{RXi}$. Based on this, when the solution is applicable to the foregoing distance measurement algorithm, $L = v * [t_2 - (t_1 - \Delta + \Delta_0)]$. L is a distance between the mobile phone 100 and the tag device 200, v is a speed of sound, $t_1$ is the ultrasonic sending moment, $t_2$ is the ultrasonic receiving moment, $\Delta$ is the comprehensive time offset between the mobile phone 100 and the tag device 200, and $\Delta_0$ is a time compensation value between the mobile phone 100 and the tag device 200.

Application scenario 2

In the application scenario 2, a mobile phone 100 sends a time synchronization frame to a tag device 200, and then the tag device 200 feeds back an acknowledgment message to the mobile phone 100. In addition, the tag device 200 needs to send a response frame to the mobile phone 100. Based on this, a Bluetooth based time synchronization solution applicable to the application scenario 2 may also be defined as a forward-unidirectional-Bluetooth based time synchronization solution.

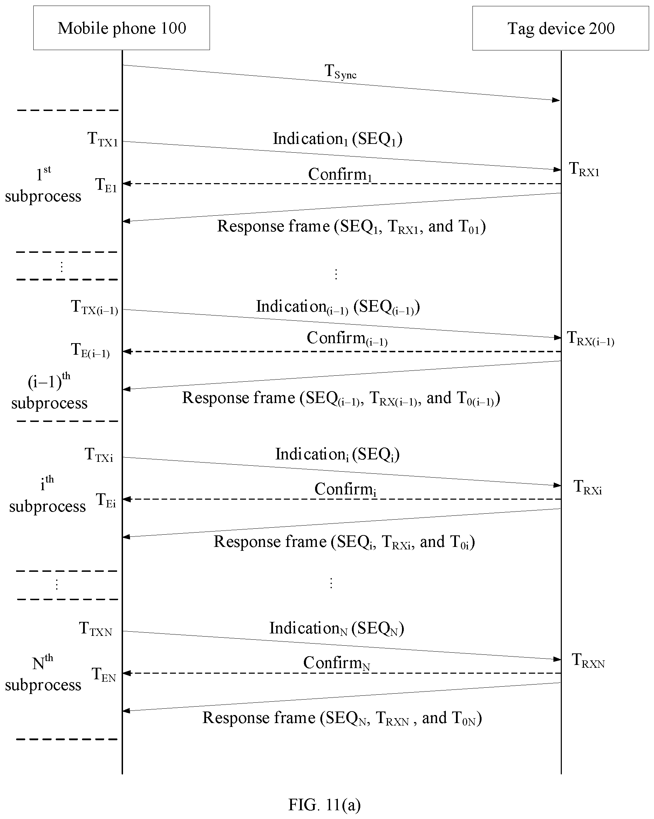

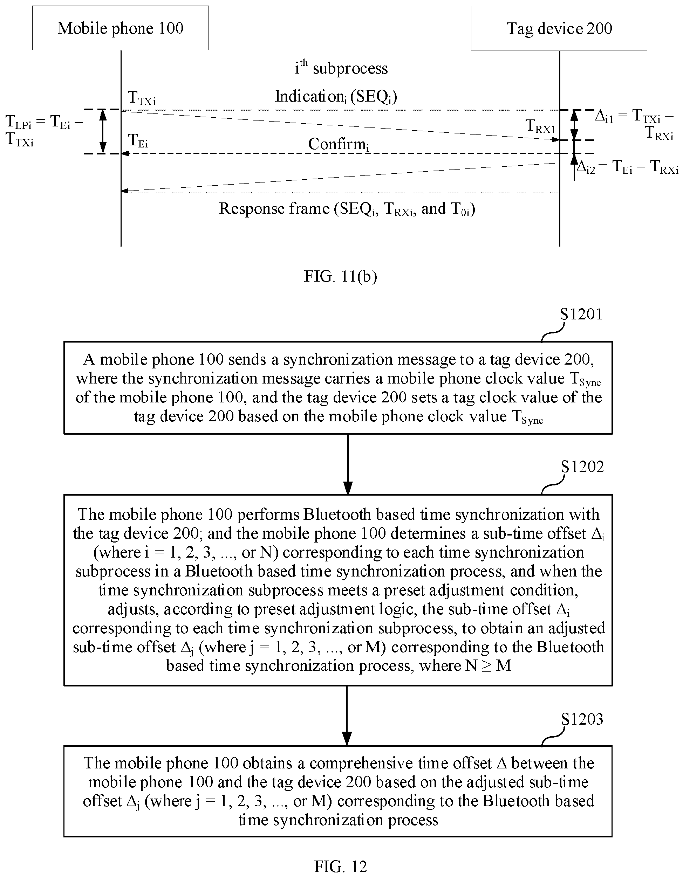

FIG. 11(a) is an interaction diagram of the forward-unidirectional-Bluetooth based time synchronization solution according to some embodiments of this application. FIG. 11(b) is an interaction diagram of an $i^{th}$ time synchronization subprocess in the forward-unidirectional-Bluetooth based time synchronization solution according to some embodiments of this application. It can be learned from FIG. 11(a) that a Bluetooth based time synchronization process includes a plurality of time synchronization subprocesses. FIG. 12 is a flowchart of the forward-unidirectional-Bluetooth based time synchronization solution according to some embodiments of this application. As shown in FIG. 12, in some embodiments of this application, the forward-unidirectional-Bluetooth based time synchronization solution applicable to the application scenario 2 in this application specifically includes the following steps.

S1201: The mobile phone 100 sends a synchronization message to the tag device 200, where the synchronization message carries a mobile phone clock value $T_{Sync}$ of the mobile phone 100, and the tag device 200 sets a tag clock value of the tag device 200 based on the mobile phone clock value $T_{Sync}$. It may be understood that S1201 is the same as S901, and details are not described herein again.

S1202: The mobile phone 100 performs Bluetooth based time synchronization with the tag device 200; and the mobile phone 100 determines a sub-time offset $\Delta_i$ (where i = 1, 2, 3, ..., or N) corresponding to each time synchronization subprocess in the Bluetooth based time synchronization process, and when the time synchronization subprocess meets a preset adjustment condition, adjusts, according to preset adjustment logic, the sub-time offset $\Delta_i$ corresponding to each time synchronization subprocess, to obtain an adjusted sub-time offset $\Delta_j$ (where j = 1, 2, 3, ..., or M) corresponding to the Bluetooth based time synchronization process, where N ≥ M.

It can be learned from FIG. 11(a) and FIG. 11(b) that the Bluetooth based time synchronization process includes the plurality of time synchronization subprocesses. The Bluetooth based time synchronization process refers to an entire transmission process of a Bluetooth signal between the mobile phone 100 and the tag device in an entire Bluetooth based time synchronization solution. The time synchronization subprocess refers to a transmission period of the Bluetooth signal between the mobile phone 100 and the tag device. The Bluetooth based time synchronization process includes several time synchronization subprocesses.

For ease of description and understanding, the following describes a specific process in detail by using one of the time synchronization subprocesses as an example.

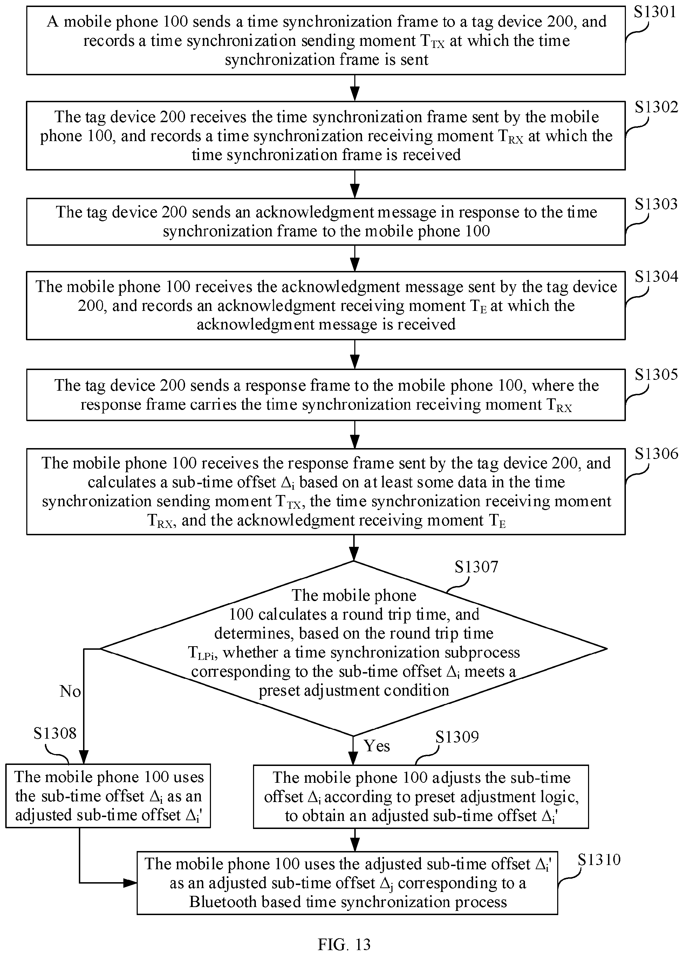

FIG. 13 is a flowchart of a time synchronization solution in one of the time synchronization subprocesses in FIG. 11(a). The following describes in detail the time synchronization solution in one of the time synchronization subprocesses in this application with reference to FIG. 11(a), FIG. 11(b), and FIG. 13. As shown in FIG. 13, the time synchronization solution in one of the time synchronization subprocesses in this application specifically includes the following steps.

S1301: The mobile phone 100 sends a time synchronization frame to the tag device 200, and records a time synchronization sending moment $T_{TX}$ at which the time synchronization frame is sent.

A difference from the time synchronization frame in the application scenario 1 lies in that, the time synchronization frame in the application scenario 2 refers to a Bluetooth signal used to implement time synchronization between two electronic devices, and is sent by the mobile phone 100 to the tag device 200. The time synchronization sending moment $T_{TX}$ is a time that is recorded by the mobile phone 100 based on a local clock and at which the mobile phone 100 starts to send the time synchronization frame.

S1302: The tag device 200 receives the time synchronization frame sent by the mobile phone 100, and records a time synchronization receiving moment $T_{RX}$ at which the time synchronization frame is received. The time synchronization receiving moment $T_{RX}$ is a time that is recorded by the tag device 200 based on a local clock and at which the tag device 200 receives the time synchronization frame.

It should be noted that, because the time synchronization receiving moment $T_{RX}$ is the time recorded by the tag device 200 based on the local clock, to ensure that the mobile phone 100 can implement the time synchronization solution between the mobile phone 100 and the tag device 200 by using the time synchronization receiving moment $T_{RX}$, the time synchronization receiving moment $T_{RX}$ needs to be sent to the mobile phone 100. The following briefly describes several sending manners in which the tag device 200 sends the time synchronization receiving moment $T_{RX}$ to the mobile phone 100.

In some embodiments of this application, the tag device 200 sends the time synchronization receiving moment $T_{RX}$ to the mobile phone 100 by using another transmission signal. Specifically, after the tag device 200 sends the time synchronization frame to the mobile phone 100, the tag device 200 sends the time synchronization receiving moment $T_{RX}$ corresponding to the time synchronization frame to the mobile phone 100 by using another transmission signal.

In some implementations of this application, the another transmission signal may be a transmission signal in any subsequent subprocess. For example, the tag device 200 sends, to the mobile phone 100 by using a time synchronization frame corresponding to the i$^{th}$ time synchronization subprocess, a time synchronization receiving moment $T_{RX(i-1)}$ corresponding to an (i-1)$^{th}$ time synchronization subprocess. That is, the time synchronization frame in the i$^{th}$ time synchronization subprocess that is sent by the tag device 200 to the mobile phone 100 carries the time synchronization receiving moment $T_{RX(i-1)}$ corresponding to the (i-1)$^{th}$ time synchronization subprocess.

In some other alternative implementations of this application, the another transmission signal may be a separate transmission signal after the time synchronization frame. Details are not described herein.

S1303: The tag device 200 sends an acknowledgment message in response to the time synchronization frame to the mobile phone 100. The acknowledgment message refers to a spontaneous message of the tag device 200 in response to the time synchronization frame at a Bluetooth protocol layer, and the spontaneous message is not a message actively sent by an upper-layer application of the tag device 200.

In some implementations of this application, the acknowledgment message may be a confirm. The confirm is a spontaneous message of the tag device 200 in response to the indication at the Bluetooth protocol layer. The confirm does not carry upper-layer data.

S1304: The mobile phone 100 receives the acknowledgment message sent by the tag device 200, and records an acknowledgment receiving moment $T_E$ at which the acknowledgment message is received. The acknowledgment receiving moment $T_E$ refers to a time that is recorded by the mobile phone 100 based on the local clock and at which the mobile phone 100 receives the acknowledgment message.

In some implementations of this application, the acknowledgment receiving moment $T_E$ may be a callback time reported by a bottom-layer chip in the mobile phone 100 after the bottom-layer chip receives the confirm. That is, the acknowledgment receiving moment $T_E$ may be a time that is recorded by the mobile phone 100 based on the local clock and at which the mobile phone 100 receives the confirm.

S1305: The tag device 200 sends a response frame to the mobile phone 100, where the response frame carries the time synchronization receiving moment $T_{RX}$.

It should be noted that, because the time synchronization receiving moment $T_{RX}$ is the time recorded by the tag device 200 based on the local clock, to ensure that the mobile phone 100 can implement the time synchronization solution between the mobile phone 100 and the tag device 200 by using the time synchronization receiving moment $T_{RX}$, the time synchronization receiving moment $T_{RX}$ needs to be sent to the mobile phone 100.

In some embodiments of this application, after the mobile phone 100 sends the time synchronization frame to the tag device 200, the tag device 200 sends the time synchronization receiving moment $T_{RX}$ to the mobile phone 100 by using the response frame.

In some implementations of this application, after the tag device 200 sends the acknowledgment message to the mobile phone 100, the tag device 200 sends the response frame to the mobile phone 100. In some other alternative implementations of this application, after the mobile phone 100 sends the time synchronization frame to the tag device 200, and before the tag device 200 sends the acknowledgment message to the mobile phone 100, the tag device 200 sends the response frame to the mobile phone 100.

S1306: The mobile phone 100 receives the response frame, and calculates a sub-time offset $\Delta_i$ based on at least some data in the time synchronization sending moment $T_{TX}$, the time synchronization receiving moment $T_{RX}$, and the acknowledgment receiving moment $T_E$.

A difference from the application scenario 1 lies in that: When the sub-time offset may be represented by a clock time of the mobile phone 100 minus a clock time of the tag device 200, a sub-time offset $\Delta_{i1}$ corresponding to the $i^{th}$ time synchronization subprocess may be calculated by using a formula (10):

$$\Delta_{i1} = T_{TXi} - T_{RXi} \tag{10}$$

In the formula (10), $\Delta_{i1}$ is the sub-time offset determined based on the $i^{th}$ time synchronization subprocess, $T_{TXi}$ is a time synchronization sending moment in the $i^{th}$ time synchronization subprocess, and $T_{RXi}$ is a time synchronization receiving moment in the $i^{th}$ time synchronization subprocess.

A difference from the application scenario 1 lies in that: When the sub-time offset may be represented by a clock time of the mobile phone 100 minus a clock time of the tag device 200, a sub-time offset $\Delta_{i1}$ corresponding to the $i^{th}$ time synchronization subprocess may alternatively be calculated by using a formula (11):

$$\Delta_{i2} = T_{Ei} - T_{RXi} \tag{11}$$

In the formula (11), $\Delta_{i2}$ is the sub-time offset determined based on the $i^{th}$ time synchronization subprocess, $T_{Ei}$ is an acknowledgment receiving moment in the $i^{th}$ time synchronization subprocess, and $T_{RXi}$ is a time synchronization receiving moment in the $i^{th}$ time synchronization subprocess.

S1307: The mobile phone 100 calculates a round trip time $T_{LPi}$, and determines, based on the round trip time $T_{LPi}$, whether the time synchronization subprocess corresponding to the sub-time offset $\Delta_i$ meets the preset adjustment condition. For a definition and a calculation manner of the round trip time $T_{LPi}$, refer to S1007. Details are not described herein again. If a determining result is no, the time synchronization subprocess does not meet the preset adjustment condition, indicating that the sub-time offset $\Delta_i$ corresponding to the time synchronization subprocess meets a preset requirement (for example, falls within the convergence range described above). That is, the sub-time offset $\Delta_i$ does not need to be adjusted, and S1308 is performed. Otherwise, if a determining result is yes, the time synchronization subprocess meets the preset adjustment condition, and the sub-time offset $\Delta_i$ corresponding to the time synchronization subprocess does not meet a preset requirement (for example, falls beyond the convergence range described above). That is, the sub-time offset $\Delta_i$ needs to be adjusted, and S1309 is performed. It may be understood that S1307 is the same as S1007, and details are not described herein again.

S1308: The mobile phone 100 uses the sub-time offset $\Delta_i$ as an adjusted sub-time offset $\Delta_i'$, and then performs S1310. It may be understood that S1308 is the same as S1008, and details are not described herein again.

S1309: The mobile phone 100 adjusts the sub-time offset $\Delta_i$ according to preset adjustment logic, to obtain the adjusted sub-time offset $\Delta_i'$, and then performs S1310. It may be understood that S1309 is the same as S1009, and details are not described herein again.

S1310: The mobile phone 100 uses the adjusted sub-time offset $\Delta_i'$ as the adjusted sub-time offset $\Delta_j$ corresponding to the Bluetooth based time synchronization process. It may be understood that S1310 is the same as S1010, and details are not described herein again. The foregoing embodiment is only a part of implementations of the time synchronization solution in one of the time synchronization subprocesses in this application. Any implementation of a time synchronization solution in which the mobile phone 100 can send a time synchronization frame to the tag device 200, the tag device 200 can send an acknowledgment message in response to the time synchronization frame to the mobile phone 100, and the tag device 200 can send a time synchronization receiving moment $T_{RX}$ to the mobile phone 100 falls within the protection scope of this application, and is not described one by one in this application.

It may be understood that the Bluetooth based time synchronization process includes the plurality of time synchronization subprocesses. For a specific Bluetooth based time synchronization process in the application scenario 2, refer to the Bluetooth based time synchronization process in the application scenario 1. Details are not described herein again.

S1203: The mobile phone 100 obtains a comprehensive time offset $\Delta$ between the mobile phone 100 and the tag device 200 based on the adjusted sub-time offset $\Delta_j$ (where j = 1, 2, 3, ..., or M) corresponding to the Bluetooth based time synchronization process. It may be understood that S1203 is the same as S903, and details are not described herein again.

In the foregoing embodiment, bidirectional time synchronization in PTP based time synchronization is adjusted to unidirectional time synchronization, so that time synchronization duration is shorter. This is more conducive to real-time application, is time-saving, and improves practicability. In addition, the sub-time offset is adjusted, so that abnormal sub-time offsets in the time synchronization subprocesses are reduced, thereby improving accuracy and stability of the comprehensive time offset. When the comprehensive time offset is used for distance calculation, distance measurement precision can be improved compared with the PTP based time synchronization.

It should be specially noted that, when the sub-time offset may be represented by the clock time of the mobile phone 100 minus the clock time of the tag device 200, the sub-time offset between the mobile phone 100 and the tag device 200 may be calculated in a manner of $\Delta_{i1} = T_{TXi} - T_{RXi}$ or $\Delta_{i2} = T_{Ei} - T_{RXi}$. Based on this, when the solution is applicable to the foregoing distance measurement algorithm, $L = v * [t_2 - (t_1 + \Delta - \Delta_0)]$. L is a distance between the mobile phone 100 and the tag device 200, v is a speed of sound, $t_1$ is an ultrasonic sending moment, $t_2$ is an ultrasonic receiving moment, $\Delta$ is the comprehensive time offset between the mobile phone 100 and the tag device 200, and $\Delta_0$ is a time compensation value between the mobile phone 100 and the tag device 200.

However, when the sub-time offset may be represented by the clock time of the tag device 200 minus the clock time of the mobile phone 100, the sub-time offset between the mobile phone 100 and the tag device 200 may be calculated in a manner of $\Delta_{i1} = T_{RXi} - T_{TXi}$ or $\Delta_{i2} = T_{RXi} - T_{Ei}$. Based on this, when the solution is applicable to the foregoing distance measurement algorithm, $L = v * [t_2 - (t_1 - \Delta + \Delta_0)]$. L is a distance between the mobile phone 100 and the tag device 200, v is a speed of sound, $t_1$ is an ultrasonic sending moment, $t_2$ is an ultrasonic receiving moment, $\Delta$ is the comprehensive time offset between the mobile phone 100 and the tag device 200, and $\Delta_0$ is a time compensation value between the mobile phone 100 and the tag device 200.

Application scenario 3

In the application scenario 3, a mobile phone 100 sends a time synchronization frame to a tag device 200, and then the tag device 200 feeds back an acknowledgment message to the mobile phone 100. In addition, the tag device 200 needs to send a response frame to the mobile phone 100. Based on this, a Bluetooth based time synchronization solution applicable to the application scenario 3 may also be defined as a forward-bidirectional-Bluetooth based time synchronization solution.

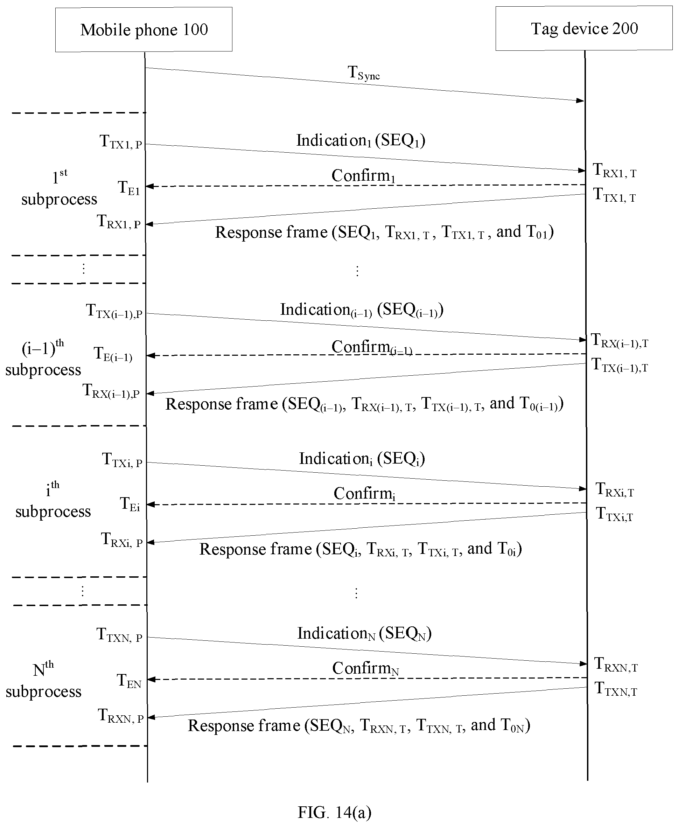

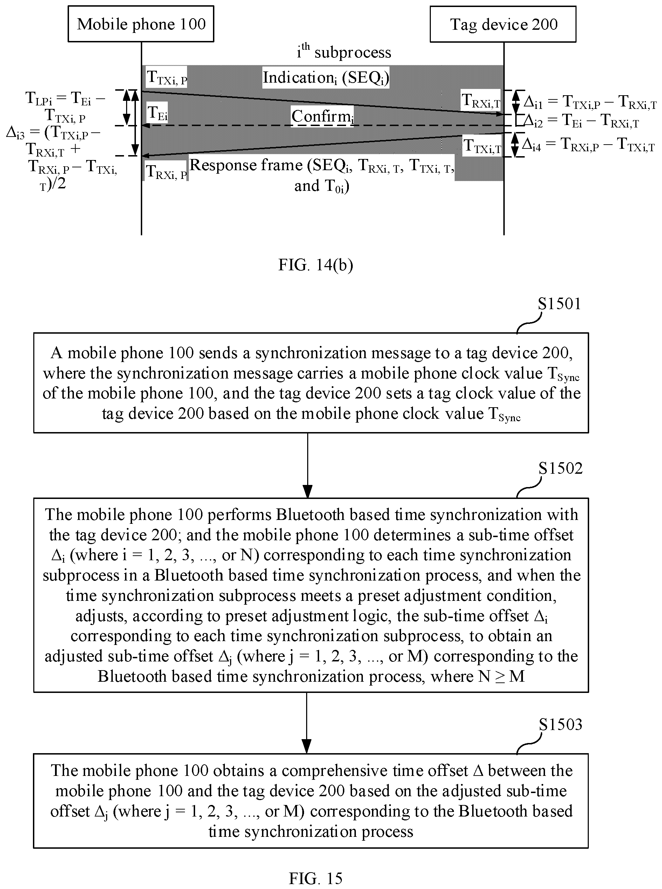

FIG. 14(a) is an interaction diagram of the forward-bidirectional-Bluetooth based time synchronization solution according to some embodiments of this application. FIG. 14(b) is an interaction diagram of an ith time synchronization subprocess in the forward-bidirectional-Bluetooth based time synchronization solution according to some embodiments of this application. It can be learned from FIG. 14(b) that a Bluetooth based time synchronization process includes a plurality of time synchronization subprocesses. FIG. 15 is a flowchart of the forward-bidirectional-Bluetooth based time synchronization solution according to some embodiments of this application. As shown in FIG. 15, in some embodiments of this application, the forward-bidirectional-Bluetooth based time synchronization solution applicable to the application scenario 3 in this application specifically includes the following steps.

S1501: The mobile phone 100 sends a synchronization message to the tag device 200, where the synchronization message carries a mobile phone clock value $T_{Sync}$ of the mobile phone 100, and the tag device 200 sets a tag clock value of the tag device 200 based on the mobile phone clock value $T_{Sync}$. It may be understood that S1501 is the same as S1201, and details are not described herein again.

S1502: The mobile phone 100 performs Bluetooth based time synchronization with the tag device 200; and the mobile phone 100 determines a sub-time offset $\Delta_i$ (where i = 1, 2, 3, ..., or N) corresponding to each time synchronization subprocess in the Bluetooth based time synchronization process, and when the time synchronization subprocess meets a preset adjustment condition, adjusts, according to preset adjustment logic, the sub-time offset $\Delta_i$ corresponding to each time synchronization subprocess, to obtain an adjusted sub-time offset $\Delta_j$ (where j = 1, 2, 3, ..., or M) corresponding to the Bluetooth based time synchronization process, where $N \geq M$.

It can be learned from FIG. 14(a) and FIG. 14(b) that the Bluetooth based time synchronization process includes the plurality of time synchronization subprocesses. The Bluetooth based time synchronization process refers to an entire transmission process of a Bluetooth signal between the mobile phone 100 and the tag device in an entire Bluetooth based time synchronization solution. The time synchronization subprocess refers to a transmission period of the Bluetooth signal between the mobile phone 100 and the tag device. The Bluetooth based time synchronization process includes several time synchronization subprocesses.

For ease of description and understanding, the following describes a specific process in detail by using one of the time synchronization subprocesses as an example.

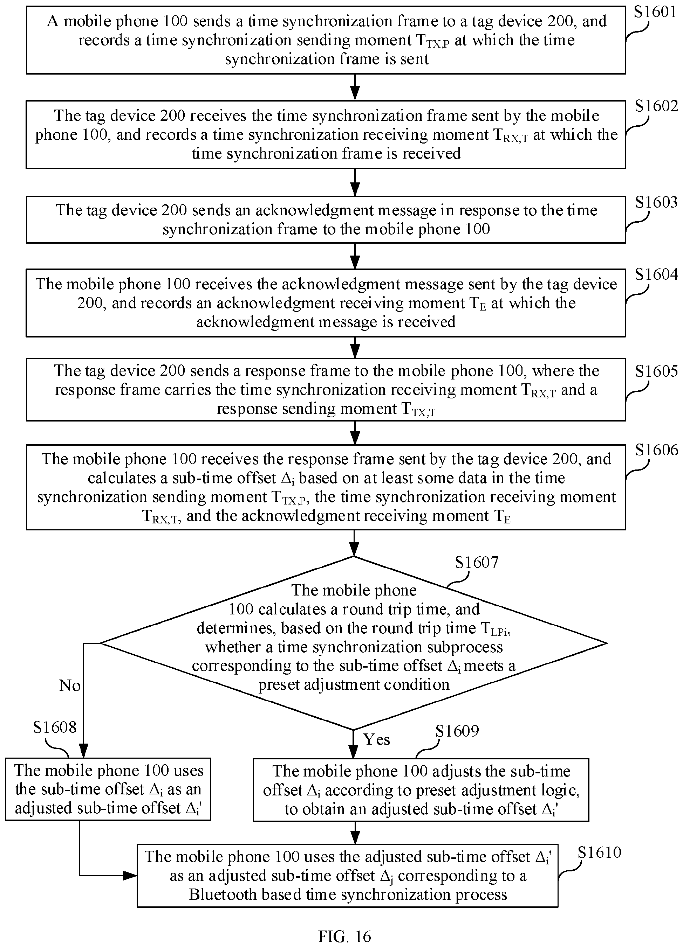

FIG. 16 is a flowchart of a time synchronization solution in one of the time synchronization subprocesses in FIG. 14(a). The following describes in detail the time synchronization solution in one of the time synchronization subprocesses in this application with reference to FIG. 14(a), FIG. 14(b), and FIG. 16. As shown in FIG. 16, the time synchronization solution in the time synchronization subprocess in this application specifically includes the following steps.

S1601: The mobile phone 100 sends a time synchronization frame to the tag device 200, and records a time synchronization sending moment $T_{TX,P}$ at which the time synchronization frame is sent. It may be understood that S1601 is similar to S1301. For details, refer to S1301. Details are not described herein again.

S1602: The tag device 200 receives the time synchronization frame sent by the mobile phone 100, and records a time synchronization receiving moment $T_{RX,T}$ at which the time synchronization frame is received. It may be understood that S1602 is similar to S1302. For details, refer to S1302. Details are not described herein again.

S1603: The tag device 200 sends an acknowledgment message in response to the time synchronization frame to the mobile phone 100. It may be understood that S1603 is the same as S1303, and details are not described herein again.

S1604: The mobile phone 100 receives the acknowledgment message sent by the tag device 200, and records an acknowledgment receiving moment $T_E$ at which the acknowledgment message is received. It may be understood that S1604 is the same as S1304, and details are not described herein again.

S1605: The tag device 200 sends a response frame to the mobile phone 100, where the response frame carries the time synchronization receiving moment $T_{RX,T}$ and a response sending moment $T_{TX,T}$. The response sending moment $T_{TX,T}$. is a time at which the tag device 200 starts to send the response frame to the mobile phone 100, and may be a predetermined value. That is, the response sending moment $T_{TX,T}$. is a determined value determined before the tag device 200 sends the response frame to the mobile phone 100.

It should be noted that, because the time synchronization receiving moment $T_{RX,T}$ and the response sending moment $T_{TX,T}$. are times recorded by the tag device 200 based on a local clock, to ensure that the mobile phone 100 can implement the time synchronization solution between the mobile phone 100 and the tag device 200 by using the time synchronization receiving moment $T_{RX,T}$ and the response sending moment $T_{TX,T}$, the time synchronization receiving moment $T_{RX,T}$ and the response sending moment $T_{TX,T}$ need to be sent to the mobile phone 100.

In some embodiments of this application, after the mobile phone 100 sends the time synchronization frame to the tag device 200, the tag device 200 sends the time synchronization receiving moment $T_{RX,T}$ and the response sending moment $T_{TX,T}$. to the mobile phone 100 by using the response frame.

In some implementations of this application, after the tag device 200 sends the acknowledgment message to the mobile phone 100, the tag device 200 sends the response frame to the mobile phone 100. In some other alternative implementations of this application, after the mobile phone 100 sends the time synchronization frame to the tag device 200, and before the tag device 200 sends the acknowledgment message to the mobile phone 100, the tag device 200 sends the response frame to the mobile phone 100.

S1606: The mobile phone 100 receives the response frame, and calculates a sub-time offset $\Delta_i$ based on at least some data in the time synchronization sending moment $T_{TX,P}$, the time synchronization receiving moment $T_{RX,T}$, the acknowledgment receiving moment $T_E$, and the response sending moment $T_{TX,T}$.

Similar to the application scenario 2, when the sub-time offset may be represented by a clock time of the mobile phone 100 minus a clock time of the tag device 200, a sub-time offset $\Delta_{i1}$ corresponding to an $i^{th}$ time synchronization subprocess may be calculated by using a formula (12):

$$\Delta_{i1} = T_{TXi,P} - T_{RXi,T} \tag{12}$$

In the formula (12), $\Delta_{i1}$ is the sub-time offset determined based on the $i^{th}$ time synchronization subprocess, $T_{TXi,P}$ is a time synchronization sending moment in the $i^{th}$ time synchronization subprocess, and $T_{RXi,T}$ is a time synchronization receiving moment in the $i^{th}$ time synchronization subprocess.

Similar to the application scenario 2, when the sub-time offset may be represented by a clock time of the mobile phone 100 minus a clock time of the tag device 200, a sub-time offset $\Delta_{il}$ corresponding to an $i^{th}$ time synchronization subprocess may alternatively be calculated by using a formula (13):

$$\Delta_{i2} = T_{Ei} - T_{RXi,T} \tag{13}$$

In the formula (13), $\Delta_{i2}$ is a sub-time offset determined based on the $i^{th}$ time synchronization subprocess, $T_{Ei}$ is an acknowledgment receiving moment in the $i^{th}$ time synchronization subprocess, and $T_{RXi,T}$ is a time synchronization receiving moment in the $i^{th}$ time synchronization subprocess.

A difference from the application scenario 2 lies in that: A sub-time offset $\Delta_{i3}$ in the application scenario 3 may alternatively be calculated by using a time synchronization sending moment $T_{TXi,P}$, a time synchronization receiving moment $T_{RXi,T}$, a response receiving moment $T_{RXi,P}$, and a response sending moment $T_{TXi,T}$. Specifically, the sub-time offset $\Delta_{i3}$ may alternatively be calculated by using a formula (14):

$$\Delta_{i3} = (T_{TXi,P} - T_{RXi,T} + T_{RXi,P} - T_{TXi,T})/2 \tag{14}$$

In the formula (14), $\Delta_{i3}$ is the sub-time offset determined based on the $i^{th}$ time synchronization subprocess, $T_{TXi,P}$ is the time synchronization sending moment in the $i^{th}$ time synchronization subprocess, $T_{RXi,T}$ is the time synchronization receiving moment in the $i^{th}$ time synchronization subprocess, $T_{RXi,P}$ is the response receiving moment in the $i^{th}$ time synchronization subprocess, and $T_{TXi,T}$ is the response sending moment in the $i^{th}$ time synchronization subprocess.

A difference from the application scenario 2 lies in that: A sub-time offset $\Delta_{i4}$ in the application scenario 3 may alternatively be calculated by using a response receiving moment $T_{RXi,P}$ and a response sending moment $T_{TXi,T}$. Specifically, the sub-time offset $\Delta_{i4}$ may alternatively be calculated by using a formula (15):

$$\Delta_{i4} = T_{RXi,P} - T_{TXi,T} \tag{15}$$

In the formula (15), $\Delta_{i4}$ is the sub-time offset determined based on the $i^{th}$ time synchronization subprocess, $T_{RXi,P}$ is the response receiving moment in the $i^{th}$ time synchronization subprocess, and $T_{TXi,T}$ is the response sending moment in the $i^{th}$ time synchronization subprocess.

S1607: The mobile phone 100 calculates a round trip time $T_{LPi,}$ and determines, based on the round trip time $T_{LPi,}$ whether the time synchronization subprocess corresponding to the sub-time offset $\Delta_i$ meets the preset adjustment condition. For a definition and a calculation manner of the round trip time $T_{LPi,}$ refer to S1007. Details are not described herein again. If a determining result is no, the time synchronization subprocess does not meet the preset adjustment condition, indicating that the sub-time offset $\Delta_i$ corresponding to the time synchronization subprocess meets a preset requirement (for example, falls within the convergence range described above). That is, the sub-time offset $\Delta_i$ does not need to be adjusted, and S1608 is performed. Otherwise, if a determining result is yes, the time synchronization subprocess meets the preset adjustment condition, and the sub-time offset $\Delta_i$ corresponding to the time synchronization subprocess does not meet a preset requirement (for example, falls beyond the convergence range described above). That is, the sub-time offset $\Delta_i$ needs to be adjusted, and S1609 is performed. It may be understood that S1607 is the same as S1007, and details are not described herein again.

S1608: The mobile phone 100 uses the sub-time offset $\Delta_i$ as an adjusted sub-time offset $\Delta_i'$, and then performs S1610. It may be understood that S1608 is the same as S1008, and details are not described herein again.

S1609: The mobile phone 100 adjusts the sub-time offset $\Delta_i$ according to preset adjustment logic, to obtain the adjusted sub-time offset $\Delta_i'$, and then performs S1610. It may be understood that S1609 is the same as S1009, and details are not described herein again.

S1610: The mobile phone 100 uses the adjusted sub-time offset $\Delta_i'$ as the adjusted sub-time offset $\Delta_j$ corresponding to the Bluetooth based time synchronization process. It may be understood that S1610 is the same as S1010, and details are not described herein again. The foregoing embodiment is only a part of implementations of the time synchronization solution in one of the time synchronization subprocesses in this application. Any implementation of a time synchronization solution in which the mobile phone 100 can send a time synchronization frame to the tag device 200, the tag device 200 can send an acknowledgment message in response to the time synchronization frame to the mobile phone 100, and the tag device 200 can send a time synchronization receiving moment $T_{RX,T}$ and a response sending moment $T_{TX,T}$ to the mobile phone 100 falls within the protection scope of this application, and is not described one by one in this application.

It may be understood that the Bluetooth based time synchronization process includes the plurality of time synchronization subprocesses. For a specific Bluetooth based time synchronization process in the application scenario 3, refer to the Bluetooth based time synchronization process in the application scenario 1. Details are not described herein again.

S1503: The mobile phone 100 obtains a comprehensive time offset $\Delta$ between the mobile phone 100 and the tag device 200 based on the adjusted sub-time offset $\Delta_j$ (where j = 1, 2, 3, ..., or M) corresponding to the Bluetooth based time synchronization process. It may be understood that S1503 is the same as S903, and details are not described herein again.

In the foregoing embodiment, the sub-time offset is adjusted, so that abnormal sub-time offsets in the time synchronization subprocesses are reduced, thereby improving accuracy and stability of the comprehensive time offset. When the comprehensive time offset is used for distance calculation, distance measurement precision can be improved compared with the PTP based time synchronization.

It should be specially noted that, when the sub-time offset may be represented by the clock time of the mobile phone 100 minus the clock time of the tag device 200, the sub-time offset between the mobile phone 100 and the tag device 200 may be calculated in any one of manners of $\Delta_{i1} = T_{TXi,P} - T_{RXi,T}$, $\Delta_{i2} = T_{Ei} - T_{RXi,T}$, $\Delta_{i3} = (T_{TXi,P} - T_{RXi,T} + T_{RXi,P} - T_{TXi,T})/2$, and $\Delta_{i4} = T_{RXi,P} - T_{TXi,T}$. Based on this, when the solution is applicable to the foregoing distance measurement algorithm, $L = v * [t_2 - (t_1 + \Delta - \Delta_0)]$. L is a distance between the mobile phone 100 and the tag device 200, v is a speed of sound, $t_1$ is an ultrasonic sending moment, $t_2$ is an ultrasonic receiving moment, $\Delta$ is the comprehensive time offset between the mobile phone 100 and the tag device 200, and $\Delta_0$ is a time compensation value between the mobile phone 100 and the tag device 200.

However, when the sub-time offset may be represented by the clock time of the tag device 200 minus the clock time of the mobile phone 100, the sub-time offset between the mobile phone 100 and the tag device 200 may be calculated in any one of manners of $\Delta_{i1} = T_{RXi,T} - T_{TXi,P}$, $\Delta_{i2} = T_{RXi,T} - T_{Ei}$, $\Delta_{i3} = (T_{RXi,T} - T_{TXi,P} + T_{TXi,T} - T_{RXi,P})/2$, and $\Delta_{i4} = T_{TXi,T} - T_{RXi,P}$ Based on this, when the solution is applicable to the foregoing distance measurement algorithm, $L = v * [t_2 - (t_1 - \Delta + \Delta_0)]$. L is a distance between the mobile phone 100 and the tag device 200, v is a speed of sound, $t_1$ is an ultrasonic sending moment, $t_2$ is the ultrasonic receiving moment, $\Delta$ is the comprehensive time offset between the mobile phone 100 and the tag device 200, and $\Delta_0$ is a time compensation value between the mobile phone 100 and the tag device 200.

Application scenario 4

In the application scenario 4, a tag device 200 sends a time synchronization frame to a mobile phone 100, and then the mobile phone 100 feeds back an acknowledgment message to the tag device 200. In addition, the mobile phone 100 needs to send a response frame to the tag device 200. Based on this, a Bluetooth based time synchronization solution applicable to the application scenario 4 may also be defined as a reverse-bidirectional-Bluetooth based time synchronization solution.

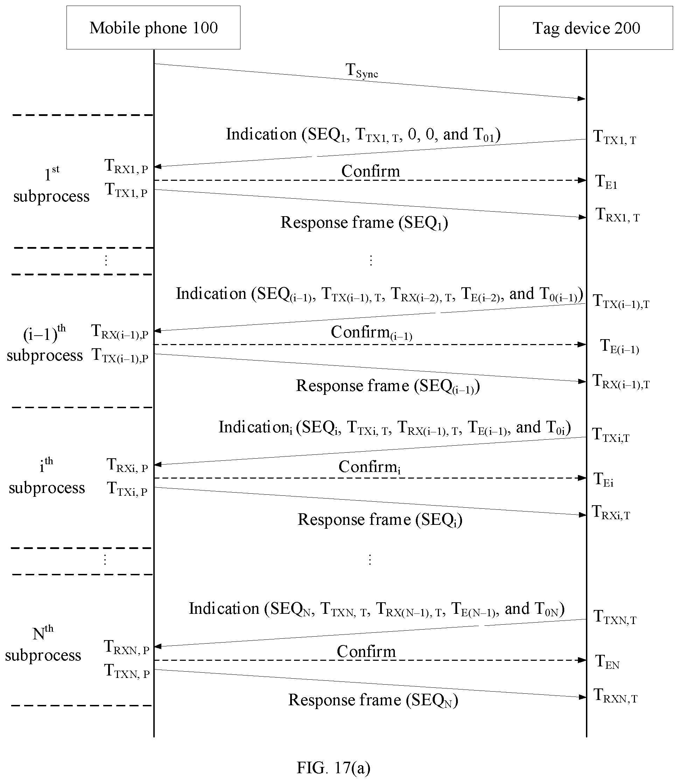

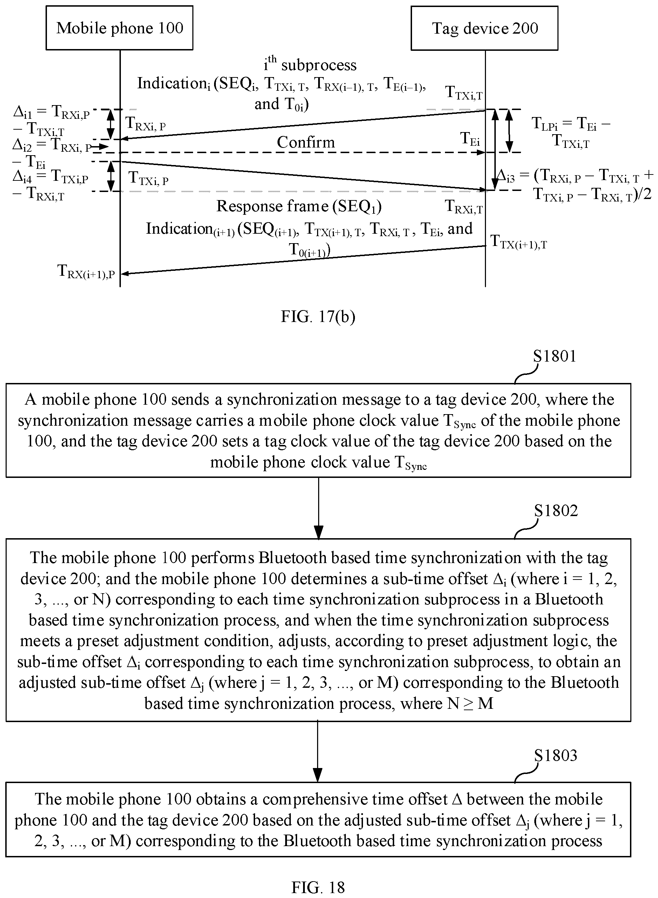

FIG. 17(a) is an interaction diagram of the reverse-bidirectional-Bluetooth based time synchronization solution according to some embodiments of this application. FIG. 17(b) is an interaction diagram of an $i^{th}$ time synchronization subprocess and a part of an $(i+1)^{th}$ time synchronization subprocess in the reverse-bidirectional-Bluetooth based time synchronization solution according to some embodiments of this application. A shadow area represents the $i^{th}$ time synchronization subprocess, and a white area below the shadow area represents the part of the $(i+1)^{th}$ time synchronization subprocess. It can be learned from FIG. 17(a) that a Bluetooth based time synchronization process includes a plurality of time synchronization subprocesses. FIG. 18 is a flowchart of the reverse-bidirectional-Bluetooth based time synchronization solution according to some embodiments of this application. As shown in FIG. 18, in some embodiments of this application, the reverse-bidirectional-Bluetooth based time synchronization solution applicable to the application scenario 4 in this application specifically includes the following steps.

S1801: The mobile phone 100 sends a synchronization message to the tag device 200, where the synchronization message carries a mobile phone clock value $T_{Sync}$ of the mobile phone 100, and the tag device 200 sets a tag clock value of the tag device 200 based on the mobile phone clock value $T_{Sync}$. It may be understood that S1801 is the same as S901, and details are not described herein again.

S1802: The mobile phone 100 performs Bluetooth based time synchronization with the tag device 200; and the mobile phone 100 determines a sub-time offset $\Delta_i$ (where i = 1, 2, 3, ..., or N) corresponding to each time synchronization subprocess in the Bluetooth based time synchronization process, and when the time synchronization subprocess meets a preset adjustment condition, adjusts, according to preset adjustment logic, the sub-time offset $\Delta_i$ corresponding to each time synchronization subprocess, to obtain an adjusted sub-time offset $\Delta_j$ (where j = 1, 2, 3, ..., or M) corresponding to the Bluetooth based time synchronization process, where $N \geq M$.

It can be learned from FIG. 17(a) and FIG. 17(b) that the Bluetooth based time synchronization process includes the plurality of time synchronization subprocesses. The Bluetooth based time synchronization process refers to an entire transmission process of a Bluetooth signal between the mobile phone 100 and the tag device in an entire Bluetooth based time synchronization solution. The time synchronization subprocess refers to a transmission period of the Bluetooth signal between the mobile phone 100 and the tag device. The Bluetooth based time synchronization process includes several time synchronization subprocesses.

For ease of description and understanding, the following describes a specific process in detail by using one of the time synchronization subprocesses as an example.

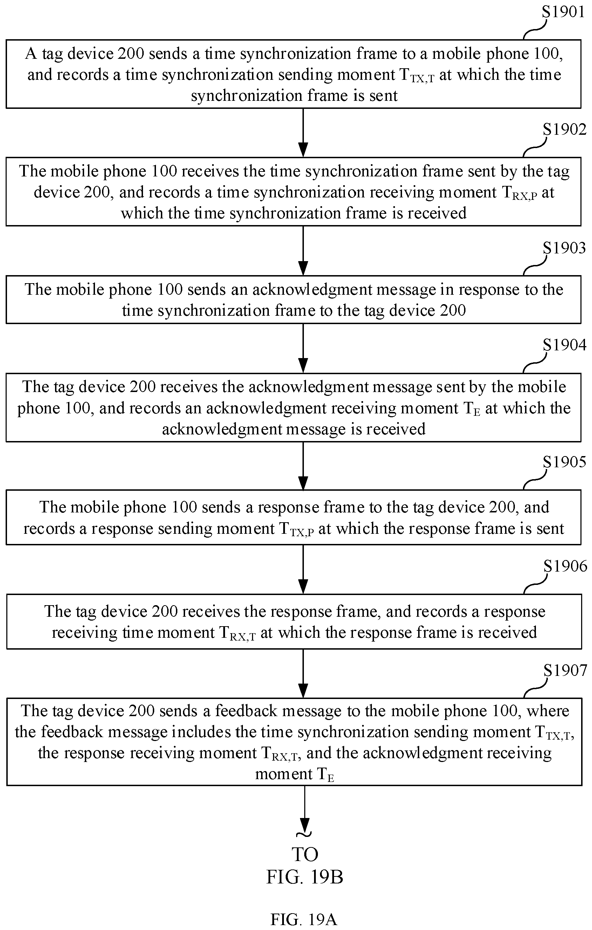

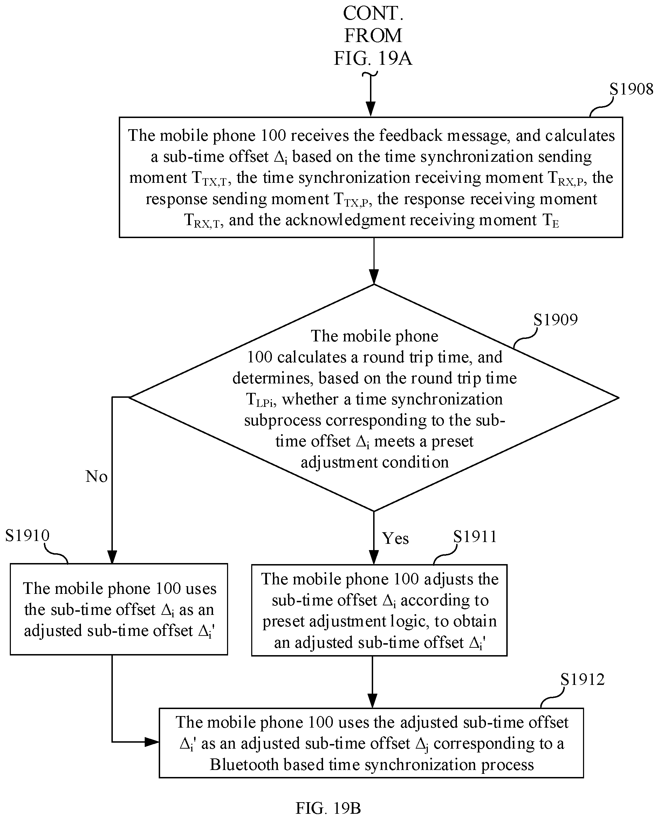

FIG. 19A and FIG. 19B are a flowchart of a time synchronization solution in one of the time synchronization subprocesses in FIG. 17(a). The following describes in detail the time synchronization solution in the time synchronization subprocess in this application with reference to FIG. 17(a), FIG. 17(b), and FIG. 19A and FIG. 19B. As shown in FIG. 19A and FIG. 19B, the time synchronization solution in one of the time synchronization subprocesses in this application specifically includes the following steps.

S1901: The tag device 200 sends a time synchronization frame to the mobile phone 100, and records a time synchronization sending moment $T_{TX,T}$ at which the time synchronization frame is sent. It may be understood that S1901 is similar to S1001. For details, refer to S1001. Details are not described herein again.

S1902: The mobile phone 100 receives the time synchronization frame sent by the tag device 200, and records a time synchronization receiving moment $T_{RX,P}$ at which the time synchronization frame is received. It may be understood that S1902 is similar to S1002. For details, refer to S1002. Details are not described herein again.

S1903: The mobile phone 100 sends an acknowledgment message in response to the time synchronization frame to the tag device 200. It may be understood that S1603 is the same as S1003, and details are not described herein again.

S1904: The tag device 200 receives the acknowledgment message sent by the mobile phone 100, and records an acknowledgment receiving moment $T_E$ at which the acknowledgment message is received. It may be understood that S1904 is the same as S1004, and details are not described herein again.

S1905: The mobile phone 100 sends a response frame to the tag device 200, and records a response sending moment $T_{TX,P}$ at which the response frame is sent. The response sending moment $T_{TX,P}$ is a time at which the mobile phone 100 starts to send the response frame to the tag device 200, and may be a predetermined value. That is, the response sending moment $T_{TX,P}$ is a determined value determined before the mobile phone 100 sends the response frame to the tag device 200.

S1906: The tag device 200 receives the response frame, and records a response receiving moment $T_{RX,T}$ at which the response frame is received.

S1907: The tag device 200 sends a feedback message to the mobile phone 100, where the feedback message includes the time synchronization sending moment $T_{TX,T}$, the response receiving moment $T_{RX,T}$, and the acknowledgment receiving moment $T_E$.

It should be noted that, because the time synchronization sending moment $T_{TX,T}$, the response receiving moment $T_{RX,T}$, and the acknowledgment receiving moment $T_E$ are times recorded by the tag device 200 based on a local clock, to ensure that the mobile phone 100 can implement the time synchronization solution between the mobile phone 100 and the tag device 200 by using the time synchronization sending moment $T_{TX,T}$, the response receiving moment $T_{RX,T}$, and the acknowledgment receiving moment $T_E$, the time synchronization sending moment $T_{TX,T}$, the response receiving moment $T_{RX,T}$, and the acknowledgment receiving moment $T_E$ need to be sent to the mobile phone 100.

In some embodiments of this application, after the tag device 200 sends the response frame to the mobile phone 100, the tag device 200 sends the time synchronization sending moment $T_{TX,T}$, the response receiving moment $T_{RX,T}$, and the acknowledgment receiving moment $T_E$ to the mobile phone 100 by using a time synchronization frame in a subsequent subprocess. That is, the feedback message reuses the time synchronization frame in the subsequent subprocess. For example, a time synchronization frame in the i$^{th}$ subprocess carries a time synchronization sending moment $T_{TX(i-1),T}$, a response receiving moment $T_{RX(i-1),T}$, and an acknowledgment receiving moment $T_{E(i-1)}$ that correspond to an (i-1)$^{th}$ time synchronization subprocess. The tag device 200 sends the time synchronization sending moment $T_{TX(i-1),T}$, the response receiving moment $T_{RX(i-1),T}$, and the acknowledgment receiving moment $T_{E(i-1)}$ to the mobile phone 100 by using the time synchronization frame in the i$^{th}$ subprocess.

In some implementations of this application, the tag device 200 may alternatively send the time synchronization sending moment $T_{TX,T}$, the response receiving moment $T_{RX,T}$, and the acknowledgment receiving moment $T_E$ to the mobile phone 100 by using a separate frame. There may be one or more separate frames. This is not specifically limited in this application.

S1908: The mobile phone 100 receives the feedback message, and calculates a sub-time offset $\Delta_i$ based on at least some data in the time synchronization sending moment $T_{TX,T}$, the time synchronization receiving moment $T_{RX,P}$, the response sending moment $T_{TX,P}$, the response receiving moment $T_{RX,T}$, and the acknowledgment receiving moment $T_E$.

Similar to the application scenario 1, when the sub-time offset may be represented by a clock time of the mobile phone 100 minus a clock time of the tag device 200, a sub-time offset $\Delta_{i1}$ corresponding to the i$^{th}$ time synchronization subprocess may be calculated by using a formula (16):

$$\Delta_{i1} = T_{RXi,P} - T_{TXi,T} \tag{16}$$

In the formula (16), $\Delta_{i1}$ is the sub-time offset determined based on the i$^{th}$ time synchronization subprocess, $T_{RXi,P}$ is a time synchronization receiving moment in the i$^{th}$ time synchronization subprocess, and $T_{TXi,T}$ is a time synchronization sending moment in the i$^{th}$ time synchronization subprocess.

Similar to the application scenario 1, when the sub-time offset may be represented by a clock time of the mobile phone 100 minus a clock time of the tag device 200, a sub-time offset $\Delta_{i2}$ corresponding to the i$^{th}$ time synchronization subprocess may alternatively be calculated by using a formula (17):

$$\Delta_{i2} = T_{RXi,P} - T_{Ei} \tag{17}$$

In the formula (17), $\Delta_{i2}$ is the sub-time offset determined based on the $i^{th}$ time synchronization subprocess, $T_{RXi,P}$ is a time synchronization receiving moment the $i^{th}$ time synchronization subprocess, and $T_{Ei}$ is an acknowledgment receiving moment in the $i^{th}$ time synchronization subprocess.

A difference from the application scenario 1 lies in that: A sub-time offset $\Delta_{i3}$ may alternatively be calculated by using a time synchronization sending moment $T_{TXi,P}$, a time synchronization receiving moment $T_{RXi,T}$, a response receiving moment $T_{RXi,P}$, and a response sending moment $T_{TXi,T}$. Specifically, the sub-time offset $\Delta_{i3}$ may alternatively be calculated by using a formula (18):

$$\Delta_{i3} = (T_{RXi,P} - T_{TXi,T} + T_{TXi,P} - T_{RXi,T})/2 \tag{18}$$

In the formula (18), $\Delta_{i3}$ is the sub-time offset determined based on the $i^{th}$ time synchronization subprocess, $T_{RXi,P}$ is the time synchronization receiving moment in the $i^{th}$ time synchronization subprocess, $T_{TXi,T}$ is the time synchronization sending moment in the $i^{th}$ time synchronization subprocess, $T_{TXi,P}$ is the response sending moment in the $i^{th}$ time synchronization subprocess, and $T_{RXi,T}$ is the response receiving moment in the $i^{th}$ time synchronization subprocess.

A difference from the application scenario 2 lies in that: A sub-time offset $\Delta_{i4}$ in the application scenario 3 may alternatively be calculated by using a response sending moment $T_{TXi,P}$ and a response receiving moment $T_{RXi,T}$ Specifically, the sub-time offset $\Delta_{i4}$ may alternatively be calculated by using a formula (19):

$$\Delta_{i4} = T_{TXi,P} - T_{RXi,T} \tag{19}$$

In the formula (19), $\Delta_{i4}$ is the sub-time offset determined based on the $i^{th}$ time synchronization subprocess, $T_{TXi,P}$ is the response sending moment in the $i^{th}$ time synchronization subprocess, and $T_{RXi,T}$ is the response receiving moment in the $i^{th}$ time synchronization subprocess.

S1909: The mobile phone 100 calculates a round trip time $T_{LPi,}$ and determines, based on the round trip time $T_{LPi,}$ whether the time synchronization subprocess corresponding to the sub-time offset $\Delta_i$ meets the preset adjustment condition. For a definition and a calculation manner of the round trip time $T_{LPi,}$ refer to S1007. Details are not described herein again. If a determining result is no, the time synchronization subprocess does not meet the preset adjustment condition, indicating that the sub-time offset $\Delta_i$ corresponding to the time synchronization subprocess meets a preset requirement (for example, falls within the convergence range described above). That is, the sub-time offset $\Delta_i$ does not need to be adjusted, and S1910 is performed. Otherwise, if a determining result is yes, the time synchronization subprocess meets the preset adjustment condition, and the sub-time offset $\Delta_i$ corresponding to the time synchronization subprocess does not meet a preset requirement (for example, falls beyond the convergence range described above). That is, the sub-time offset $\Delta_i$ needs to be adjusted, and S1911 is performed. It may be understood that S1909 is the same as S1007, and details are not described herein again.

S1910: The mobile phone 100 uses the sub-time offset $\Delta_i$ as an adjusted sub-time offset $\Delta_i'$, and then performs S1912. It may be understood that S1910 is the same as S1008, and details are not described herein again.

S1911: The mobile phone 100 adjusts the sub-time offset $\Delta_i$, to obtain the adjusted sub-time offset $\Delta_i'$, and then performs S1912. It may be understood that S1911 is the same as S1009, and details are not described herein again.

S1912: The mobile phone 100 uses the adjusted sub-time offset $\Delta_i'$ as the adjusted sub-time offset $\Delta_j$ corresponding to the Bluetooth based time synchronization process. It may be understood that S1912 is the same as S1011, and details are not described herein again. The foregoing embodiment is only a part of implementations of the time synchronization solution in one of the time synchronization subprocesses in this application. Any implementation of a time synchronization solution in which the tag device 200 can send a time synchronization frame to the mobile phone 100, the mobile phone 100 can send an acknowledgment message to the tag device 200 in response to the time synchronization frame, and the tag device 200 can send a time synchronization sending moment $T_{TX,T}$, a response receiving moment $T_{RX,T}$, and an acknowledgment receiving moment $T_E$ to the mobile phone 100 falls within the protection scope of this application, and is not described one by one in this application.

It may be understood that the Bluetooth based time synchronization process includes a plurality of time synchronization subprocesses. For a specific Bluetooth based time synchronization process in the application scenario 4, refer to the Bluetooth based time synchronization process in the application scenario 1. Details are not described herein again.

S1803: The mobile phone 100 obtains a comprehensive time offset $\Delta$ between the mobile phone 100 and the tag device 200 based on the adjusted sub-time offset $\Delta_j$ (where j = 1, 2, 3, ..., or M) corresponding to the Bluetooth based time synchronization process. It may be understood that S1803 is the same as S903, and details are not described herein again.

In the foregoing embodiment, the sub-time offset is adjusted, so that abnormal sub-time offsets in the time synchronization subprocesses are reduced, thereby improving accuracy and stability of the comprehensive time offset. When the comprehensive time offset is used for distance calculation, distance measurement precision can be improved compared with the PTP based time synchronization.

It should be specially noted that, when the sub-time offset may be represented by the clock time of the mobile phone 100 minus the clock time of the tag device 200, the sub-time offset between the mobile phone 100 and the tag device 200 may be calculated in any one of manners of $\Delta_{i1} = T_{RXi,P} - T_{TXi,T}$, $\Delta_{i2} = T_{RXi,P} - T_{Ei}$, $\Delta_{i3} = (T_{RXi,P} - T_{TXi,T} + T_{TXi,P} - T_{RXi,T})/2$, and $\Delta_{i4} = T_{TXi,P} - T_{RXi,T}$ Based on this, when the solution is applicable to the foregoing distance measurement algorithm, $L = v * [t_2 - (t_1 + \Delta - \Delta_0)]$. L is a distance between the mobile phone 100 and the tag device 200, v is a speed of sound, $t_1$ is an ultrasonic sending moment, $t_2$ is an ultrasonic receiving moment, $\Delta$ is the comprehensive time offset between the mobile phone 100 and the tag device 200, and $\Delta_0$ is a time compensation value between the mobile phone 100 and the tag device 200.

However, when the sub-time offset may be represented by the clock time of the tag device 200 minus the clock time of the mobile phone 100, the sub-time offset between the mobile phone 100 and the tag device 200 may be calculated in any one of manners of $\Delta_{i1} = T_{TXi,T} - T_{RXi,P}$, $\Delta_{i2} = T_{Ei} - T_{RXi,P}$, $\Delta_{i3} = (T_{TXi,T} - T_{RXi,P} + T_{RXi,T} - T_{TXi,P})/2$, and $\Delta_{i4} = T_{RXi,T} - T_{TXi,P}$ Based on this, when the solution is applicable to the foregoing distance measurement algorithm, $L = v * [t_2 - (t_1 - \Delta + \Delta_0)]$. L is a distance between the mobile phone 100 and the tag device 200, v is a speed of sound, $t_1$ is the ultrasonic sending moment, $t_2$ is the ultrasonic receiving moment, $\Delta$ is the comprehensive time offset between the mobile phone 100 and the tag device 200, and $\Delta_0$ is a time compensation value between the mobile phone 100 and the tag device 200.

In addition, in some embodiments of this application, Bluetooth interaction information (for example, time synchronization information, sending time information, and temperature information) between the mobile phone 100 and the tag device 200 is stored in a log. A sound wave signal is stored in a recording module of a microphone.

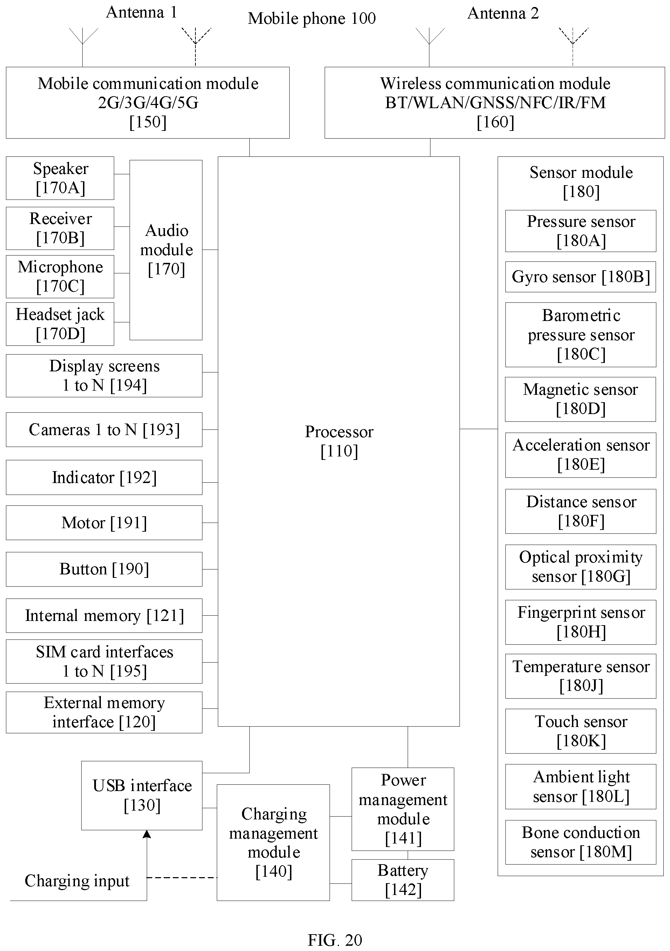

FIG. 20 is a schematic diagram of a hardware structure of a mobile phone 100 according to an embodiment of this application.

As shown in FIG. 20, the mobile phone 100 is used as an example. The mobile phone 100 may include a processor 110 (namely, the processor in the mobile phone 100 above), an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160 (namely, the first communication module of the mobile phone 100 above), an audio module 170 (namely, the first audio module of the mobile phone 100 above), a speaker 170A, a receiver 170B, a microphone 170C, a headset jack 170D, a sensor module 180, a button 190, a motor 191, an indicator 192, a camera 193, a display screen 194 (namely, the display module of the mobile phone 100 above), a subscriber identity module (subscriber identity module, SIM) card interface 195, an EDL mode protection circuit, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

A memory may be further disposed in the processor 110, and is configured to store instructions and data. In some embodiments, the memory in the processor 110 is a cache memory. The memory may store instructions or data recently or cyclically used by the processor 110. If the processor 110 needs to use the instructions or the data again, the processor 110 may directly invoke the instructions or the data from the memory. This avoids repeated access, reduces a waiting time of the processor 110, and improves system efficiency. In some embodiments, the processor 110 may invoke and execute the instructions, stored in the memory, for the Bluetooth based time synchronization method provided in embodiments of this application, to implement the Bluetooth based time synchronization method provided in embodiments of this application. In some other embodiments, the memory in the processor 110 may be further configured to store data related to the mobile phone 100.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like. In some other embodiments, after the mobile phone 100 enters an EDL mode, a host device may establish a communication connection to the mobile phone 100 through the USB interface, to access data in the mobile phone 100.

The charging management module 140 is configured to receive a charging input from a charger. The charging management module 140 supplies power to the mobile phone 100 by using the power management module 141 when charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the display screen 194, the camera 193, the wireless communication module 160, and the like.

A wireless communication function of the mobile phone 100 may be implemented through the antenna 1, the antenna 2, the mobile communication module 150, the wireless communication module 160, the modem processor, the baseband processor, and the like.

The antenna 1 and the antenna 2 are configured to transmit and receive electromagnetic wave signals.

The mobile communication module 150 may provide a solution, applied to the mobile phone 100, to wireless communication including 2G, 3G, 4G, 5G, and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules in the mobile communication module 150 may be disposed in a same component as at least some modules in the processor 110.

The wireless communication module 160 may provide a solution, applied to the mobile phone 100, to wireless communication including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), an infrared (infrared, IR) technology, or the like. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

The mobile phone 100 implements a display function by using the GPU, the display screen 194, the application processor, and the like. The GPU is a microprocessor for image processing, and is connected to the display screen 194 and the application processor. The GPU is configured to: perform mathematical and geometric calculation, and render an image. The processor 110 may include one or more GPUs that execute program instructions to generate or change display information.

The display screen 194 is configured to display an image, a video, and the like. The display screen 194 includes a display panel. The display panel may use a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the mobile phone 100 may include one display screen or N display screens 194, where N is a positive integer greater than 1.

The camera 193 is configured to capture a static image or a video. An optical image of an object is generated through a lens, and is projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into a standard image signal in a format such as RGB or YUV. In some embodiments, the mobile phone 100 may include one camera or N cameras 193, where N is a positive integer greater than 1.

The external memory interface 120 may be configured to connect to an external memory card, for example, a micro SD card, to extend a storage capability of the mobile phone 100. The external memory card communicates with the processor 110 through the external memory interface 120, to implement a data storage function. For example, files such as music and videos are stored in the external memory card.

The internal memory 121 may be configured to store computer-executable program code. The executable program code includes instructions. The internal memory 121 may include a program storage area and a data storage area. The program storage area may store an operating system, an application required by at least one function (for example, an application function corresponding to a function related), and the like. The data storage area may store data created in a process of using the mobile phone 100. In addition, the internal memory 121 may include a highspeed random access memory, and may further include a non-volatile memory, for example, at least one magnetic disk storage device, a flash storage device, or a universal flash storage (universal flash storage, UFS). The processor 110 runs the instructions stored in the internal memory 121 and/or the instructions stored in the memory disposed in the processor 110, to perform various function applications of the mobile phone 100.

The mobile phone 100 may implement an audio function such as music playback or recording by using the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to encode and decode an audio signal.

The speaker 170A, also referred to as a "loudspeaker", is configured to convert an audio electrical signal into a sound signal.

The receiver 170B, also referred to as an "earpiece", is configured to convert an audio electrical signal into a sound signal.

The microphone 170C, also referred to as a "mike" or a "mic", is configured to convert a sound signal into an electrical signal.

The headset jack 170D is configured to connect to a wired headset.

For example, the mobile phone 100 may further include one or more of the button 190, the motor 191, the indicator 192, and the SIM card interface 195 (or an eSIM card).

The EDL mode protection circuit is coupled to at least one pin of the processor 110, and the EDL mode protection circuit includes at least one connection terminal. When the EDL mode protection circuit is effective, for example, when the circuit enables the at least one pin of the processor, the mobile phone 100 may enter the EDL mode.

In some embodiments, the mobile phone 100 may further include a button (not shown), for example, a volume up button, a volume down button, or a power button. A user may enable the mobile phone 100 to enter the EDL mode by performing a combined operation on buttons of the mobile phone 100. For example, when the mobile phone 100 is in an off state, if it is detected that a plurality of buttons of the volume up button, the volume down button, and the power button are simultaneously pressed, the mobile phone 100 enters the EDL mode. For another example, when the mobile phone 100 is in an off state, if it is detected that a plurality of buttons of the volume up button, the volume down button, and the power button are simultaneously pressed, and the EDL mode protection circuit in the mobile phone 100 is in an effective state, the mobile phone 100 enters the EDL mode.

It may be understood that the structure of the mobile phone 100 shown in this embodiment of this application does not constitute a specific limitation on the mobile phone 100. In some other embodiments of this application, the mobile phone 100 may include more or fewer components than those shown in the figure, combine some components, split some components, or have different component arrangements. The components shown in the figure may be implemented by hardware, software, or a combination of software and hardware.

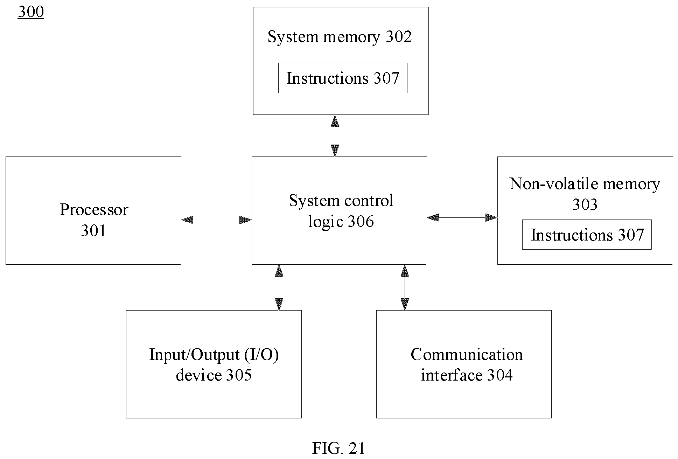

Further, FIG. 21 is a schematic diagram of a structure of an electronic device in some other embodiments of this application. In some embodiments of this application, the electronic device may be a notebook computer 300. As shown in FIG. 21, the notebook computer 300 includes one or more processors 301, a system memory 302, a non-volatile memory (Non-Volatile Memory, NVM) 303, a communication interface 304, an input/output (I/O) device 305, and system control logic 306 that is configured to couple with the processor 301, the system memory 302, the non-volatile memory 303, the communication interface 304, and the input/output (I/O) device 305.

The processor 301 may include one or more processing units. For example, a processing module or a processing circuit that may include a central processing unit CPU (Central Processing Unit), a graphics processing unit GPU (Graphics Processing Unit), a digital signal processor DSP (Digital Signal Processor), a microprocessor MCU (Micro-programmed Control Unit), an AI (Artificial Intelligence, artificial intelligence) processor, or a programmable logic device FPGA (Field Programmable Gate Array) may include one or more single-core or multicore processors. The processor 301 may be configured to execute instructions to implement the access control method provided in embodiments of this application.

The system memory 302 is a volatile memory, for example, a random access memory (Random Access Memory, RAM) or a double data rate synchronous dynamic random access memory (Double Data Rate Synchronous Dynamic Random Access Memory, DDR SDRAM). The system memory is configured to temporarily store data and/or instructions.

For example, in some embodiments, the system memory 302 may be configured to store the foregoing information and the like, or may be configured to store instructions of the Bluetooth based time synchronization method.

The non-volatile memory 303 may include one or more tangible and non-transitory computer-readable media that are configured to store data and/or instructions. In some embodiments, the non-volatile memory 303 may include any appropriate non-volatile memory such as a flash memory and/or any appropriate non-volatile storage device such as a hard disk drive (Hard Disk Drive, HDD), a compact disc (Compact Disc, CD), a digital versatile disc (Digital Versatile Disc, DVD), or a solid-state drive (Solid-State Drive, SSD). In some embodiments, the non-volatile memory 303 may alternatively be a removable storage medium, for example, a secure digital (Secure Digital, SD) memory card. In some other embodiments, the non-volatile memory 303 may be configured to store the key identifier, the signature information, the device identifier of the mobile phone 100, and the like, or may be configured to store instructions of the preset signature method corresponding to the key identifier.

Particularly, the system memory 302 and the non-volatile memory 303 may respectively include a temporary copy and a permanent copy of instructions 307. When the instructions 307 are executed by the processor 301, the notebook computer 300 may be enabled to implement the access control method provided in the embodiments of this application.

The communication interface 304 may include a transceiver, configured to provide a wired or wireless communication interface for the notebook computer 300, to communicate with any other appropriate device by using one or more networks. In some embodiments, the communication interface 304 may be integrated into another component of the notebook computer 300. For example, the communication interface 304 may be integrated into the processor 301. In some embodiments, the notebook computer 300 may communicate with another device through the communication interface 304.

The input/output (I/O) device 305 may include an input device such as a keyboard or a mouse, and an output device such as a display. A user may interact with the notebook computer 300 by using the input/output (I/O) device 305, for example, input instructions to a first application run on the notebook computer 300, to obtain a fuse position file, a device identifier file, and the like of the mobile phone 100 from the mobile phone 100.

The system control logic 206 may include any appropriate interface controller, so that another module of the notebook computer 300 provides any appropriate interface. For example, in some embodiments, the system control logic 306 may include one or more memory controllers, to provide interfaces connected to the system memory 302 and the non-volatile memory 303.

In some embodiments, at least one of the processors 301 may be packaged together with logic of one or more controllers used for the system control logic 306 to form a system in package (System in Package, SiP). In some other embodiments, at least one of the processors 301 may be further integrated onto a same chip with logic of one or more controllers used for the system control logic 306, to form a system on chip (System-on-Chip, SoC).

It may be understood that the structure of the notebook computer 300 shown in this embodiment of this application does not constitute a specific limitation on the notebook computer 300. In some other embodiments of this application, the notebook computer 300 may include more or fewer components than those shown in the figure, combine some components, split some components, or have different component arrangements. The components shown in the figure may be implemented by hardware, software, or a combination of software and hardware.

Embodiments of a mechanism disclosed in this application may be implemented in hardware, software, firmware, or a combination of these implementation methods. Embodiments of this application may be implemented as a computer program or program code that is executed on a programmable system, and the programmable system includes at least one processor, a storage system (including volatile and non-volatile memories and/or storage elements), at least one input device, and at least one output device.

The program code may be used to input instructions, to perform functions described in this application and generate output information. The output information may be applied to one or more output devices in a known manner. For a purpose of this application, a processing system includes any system having a processor such as a digital signal processor (DSP), a microcontroller, an application-specific integrated circuit (ASIC), or a microprocessor.

The program code may be implemented in a high-level procedural language or an object-oriented programming language, to communicate with the processing system. The program code may alternatively be implemented by using an assembly language or a machine language when needed. Actually, the mechanism described in this application is not limited to a scope of any particular programming language. In any case, the language may be a compiled language or an interpretive language.

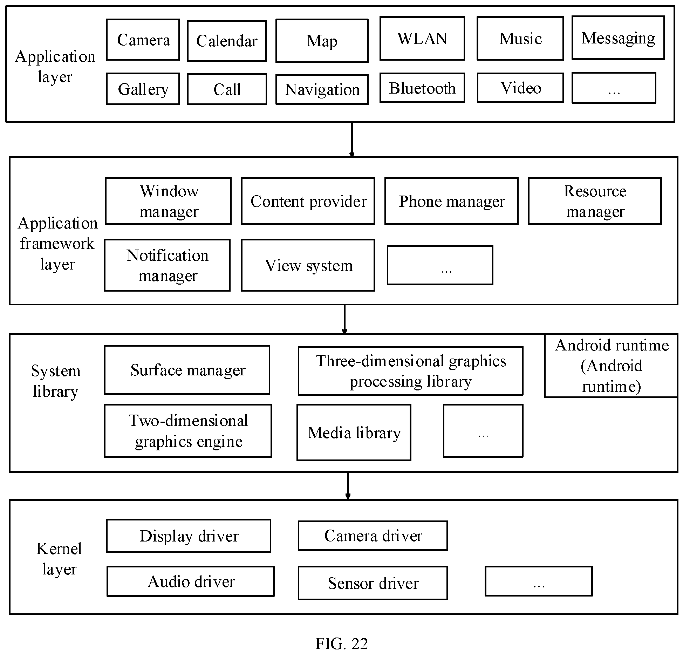

FIG. 22 is an architectural diagram of a mobile phone 100 according to some embodiments of this application. As shown in FIG. 22, an application framework layer may include a window manager, a content provider, a view system, a phone manager, a resource manager, a notification manager, and the like.

The window manager is configured to manage a window program. The window manager may obtain a size of a display screen, determine whether there is a status bar, perform screen locking, take a screenshot, and so on.

The content provider is configured to: store and obtain data, and enable the data to be accessed by an application. The data may include a video, an image, an audio, calls that are made and answered, a browsing history and bookmarks, an address book, and the like.

The view system includes visual controls such as a control for displaying a text and a control for displaying a picture. The view system may be configured to construct applications. A display interface may include one or more views. For example, a display interface including an SMS message notification icon may include a text display view and a picture display view.

The phone manager is configured to provide a communication function of the mobile phone 100, for example, management of a call status (including answering, declining, or the like).

The resource manager provides, for the application, various resources such as a localized character string, an icon, a picture, a layout file, and a video file.

The notification manager enables the application to display notification information in the status bar, and may be configured to transmit notification-type messages. Displayed information may automatically disappear after a short pause without user interaction. For example, the notification manager is configured to notify download completion or provide a message notification. The notification manager may alternatively provide a notification that appears in a top status bar of a system in a form of a graph or a scroll bar text, for example, a notification of an application that is run on a background, or may provide a notification that appears on the screen in a form of a dialog window. For example, text information is displayed in the status bar, a prompt tone is played, an electronic device vibrates, or an indicator light blinks.

An Android runtime includes a kernel library and a virtual machine. The Android runtime is responsible for scheduling and management of an Android system.

The kernel library includes two parts: a function that needs to be called by using a Java language and an Android kernel library.

An application layer and the application framework layer are run on the virtual machine. The virtual machine executes Java files of the application layer and the application framework layer as binary files. The virtual machine is configured to implement functions such as object lifecycle management, stack management, thread management, security and exception management, and garbage collection.

A kernel layer is a layer between hardware and software. The kernel layer includes at least a display driver, a camera driver, an audio driver, and a sensor driver.

A system library may include a plurality of functional modules, for example, a surface manager (surface manager, SM), a media library (Media Library, ML), a three-dimensional graphics processing library (for example, OpenGL ES), and a 2D graphics engine (for example, SGL).

The media library supports playback and recording in a plurality of commonly used audio and video formats, static image files, and the like. The media library may support a plurality of audio and video encoding formats such as MPEG4, H.264, MP3, AAC, AMR, JPG, and PNG.

Embodiments of a mechanism disclosed in this application may be implemented in hardware, software, firmware, or a combination of these implementation methods. Embodiments of this application may be implemented as a computer program or program code that is executed on a programmable system, and the programmable system includes at least one processor, a storage system (including volatile and non-volatile memories and/or storage elements), at least one input device, and at least one output device.

The program code may be used to input instructions, to perform functions described in this application and generate output information. The output information may be applied to one or more output devices in a known manner. For a purpose of this application, a processing system includes any system that has a processor such as a digital signal processor (Digital Signal Processor, DSP), a microcontroller, an application-specific integrated circuit (Application-Specific Integrated Circuit, ASIC), or a microprocessor.

The program code may be implemented in a high-level procedural language or an object-oriented programming language, to communicate with the processing system. The program code may alternatively be implemented by using an assembly language or a machine language when needed. Actually, the mechanism described in this application is not limited to a scope of any particular programming language. In any case, the language may be a compiled language or an interpretive language.

In some cases, the disclosed embodiments may be implemented by hardware, firmware, software, or any combination thereof. The disclosed embodiments may alternatively be implemented as instructions carried by or stored on one or more transitory or non-transitory machine-readable (for example, computer-readable) storage media, and the instructions may be read and executed by one or more processors. For example, the instructions may be distributed through a network or another computer-readable medium. Therefore, the machine-readable medium may include any mechanism for storing or transmitting information in a machine-readable (for example, computer-readable) form, including but not limited to a floppy disk, a compact disc, an optical disk, a read-only memory (CD-ROM), a magnetic disc, a read-only memory (Read-Only Memory, ROM), a random access memory (Random Access Memory, RAM), an erasable programmable read-only memory (Erasable Programmable Read-Only Memory, EPROM), an electrically erasable programmable read-only memory (Electrically Erasable Programmable Read-Only Memory, EEPROM), a magnetic card or an optical card, a flash memory, or a tangible and machine-readable memory configured to transmit information (for example, a carrier, an infrared signal, or a digital signal) by using transmitted signals in electrical, optical, acoustic, or other forms via the Internet. Therefore, the machine-readable medium includes any type of machine-readable medium that is suitable for storing or transmitting electronic instructions or information in a machine-readable (for example, computer-readable) form.

In the accompanying drawings, some structural or method features may be shown in a particular arrangement and/or sequence. However, it should be understood that such a particular arrangement and/or order may not be required. In some embodiments, these features may be arranged in a manner and/or a sequence different from those/that shown in the descriptive accompanying drawings. In addition, inclusion of the structural or method features in a particular figure does not imply that such features are required in all embodiments, and in some embodiments, these features may not be included or may be combined with other features.

It should be noted that all units/modules mentioned in the device embodiments of this application are logical units/modules. Physically, one logical unit/module may be one physical unit/module, or may be a part of one physical unit/module, or may be implemented by a combination of a plurality of physical units/modules. Physical implementations of these logical units/modules are not the most important, and a combination of functions implemented by these logical units/modules is a key to resolving technical problems proposed in this application. In addition, to highlight an innovative part of this application, a unit/module that is not closely related to resolving the technical problems proposed in this application is not introduced in the foregoing device embodiments of this application. This does not indicate that there is no other unit/module in the foregoing device embodiments.

It should be noted that, in examples and this specification of this patent, relational terms such as "first" and "second" are only used to distinguish one entity or operation from another entity or operation, and do not necessarily require or imply that any actual relationship or sequence exists between these entities or operations. Moreover, a term "include" or "contain" or any other variant is intended to cover non-exclusive inclusion, so that a process, a method, an object, or a device that includes a series of elements not only includes those elements but also includes other elements that are not expressly listed, or further includes elements inherent to such a process, method, object, or device. An element preceded by "including a ..." does not, without more constraints, preclude the existence of additional identical elements in the process, the method, the object, or the device that includes the element.

Although this application has been illustrated and described with reference to some specific embodiments of this application, a person of ordinary skill in the art should understand that various changes may be made to this application in form and detail without departing from the scope of this application.

## Claims

1. A Bluetooth based time synchronization method, comprising:

    performing, by a first electronic device, Bluetooth based time synchronization with a second electronic device, wherein the Bluetooth based time synchronization comprises N time synchronization subprocesses that are sequentially performed, and each time synchronization subprocess has one round trip time and one initial sub-time offset;

    in a process of performing the Bluetooth based time synchronization, obtaining, by the first electronic device based on the N round trip times and the N initial sub-time offsets of the N time synchronization subprocesses, M valid sub-time offsets corresponding to M time synchronization subprocesses, wherein $M \leq N$, and the M time synchronization subprocesses are M time synchronization subprocesses in the N time synchronization subprocesses; and

    obtaining, by the first electronic device, a time offset between the first electronic device and the second electronic device based on the M valid sub-time offsets.

2. The method according to claim 1, wherein a first time synchronization subprocess is one of the N time synchronization subprocesses, and the first time synchronization subprocess comprises:

    receiving, by the first electronic device, a time synchronization frame sent by the second electronic device, wherein the time synchronization frame is carried by an indication sent by a Bluetooth module of the second electronic device; and

    sending, by the first electronic device, an acknowledgment message in response to the time synchronization frame to the second electronic device, wherein the acknowledgment message is carried by a confirm sent by a Bluetooth module of the first electronic device, wherein

    $T_{LPi} = T_{Ei} - T_{TXi}$, wherein $T_{LPi}$ is a round trip time of the first time synchronization subprocess, $T_{Ei}$ is an acknowledgment receiving moment at which the second electronic device receives the acknowledgment message, and $T_{TXi}$ is a time synchronization sending moment at which the second electronic device sends the time synchronization frame.

3. The method according to claim 2, wherein the time synchronization frame comprises $T_{TXi}$ and $T_{Ei-1}$, and $T_{Ei-1}$ is an acknowledgment receiving moment at which the second electronic device receives a previous acknowledgment message of the acknowledgment message.

4. The method according to claim 2 or 3, wherein the initial sub-time offset comprises any one of the following:

$\Delta_i = T_{RXi} - T_{TXi}$, or $\Delta_i = T_{TXi} - T_{RXi}$, wherein $\Delta_i$ is the initial sub-time offset, $T_{RXi}$ is a time synchronization receiving moment at which the first electronic device receives the time synchronization frame, and $T_{TXi}$ is the time synchronization sending moment at which the second electronic device sends the time synchronization frame; or
$\Delta_i = T_{RXi} - T_{Ei}$, or $\Delta_i = T_{Ei} - T_{RXi}$, wherein $\Delta_i$ is the initial sub-time offset, $T_{RXi}$ is a time synchronization receiving moment at which the first electronic device receives the time synchronization frame, and $T_{Ei}$ is the acknowledgment receiving moment at which the second electronic device receives the acknowledgment message.

5. The method according to claim 1, wherein a first time synchronization subprocess is one of the N time synchronization subprocesses, and the first time synchronization subprocess comprises:

sending, by the first electronic device, a time synchronization frame to the second electronic device, wherein the time synchronization frame is carried by an indication sent by a Bluetooth module of the first electronic device;
receiving, by the first electronic device, an acknowledgment message that is sent by the second electronic device in response to the time synchronization frame, wherein the acknowledgment message is carried by a confirm sent by a Bluetooth module of the second electronic device; and
receiving, by the first electronic device, a response frame sent by the second electronic device, wherein $T_{LPi} = T_{Ei} - T_{TXi}$, wherein $T_{LPi}$ is a round trip time of the first time synchronization subprocess, $T_{Ei}$ is an acknowledgment receiving moment at which the first electronic device receives the acknowledgment message, and $T_{TXi}$ is a time synchronization sending moment at which the first electronic device sends the time synchronization frame.

6. The method according to claim 5, wherein the response frame comprises $T_{RXi}$, and $T_{RXi}$ is a time synchronization receiving moment at which the second electronic device receives the time synchronization frame.

7. The method according to claim 5 or 6, wherein the initial sub-time offset comprises any one of the following:

$\Delta_i = T_{TXi} - T_{RXi}$, or $\Delta_i = T_{RXi} - T_{TXi}$, wherein $\Delta_i$ is the initial sub-time offset, $T_{TXi}$ is the time synchronization sending moment at which the first electronic device sends the time synchronization frame, and $T_{RXi}$ is the time synchronization receiving moment at which the second electronic device receives the time synchronization frame; or
$\Delta_i = T_{Ei} - T_{RXi}$, or $\Delta_i = T_{RXi} - T_{Ei}$, wherein $\Delta_i$ is the initial sub-time offset, $T_{Ei}$ is the acknowledgment receiving moment at which the first electronic device receives the acknowledgment message, and $T_{RXi}$ is the time synchronization receiving moment at which the second electronic device receives the time synchronization frame.

8. The method according to claim 5, wherein the response frame comprises $T_{RXi,T}$ and $T_{TXi,T}$, $T_{RXi,T}$ is a time synchronization receiving moment at which the second electronic device receives the time synchronization frame, and $T_{TXi,T}$ is a response sending moment at which the second electronic device sends the response frame.

9. The method according to claim 5 or 8, wherein the initial sub-time offset comprises any one of the following:

$\Delta_i = T_{TXi,P} - T_{RXi,T}$, or $\Delta_i = T_{RXi,T} - T_{TXi,P}$, wherein $\Delta_i$ is the initial sub-time offset, $T_{TXi,P}$ is a time synchronization sending moment at which the first electronic device sends the time synchronization frame, and $T_{RXi,T}$ is the time synchronization receiving moment at which the second electronic device receives the time synchronization frame;
$\Delta_i = T_{Ei} - T_{RXi,T}$, or $\Delta_i = T_{RXi,T} - T_{Ei}$, wherein $\Delta_i$ is the initial sub-time offset, $T_{Ei}$ is the acknowledgment receiving moment at which the first electronic device receives the acknowledgment message, and $T_{RXi,T}$ is the time synchronization receiving moment at which the second electronic device receives the time synchronization

frame;

$\Delta_i = (T_{TXi,P} - T_{RXi,T} + T_{RXi,P} - T_{TXi,T})/2$, or $\Delta_i = (T_{RXi,T} - T_{TXi,P} + T_{TXi,T} - T_{RXi,P})/2$, wherein $\Delta_i$ is the initial sub-time offset, $T_{TXi,P}$ is a time synchronization sending moment at which the first electronic device sends the time synchronization frame, $T_{RXi,T}$ is the time synchronization receiving moment at which the second electronic device receives the time synchronization frame, $T_{RXi,P}$ is a response receiving moment at which the first electronic device receives the response frame, and $T_{TXi,T}$ is the response sending moment at which the second electronic device sends the response frame; or

$\Delta_i = T_{RXi,P} - T_{TXi,T}$, or $\Delta_i = T_{TXi,T} - T_{RXi,P}$, wherein $\Delta_i$ is the initial sub-time offset, $T_{RXi,P}$ is a response receiving moment at which the first electronic device receives the response frame, and $T_{TXi,T}$ is the response sending moment at which the second electronic device sends the response frame.

10. The method according to claim 1, wherein a first time synchronization subprocess is one of the N time synchronization subprocesses, and the first time synchronization subprocess comprises:

receiving, by the first electronic device, a time synchronization frame sent by the second electronic device, wherein the time synchronization frame is carried by an indication sent by a Bluetooth module of the second electronic device;

sending, by the first electronic device, an acknowledgment message in response to the time synchronization frame to the second electronic device, wherein the acknowledgment message is carried by a confirm sent by a Bluetooth module of the first electronic device; and

sending, by the first electronic device, a response frame to the second electronic device, wherein $T_{LPi} = T_{Ei} - T_{TXi,T}$, wherein $T_{LPi}$ is a round trip time of the first time synchronization subprocess, $T_{Ei}$ is an acknowledgment receiving moment at which the second electronic device receives the acknowledgment message, and $T_{TXi,T}$ is a time synchronization sending moment at which the second electronic device sends the time synchronization frame.

11. The method according to claim 10, wherein the time synchronization frame comprises $T_{E(i-1)}$, $T_{RX(i-1),T}$, and $T_{TXi,T}$, $T_{E(i-1)}$ is an acknowledgment receiving moment at which the second electronic device receives a previous acknowledgment message of the acknowledgment message, $T_{RX(i-1),T}$ is a response receiving moment at which the second electronic device receives a previous response frame of the response frame, and $T_{TXi,T}$ is the moment at which the second electronic device sends the time synchronization frame.

12. The method according to claim 10 or 11, wherein the initial sub-time offset comprises any one of the following:

$\Delta_i = T_{RXi,P} - T_{TXi,T}$, or $\Delta_i = T_{TXi,T} - T_{RXi,P}$, wherein $\Delta_i$ is the initial sub-time offset, $T_{RXi,P}$ is a time synchronization receiving moment at which the first electronic device receives the time synchronization frame, and $T_{TXi,T}$ is the time synchronization sending moment at which the second electronic device sends the time synchronization frame;

$\Delta_i = T_{RXi,P} - T_{Ei}$, or $\Delta_i = T_{Ei} - T_{RXi,P}$, wherein $\Delta_i$ is the initial sub-time offset, $T_{RXi,P}$ is a time synchronization receiving moment at which the first electronic device receives the time synchronization frame, and $T_{Ei}$ is the acknowledgment receiving moment at which the second electronic device receives the acknowledgment message;

$\Delta_i = (T_{RXi,P} - T_{TXi,T} + T_{TXi,P} - T_{RXi,T})/2$, or $\Delta_i = (T_{TXi,T} - T_{RXi,P} + T_{RXi,T} - T_{TXi,P})/2$, wherein $\Delta_i$ is the initial sub-time offset, $T_{RXi,P}$ is a time synchronization receiving moment at which the first electronic device receives the time synchronization frame, $T_{TXi,T}$ is the time synchronization sending moment at which the second electronic device sends the time synchronization frame, $T_{TXi,P}$ is a response sending moment at which the first electronic device sends the response frame, and $T_{RXi,T}$ is a response receiving moment at which the second electronic device receives the response frame; or

$\Delta_i = T_{TXi,P} - T_{RXi,T}$, or $\Delta_i = T_{RXi,T} - T_{TXi,P}$, wherein $\Delta_i$ is the initial sub-time offset, $T_{TXi,P}$ is a response sending moment at which the first electronic device sends the response frame, and $T_{RXi,T}$ is a response receiving moment at which the second electronic device receives the response frame.

13. The method according to claim 3 or 11, wherein

the time synchronization frame further comprises a sequence number, wherein the sequence number indicates a ranking of the time synchronization frame in the N time synchronization subprocesses; and/or
the time synchronization frame further comprises a Bluetooth interval $T_0$.

14. The method according to claim 6 or 8, wherein

the response frame further comprises a sequence number, wherein the sequence number indicates a ranking of the response frame in the N time synchronization subprocesses; and/or

the response frame further comprises a Bluetooth interval $T_0$.

15. The method according to any one of claims 1 to 14, wherein the obtaining, by the first electronic device based on the N round trip times and the N initial sub-time offsets of the N time synchronization subprocesses, M valid sub-time offsets corresponding to M time synchronization subprocesses comprises: performing, by the first electronic device, the following operation on each of the N round trip times:

determining, by the first electronic device, whether a first round trip time meets a preset condition; and

when the first round trip time meets the preset condition, using an initial sub-time offset corresponding to the first round trip time as a valid sub-time offset; or

when the first round trip time does not meet the preset condition, deleting an initial sub-time offset corresponding to the first round trip time, wherein

the first round trip time is a round trip time of the first time synchronization subprocess, the first time synchronization subprocess is any one of the N time synchronization subprocesses, and the preset condition comprises: $2T_0 - \varepsilon \le$ Round trip time $\le 2T_0 + \varepsilon$, wherein $0 < \varepsilon \le T_0$, and $T_0$ is the Bluetooth interval.

16. The method according to any one of claims 1 to 14, wherein the obtaining, by the first electronic device based on the N round trip times, M valid sub-time offsets corresponding to M time synchronization subprocesses comprises: performing, by the first electronic device, the following operation on each of the N round trip times:

determining, by the first electronic device, whether a first round trip time meets a preset condition; and

when the first round trip time meets the preset condition, correcting an initial sub-time offset corresponding to the first round trip time, and using a corrected initial sub-time offset as a valid sub-time offset; or

when the first round trip time does not meet the preset condition, using an initial sub-time offset corresponding to the first round trip time as a valid sub-time offset, wherein

the first round trip time is a round trip time of the first time synchronization subprocess, the first time synchronization subprocess is any one of the N time synchronization subprocesses, and the preset condition comprises: Round trip time $> 2T_0 + \Phi$, wherein $0 < \Phi < 2T_0$.

17. The method according to claim 16, wherein the initial sub-time offset is corrected in the following manner: $\Delta_i' = \Delta_i - \delta$, wherein $\Delta_i'$ is a corrected initial sub-time offset, $\Delta_i$ is the initial sub-time offset, and $\delta$ is a correction compensation amount.

18. The Bluetooth based time synchronization method according to claim 17, wherein the correction compensation amount is the Bluetooth interval $T_0$.

19. The Bluetooth based time synchronization method according to any one of claims 1 to 18, wherein before the process of performing the Bluetooth based time synchronization is performed, the Bluetooth based time synchronization method further comprises:

synchronizing, by the first electronic device and the second electronic device, a clock value of a local clock of the first electronic device and a clock value of a local clock of the second electronic device by using a synchronization message.

20. An electronic device, comprising:

a memory, configured to store instructions; and

one or more processors, wherein when the instructions are executed by the one or more processors, the Bluetooth based time synchronization method according to any one of claims 1 to 19 is implemented.

21. A computer-readable storage medium, wherein the computer-readable storage medium stores instructions, and when the instructions are executed on an electronic device, the electronic device is enabled to perform the Bluetooth based time synchronization method according to any one of claims 1 to 19.

22. A computer program product, wherein the computer program product comprises instructions, and when being executed by one or more processors, the instructions are used to implement the Bluetooth based time synchronization method according to any one of claims 1 to 19.

1

| First electronic device 10<br><br>Bluetooth module 11 | Bluetooth based time synchronization<br>⬅➡<br>⬅➡ | Second electronic device 20<br><br>Bluetooth module 21 |

FIG. 1(a)

FIG. 1(b)

| Mobile phone 100 | | Tag device 200 | |
|---|---|---|---|
| Ultrasonic module 102 | Bluetooth module 101 | Bluetooth module 201 | Ultrasonic module 202 |

S201: Perform Bluetooth based time synchronization, to enable the mobile phone 100 to determine a comprehensive time offset $\Delta$ between the mobile phone 100 and the tag device 200

⋮

S202: Send an ultrasonic signal

Ultrasonic sending moment $t_1$

S203: Ultrasonic sending moment $t_1$ at which the ultrasonic signal is sent

Ultrasonic receiving moment $t_2$

S204: Determine a distance between the mobile phone 100 and the tag device 200 based on the comprehensive time offset $\Delta$, the ultrasonic wave sending moment $t_1$, and the ultrasonic receiving moment $t_2$

FIG. 2

FIG. 3

FIG. 4

FIG. 5

Convergence range

Sub-time offset

$\Delta_1'$ $\Delta_1$

1

2 $\Delta_2$

3 $\Delta_3$ $\Delta_3'$

$\vdots$

N $\Delta_N$

Quantity of time
synchronization subprocesses

FIG. 6

Sub-time
offset/ms

$l_0$

Quantity of time synchronization subprocesses

FIG. 7(a)

FIG. 7(b)

FIG. 7(c)

Mobile phone 100

Tag device 200

Time synchronization start message ($T_{Sync}$)

1st subprocess

$Indication_1$ ($SEQ_1$, $T_{TX1}$, 0, and $T_{01}$)

$T_{TX1}$

$T_{RX1}$

$Confirm_1$

$T_{E1}$

⋮

$(i-1)^{th}$ subprocess

$Indication_{(i-1)}$ ($SEQ_{(i-1)}$, $T_{TX(i-1)}$, $T_{E(i-2)}$, and $T_{0(i-1)}$)

$T_{TXE(i-1)}$

$T_{RX(i-1)}$

$Confirm_{(i-1)}$

$T_{E(i-1)}$

$i^{th}$ subprocess

$Indication_i$ ($SEQ_i$, $T_{TXi}$, $T_{E(i-1)}$, and $T_{0i}$)

$T_{TXi}$

$T_{RXi}$

$Confirm_i$

$T_{Ei}$

⋮

$N^{th}$ subprocess

$Indication_N$ ($SEQ_N$, $T_{TXN}$, $T_{E(N-1)}$, and $T_{0N}$)

$T_{TXN}$

$T_{RXN}$

$Confirm_N$

$T_{EN}$

FIG. 8(a)

i$^{th}$ subprocess

Mobile phone 100

Tag device 200

Indication$_i$ (SEQ$_i$, T$_{TXi}$, T$_{E(i-1)}$, and T$_{0i}$)     T$_{TXi}$

$\Delta_{i1} = T_{RXi} - T_{TXi}$     T$_{RXi}$

$\Delta_{i2} = T_{RXi} - T_{Ei}$     Confirm$_i$

$T_{LPi} = T_{Ei} - T_{TXi}$

T$_{Ei}$

Indication$_{(i+1)}$ (SEQ$_{(i+1)}$, T$_{TX(i+1)}$, T$_{Ei}$, and T$_{0(i+1)}$)     T$_{TX(i+1)}$

T$_{Rx(i+1)}$

FIG. 8(b)

S901

A mobile phone 100 sends a synchronization message to a tag device 200, where the synchronization message carries a mobile phone clock value T$_{Sync}$ of the mobile phone 100, and the tag device 200 sets a tag clock value of the tag device 200 based on the mobile phone clock value T$_{Sync}$

S902

The mobile phone 100 performs Bluetooth based time synchronization with the tag device 200; and the mobile phone 100 determines a sub-time offset $\Delta_i$ (where i = 1, 2, 3, ..., or N) corresponding to each time synchronization subprocess in a Bluetooth based time synchronization process, and when the time synchronization subprocess meets a preset adjustment condition, adjusts, according to preset adjustment logic, the sub-time offset $\Delta_i$ corresponding to each time synchronization subprocess, to obtain an adjusted sub-time offset $\Delta_j$ (where j = 1, 2, 3, ..., or M) corresponding to the Bluetooth based time synchronization process, where N ≥ M

S903

The mobile phone 100 obtains a comprehensive time offset $\Delta$ between the mobile phone 100 and the tag device 200 based on the adjusted sub-time offset $\Delta_j$ (where j = 1, 2, 3, ..., or M) corresponding to the Bluetooth based time synchronization process

FIG. 9

A tag device 200 sends a time synchronization frame to a mobile phone 100, and records a time synchronization sending moment $T_{TX}$ at which the time synchronization frame is sent — S1001

The mobile phone 100 receives the time synchronization frame sent by the tag device 200, and records a time synchronization receiving moment $T_{RX}$ at which the time synchronization frame is received — S1002

The mobile phone 100 sends an acknowledgment message in response to the time synchronization frame to the tag device 200 — S1003

The tag device 200 receives the acknowledgment message sent by the mobile phone 100, and records an acknowledgment receiving moment $T_E$ at which the acknowledgment message is received — S1004

The tag device 200 sends a feedback message to the mobile phone 100, where the feedback message includes the acknowledgment receiving moment $T_E$ — S1005

The mobile phone 100 receives the feedback message sent by the tag device 200, and calculates a sub-time offset $\Delta_i$ based on at least some data in the time synchronization sending moment $T_{TX}$, the time synchronization receiving moment $T_{RX}$, and the acknowledgment receiving moment $T_E$ — S1006

The mobile phone 100 calculates a round trip time, and determines, based on the round trip time $T_{LPi}$, whether a time synchronization subprocess corresponding to the sub-time offset $\Delta_i$ meets a preset adjustment condition — S1007

No — S1008

Yes — S1009

The mobile phone 100 uses the sub-time offset $\Delta_i$ as an adjusted sub-time offset $\Delta_i'$

The mobile phone 100 adjusts the sub-time offset $\Delta_i$ according to preset adjustment logic, to obtain an adjusted sub-time offset $\Delta_i'$

The mobile phone 100 uses the adjusted sub-time offset $\Delta_i'$ as an adjusted sub-time offset $\Delta_i$ corresponding to a Bluetooth based time synchronization process — S1010

FIG. 10

FIG. 11(a)

| Mobile phone 100 | | Tag device 200 |

$i^{th}$ subprocess

Indication$_i$ (SEQ$_i$)

$T_{TXi}$

$T_{LPi} = T_{Ei} - T_{TXi}$

$T_{Ei}$

Confirm$_i$

$T_{RX1}$

$\Delta_{i1} = T_{TXi} - T_{RXi}$

$\Delta_{i2} = T_{Ei} - T_{RXi}$

Response frame (SEQ$_i$, T$_{RXi}$, and T$_{0i}$)

FIG. 11(b)

S1201

A mobile phone 100 sends a synchronization message to a tag device 200, where the synchronization message carries a mobile phone clock value $T_{Sync}$ of the mobile phone 100, and the tag device 200 sets a tag clock value of the tag device 200 based on the mobile phone clock value $T_{Sync}$

S1202

The mobile phone 100 performs Bluetooth based time synchronization with the tag device 200; and the mobile phone 100 determines a sub-time offset $\Delta_i$ (where i = 1, 2, 3, ..., or N) corresponding to each time synchronization subprocess in a Bluetooth based time synchronization process, and when the time synchronization subprocess meets a preset adjustment condition, adjusts, according to preset adjustment logic, the sub-time offset $\Delta_i$ corresponding to each time synchronization subprocess, to obtain an adjusted sub-time offset $\Delta_j$ (where j = 1, 2, 3, ..., or M) corresponding to the Bluetooth based time synchronization process, where N ≥ M

S1203

The mobile phone 100 obtains a comprehensive time offset $\Delta$ between the mobile phone 100 and the tag device 200 based on the adjusted sub-time offset $\Delta_j$ (where j = 1, 2, 3, ..., or M) corresponding to the Bluetooth based time synchronization process

FIG. 12

| A mobile phone 100 sends a time synchronization frame to a tag device 200, and records a time synchronization sending moment $T_{TX}$ at which the time synchronization frame is sent | S1301 |

| The tag device 200 receives the time synchronization frame sent by the mobile phone 100, and records a time synchronization receiving moment $T_{RX}$ at which the time synchronization frame is received | S1302 |

| The tag device 200 sends an acknowledgment message in response to the time synchronization frame to the mobile phone 100 | S1303 |

| The mobile phone 100 receives the acknowledgment message sent by the tag device 200, and records an acknowledgment receiving moment $T_E$ at which the acknowledgment message is received | S1304 |

| The tag device 200 sends a response frame to the mobile phone 100, where the response frame carries the time synchronization receiving moment $T_{RX}$ | S1305 |

| The mobile phone 100 receives the response frame sent by the tag device 200, and calculates a sub-time offset $\Delta_i$ based on at least some data in the time synchronization sending moment $T_{TX}$, the time synchronization receiving moment $T_{RX}$, and the acknowledgment receiving moment $T_E$ | S1306 |

S1307

The mobile phone 100 calculates a round trip time, and determines, based on the round trip time $T_{LPi}$, whether a time synchronization subprocess corresponding to the sub-time offset $\Delta_i$ meets a preset adjustment condition

No

S1308

| The mobile phone 100 uses the sub-time offset $\Delta_i$ as an adjusted sub-time offset $\Delta_i'$ |

Yes    S1309

| The mobile phone 100 adjusts the sub-time offset $\Delta_i$ according to preset adjustment logic, to obtain an adjusted sub-time offset $\Delta_i'$ |

| The mobile phone 100 uses the adjusted sub-time offset $\Delta_i'$ as an adjusted sub-time offset $\Delta_j$ corresponding to a Bluetooth based time synchronization process | S1310 |

FIG. 13

Mobile phone 100      Tag device 200

$T_{Sync}$

1st subprocess

$T_{TX1,P}$   Indication$_1$ (SEQ$_1$)   $T_{RX1,T}$

$T_{E1}$   Confirm$_1$   $T_{TX1,T}$

$T_{RX1,P}$   Response frame (SEQ$_1$, $T_{RX1,T}$, $T_{TX1,T}$, and $T_{01}$)

$(i-1)^{th}$ subprocess

$T_{TX(i-1),P}$   Indication$_{(i-1)}$ (SEQ$_{(i-1)}$)   $T_{RX(i-1),T}$

$T_{E(i-1)}$   Confirm$_{(i-1)}$   $T_{TX(i-1),T}$

$T_{RX(i-1),P}$   Response frame (SEQ$_{(i-1)}$, $T_{RX(i-1),T}$, $T_{TX(i-1),T}$, and $T_{0(i-1)}$)

$i^{th}$ subprocess

$T_{TXi,P}$   Indication$_i$ (SEQ$_i$)   $T_{RXi,T}$

$T_{Ei}$   Confirm$_i$   $T_{TXi,T}$

$T_{RXi,P}$   Response frame (SEQ$_i$, $T_{RXi,T}$, $T_{TXi,T}$, and $T_{0i}$)

$N^{th}$ subprocess

$T_{TXN,P}$   Indication$_N$ (SEQ$_N$)   $T_{RXN,T}$

$T_{EN}$   Confirm$_N$   $T_{TXN,T}$

$T_{RXN,P}$   Response frame (SEQ$_N$, $T_{RXN,T}$, $T_{TXN,T}$, and $T_{0N}$)

FIG. 14(a)

Mobile phone 100                                    Tag device 200

$i^{th}$ subprocess

$T_{TXi, P}$   Indication$_i$ (SEQ$_i$)                      $T_{RXi,T}$   $\Delta_{i1} = T_{TXi,P} - T_{RXi,T}$

$T_{LPi} = T_{Ei} -$   $T_{Ei}$   Confirm$_i$                              $\Delta_{i2} = T_{Ei} - T_{RXi,T}$
$T_{TXi, P}$

$\Delta_{i3} = (T_{TXi,P} -$                                            $T_{TXi,T}$   $\Delta_{i4} = T_{RXi,P} - T_{TXi,T}$
$T_{RXi,T} +$
$T_{RXi, P} - T_{TXi,}$   $T_{RXi, P}$   Response frame (SEQ$_i$, $T_{RXi, T}$, $T_{TXi, T}$,
$_{T})/2$                          and $T_{0i}$)

FIG. 14(b)

S1501

A mobile phone 100 sends a synchronization message to a tag device 200,
where the synchronization message carries a mobile phone clock value $T_{Sync}$
of the mobile phone 100, and the tag device 200 sets a tag clock value of the
tag device 200 based on the mobile phone clock value $T_{Sync}$

S1502

The mobile phone 100 performs Bluetooth based time synchronization with
the tag device 200; and the mobile phone 100 determines a sub-time offset
$\Delta_i$ (where i = 1, 2, 3, ..., or N) corresponding to each time synchronization
subprocess in a Bluetooth based time synchronization process, and when the
time synchronization subprocess meets a preset adjustment condition,
adjusts, according to preset adjustment logic, the sub-time offset $\Delta_i$
corresponding to each time synchronization subprocess, to obtain an
adjusted sub-time offset $\Delta_j$ (where j = 1, 2, 3, ..., or M) corresponding to the
Bluetooth based time synchronization process, where N ≥ M

S1503

The mobile phone 100 obtains a comprehensive time offset $\Delta$ between the
mobile phone 100 and the tag device 200 based on the adjusted sub-time
offset $\Delta_j$ (where j = 1, 2, 3, ..., or M) corresponding to the Bluetooth based
time synchronization process

FIG. 15

A mobile phone 100 sends a time synchronization frame to a tag device 200, and records a time synchronization sending moment $T_{TX,P}$ at which the time synchronization frame is sent

S1601

The tag device 200 receives the time synchronization frame sent by the mobile phone 100, and records a time synchronization receiving moment $T_{RX,T}$ at which the time synchronization frame is received

S1602

The tag device 200 sends an acknowledgment message in response to the time synchronization frame to the mobile phone 100

S1603

The mobile phone 100 receives the acknowledgment message sent by the tag device 200, and records an acknowledgment receiving moment $T_E$ at which the acknowledgment message is received

S1604

The tag device 200 sends a response frame to the mobile phone 100, where the response frame carries the time synchronization receiving moment $T_{RX,T}$ and a response sending moment $T_{TX,T}$

S1605

The mobile phone 100 receives the response frame sent by the tag device 200, and calculates a sub-time offset $\Delta_i$ based on at least some data in the time synchronization sending moment $T_{TX,P}$, the time synchronization receiving moment $T_{RX,T}$, and the acknowledgment receiving moment $T_E$

S1606

The mobile phone 100 calculates a round trip time, and determines, based on the round trip time $T_{LPi}$, whether a time synchronization subprocess corresponding to the sub-time offset $\Delta_i$ meets a preset adjustment condition

S1607

No

Yes

S1608

The mobile phone 100 uses the sub-time offset $\Delta_i$ as an adjusted sub-time offset $\Delta_i'$

S1609

The mobile phone 100 adjusts the sub-time offset $\Delta_i$ according to preset adjustment logic, to obtain an adjusted sub-time offset $\Delta_i'$

The mobile phone 100 uses the adjusted sub-time offset $\Delta_i'$ as an adjusted sub-time offset $\Delta_j$ corresponding to a Bluetooth based time synchronization process

S1610

FIG. 16

Mobile phone 100 | Tag device 200

$T_{Sync}$

Indication $(SEQ_1, T_{TX1,T}, 0, 0,$ and $T_{01})$ $\quad T_{TX1,T}$

1st subprocess

$T_{RX1,P}$ — Confirm — $T_{E1}$

$T_{TX1,P}$

Response frame $(SEQ_1)$ $\quad T_{RX1,T}$

⋮ ⋮

Indication $(SEQ_{(i-1)}, T_{TX(i-1),T}, T_{RX(i-2),T}, T_{E(i-2)},$ and $T_{0(i-1)})$ $\quad T_{TX(i-1),T}$

$(i-1)^{th}$ subprocess

$T_{RX(i-1),P}$ — $Confirm_{(i-1)}$ — $T_{E(i-1)}$

$T_{TX(i-1),P}$

Response frame $(SEQ_{(i-1)})$ $\quad T_{RX(i-1),T}$

Indication$_i$ $(SEQ_i, T_{TXi,T}, T_{RX(i-1),T}, T_{E(i-1)},$ and $T_{0i})$ $\quad T_{TXi,T}$

$i^{th}$ subprocess

$T_{RXi,P}$ — $Confirm_i$ — $T_{Ei}$

$T_{TXi,P}$

Response frame $(SEQ_i)$ $\quad T_{RXi,T}$

⋮ ⋮

Indication $(SEQ_N, T_{TXN,T}, T_{RX(N-1),T}, T_{E(N-1)},$ and $T_{0N})$ $\quad T_{TXN,T}$

$N^{th}$ subprocess

$T_{RXN,P}$ — Confirm — $T_{EN}$

$T_{TXN,P}$

Response frame $(SEQ_N)$ $\quad T_{RXN,T}$

FIG. 17(a)

Mobile phone 100

Tag device 200

$i^{th}$ subprocess

$Indication_i$ (SEQ_i, $T_{TXi, T}$, $T_{RX(i-1), T}$, $T_{E(i-1)}$, and $T_{0i}$)

$T_{TXi,T}$

$\Delta_{i1} = T_{RXi,P} - T_{TXi,T}$

$T_{RXi, P}$

$T_{LPi} = T_{Ei} - T_{TXi,T}$

$\Delta_{i2} = T_{RXi, P} - T_{Ei}$

Confirm

$T_{Ei}$

$\Delta_{i4} = T_{TXi,P} - T_{RXi,T}$

$T_{TXi, P}$

$\Delta_{i3} = (T_{RXi, P} - T_{TXi, T} + T_{TXi, P} - T_{RXi, T})/2$

Response frame (SEQ_1)

$T_{RXi,T}$

$Indication_{(i+1)}$ (SEQ_{(i+1)}, $T_{TX(i+1), T}$, $T_{RXi, T}$, $T_{Ei}$, and $T_{0(i+1)}$)

$T_{TX(i+1),T}$

$T_{RX(i+1),P}$

FIG. 17(b)

S1801

A mobile phone 100 sends a synchronization message to a tag device 200, where the synchronization message carries a mobile phone clock value $T_{Sync}$ of the mobile phone 100, and the tag device 200 sets a tag clock value of the tag device 200 based on the mobile phone clock value $T_{Sync}$

S1802

The mobile phone 100 performs Bluetooth based time synchronization with the tag device 200; and the mobile phone 100 determines a sub-time offset $\Delta_i$ (where i = 1, 2, 3, ..., or N) corresponding to each time synchronization subprocess in a Bluetooth based time synchronization process, and when the time synchronization subprocess meets a preset adjustment condition, adjusts, according to preset adjustment logic, the sub-time offset $\Delta_i$ corresponding to each time synchronization subprocess, to obtain an adjusted sub-time offset $\Delta_j$ (where j = 1, 2, 3, ..., or M) corresponding to the Bluetooth based time synchronization process, where $N \geq M$

S1803

The mobile phone 100 obtains a comprehensive time offset $\Delta$ between the mobile phone 100 and the tag device 200 based on the adjusted sub-time offset $\Delta_j$ (where j = 1, 2, 3, ..., or M) corresponding to the Bluetooth based time synchronization process

FIG. 18

S1901

A tag device 200 sends a time synchronization frame to a mobile phone 100, and records a time synchronization sending moment $T_{TX,T}$ at which the time synchronization frame is sent

S1902

The mobile phone 100 receives the time synchronization frame sent by the tag device 200, and records a time synchronization receiving moment $T_{RX,P}$ at which the time synchronization frame is received

S1903

The mobile phone 100 sends an acknowledgment message in response to the time synchronization frame to the tag device 200

S1904

The tag device 200 receives the acknowledgment message sent by the mobile phone 100, and records an acknowledgment receiving moment $T_E$ at which the acknowledgment message is received

S1905

The mobile phone 100 sends a response frame to the tag device 200, and records a response sending moment $T_{TX,P}$ at which the response frame is sent

S1906

The tag device 200 receives the response frame, and records a response receiving time moment $T_{RX,T}$ at which the response frame is received

S1907

The tag device 200 sends a feedback message to the mobile phone 100, where the feedback message includes the time synchronization sending moment $T_{TX,T}$, the response receiving moment $T_{RX,T}$, and the acknowledgment receiving moment $T_E$

TO
FIG. 19B

FIG. 19A

CONT.
FROM
FIG. 19A

S1908

The mobile phone 100 receives the feedback message, and calculates a sub-time offset $\Delta_i$ based on the time synchronization sending moment $T_{TX,T}$, the time synchronization receiving moment $T_{RX,P}$, the response sending moment $T_{TX,P}$, the response receiving moment $T_{RX,T}$, and the acknowledgment receiving moment $T_E$

S1909

The mobile phone 100 calculates a round trip time, and determines, based on the round trip time $T_{LPi}$, whether a time synchronization subprocess corresponding to the sub-time offset $\Delta_i$ meets a preset adjustment condition

No

S1910

The mobile phone 100 uses the sub-time offset $\Delta_i$ as an adjusted sub-time offset $\Delta_i'$

Yes  S1911

The mobile phone 100 adjusts the sub-time offset $\Delta_i$ according to preset adjustment logic, to obtain an adjusted sub-time offset $\Delta_i'$

S1912

The mobile phone 100 uses the adjusted sub-time offset $\Delta_i'$ as an adjusted sub-time offset $\Delta_j$ corresponding to a Bluetooth based time synchronization process

FIG. 19B

Antenna 1    Mobile phone 100    Antenna 2

| Mobile communication module 2G/3G/4G/5G [150] | Wireless communication module BT/WLAN/GNSS/NFC/IR/FM [160] |

Speaker [170A]
Receiver [170B]
Microphone [170C]
Headset jack [170D]

Audio module [170]

Display screens 1 to N [194]

Cameras 1 to N [193]

Indicator [192]

Motor [191]

Button [190]

Internal memory [121]

SIM card interfaces 1 to N [195]

External memory interface [120]

Processor [110]

Sensor module [180]

Pressure sensor [180A]

Gyro sensor [180B]

Barometric pressure sensor [180C]

Magnetic sensor [180D]

Acceleration sensor [180E]

Distance sensor [180F]

Optical proximity sensor [180G]

Fingerprint sensor [180H]

Temperature sensor [180J]

Touch sensor [180K]

Ambient light sensor [180L]

Bone conduction sensor [180M]

USB interface [130]

Charging management module [140]

Power management module [141]

Battery [142]

Charging input

FIG. 20

300

```
┌─────────────────────────────┐
│     System memory 302       │
│  ┌───────────────────────┐  │
│  │   Instructions 307    │  │
│  └───────────────────────┘  │
└─────────────────────────────┘
```

```
┌──────────────┐      ┌──────────────┐      ┌─────────────────────────┐
│  Processor   │◄────►│ System control│◄────►│  Non-volatile memory    │
│    301       │      │  logic 306    │      │         303             │
└──────────────┘      └──────────────┘      │  ┌───────────────────┐  │
                                            │  │ Instructions 307  │  │
                                            │  └───────────────────┘  │
                                            └─────────────────────────┘
```

```
┌──────────────────┐      ┌──────────────────┐
│ Input/Output (I/O)│      │  Communication   │
│   device 305     │      │  interface 304   │
└──────────────────┘      └──────────────────┘
```

FIG. 21

| Application layer | Camera | Calendar | Map | WLAN | Music | Messaging |
|---|---|---|---|---|---|---|
| | Gallery | Call | Navigation | Bluetooth | Video | ... |

| Application framework layer | Window manager | Content provider | Phone manager | Resource manager |
|---|---|---|---|---|
| | Notification manager | View system | ... | |

| System library | Surface manager | Three-dimensional graphics processing library | Android runtime (Android runtime) |
|---|---|---|---|
| | Two-dimensional graphics engine | Media library | ... |

| Kernel layer | Display driver | Camera driver | |
|---|---|---|---|
| | Audio driver | Sensor driver | ... |

FIG. 22

## INTERNATIONAL SEARCH REPORT

| International application No. |
| --- |
| **PCT/CN2023/099999** |

### A. CLASSIFICATION OF SUBJECT MATTER

H04W56/00(2009.01)i

According to International Patent Classification (IPC) or to both national classification and IPC

### B. FIELDS SEARCHED

Minimum documentation searched (classification system followed by classification symbols)

IPC:H04W56/-

Documentation searched other than minimum documentation to the extent that such documents are included in the fields searched

Electronic data base consulted during the international search (name of data base and, where practicable, search terms used)

CNTXT, ENTXTC, CNKI, 万方 BAIDU, 百度学术 BAIDU SCHOLAR: 偏差, 调整, 对时, 对准, 多, 多次, 多个, 多轮, 多组, 反复, 重复, 飞行时间, 分组, 过程, 衡量, 计算, 检校, 距离, 距离测量, 蓝芽, 蓝牙, 时间, 偏移, 同步; DWPI, CNABS, ENTXT, IEEE, 3GPP: BLE, blueteeth, bluetooth, multiple, ranging, stadiometry, time, ToF, uwb, synchroniz+, range finding, synchronis+, adjustment+, CALCULAT+, mult+, time offset?, Time of Flight, ALIGN+

### C. DOCUMENTS CONSIDERED TO BE RELEVANT

| Category* | Citation of document, with indication, where appropriate, of the relevant passages | Relevant to claim No. |
| --- | --- | --- |
| A | CN 108474834 A (ALCATEL-LUCENT USA INC.) 31 August 2018 (2018-08-31) claims 1 and 8, and description, paragraphs 41 and 68-91 | 1-22 |
| A | US 2004178947 A1 (RICHLEY, E. A. et al.) 16 September 2004 (2004-09-16) entire document | 1-22 |
| A | US 2006098749 A1 (SUNG, S. H. et al.) 11 May 2006 (2006-05-11) entire document | 1-22 |
| A | US 2007200759 A1 (BATENI, H. et al.) 30 August 2007 (2007-08-30) entire document | 1-22 |
| A | US 2017295550 A1 (INTEL IP CORP. et al.) 12 October 2017 (2017-10-12) entire document | 1-22 |
| A | CN 108028824 A (HUAWEI TECHNOLOGIES CO., LTD.) 11 May 2018 (2018-05-11) entire document | 1-22 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **30 August 2023** | **20 September 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

<div align="center">

**INTERNATIONAL SEARCH REPORT**
**Information on patent family members**

</div>

International application No.

**PCT/CN2023/099999**

| Patent document cited in search report | | | Publication date (day/month/year) | Patent family member(s) | | | Publication date (day/month/year) |
|---|---|---|---|---|---|---|---|
| CN | 108474834 | A | 31 August 2018 | EP | 3400455 | A1 | 14 November 2018 |
| | | | | WO | 2017120366 | A1 | 13 July 2017 |
| | | | | US | 2017195109 | A1 | 06 July 2017 |
| | | | | US | 9954669 | B2 | 24 April 2018 |
| US | 2004178947 | A1 | 16 September 2004 | US | 6812884 | B2 | 02 November 2004 |
| US | 2006098749 | A1 | 11 May 2006 | US | 7564909 | B2 | 21 July 2009 |
| | | | | KR | 20060032390 | A | 17 April 2006 |
| | | | | KR | 100715913 | B1 | 08 May 2007 |
| US | 2007200759 | A1 | 30 August 2007 | US | 7450069 | B2 | 11 November 2008 |
| | | | | WO | 2007101211 | A2 | 07 September 2007 |
| | | | | WO | 2007101211 | A3 | 01 November 2007 |
| | | | | US | 2008258973 | A1 | 23 October 2008 |
| | | | | US | 7710321 | B2 | 04 May 2010 |
| | | | | US | 2010283682 | A1 | 11 November 2010 |
| | | | | US | 7986270 | B2 | 26 July 2011 |
| US | 2017295550 | A1 | 12 October 2017 | US | 10129841 | B2 | 13 November 2018 |
| CN | 108028824 | A | 11 May 2018 | EP | 3402148 | A1 | 14 November 2018 |
| | | | | EP | 3402148 | B1 | 11 March 2020 |
| | | | | EP | 3697051 | A1 | 19 August 2020 |
| | | | | US | 2019007254 | A1 | 03 January 2019 |
| | | | | US | 10742469 | B2 | 11 August 2020 |
| | | | | WO | 2017124379 | A1 | 27 July 2017 |

Form PCT/ISA/210 (patent family annex) (July 2022)

**EP 4 529 303 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210681347